# EUROPEAN PATENT APPLICATION

(11) **EP 3 531 175 A1**
(43) Date of publication of application: **28.08.2019**
(21) Application number: 17863035.6
(22) Date of filing: 18.10.2017
(51) Int. Cl.: G02B 5/26, B32B 7/02, G02B 5/02, G02B 5/08

(54) **TRANSPARENT HEAT-SHIELDING HEAT-INSULATING MEMBER**

(30) Priority: 18.10.2016 JP 2016204093
(71) Applicant: Maxell Holdings, Ltd., Otokuni-gun, Kyoto 618-8525 (JP)
(72) Inventor: MIYATA Teruhisa, Kyoto 618-8525 (JP); MITSUMOTO, Yoshimasa, Kyoto 618-8525 (JP)
(74) Representative: Diehl & Partner GbR
(86) International application number: PCT/JP2017/037736
(87) International publication number: WO 2018/074527

(57) **Abstract**

Provided is a transparent heat-shielding/heat-insulating member including a transparent base material, an infrared reflective layer, a protective layer, and a light diffusing layer. The transparent heat-shielding/heat-insulating member includes the infrared reflective layer and the protective layer in this order from the transparent base material side. The light diffusing layer is formed on a surface opposite to a surface of the transparent base material on which the infrared reflective layer is formed, or between the transparent base material and the infrared reflective layer. The infrared reflective layer includes at least a metal layer and a metal suboxide layer made of partially oxidized metal. The protective layer has a total thickness of 200 nm to 980 nm and includes at least a high refractive index layer and a low refractive index layer in this order from the infrared reflective layer side. The light diffusing layer includes light diffusing particles and a transparent resin for holding the light diffusing particles. The transparent heat-shielding/heat-insulating member has a visible light reflectance of 12% or more and 30% or less, a haze value of 5% or more and 35% or less, a shading coefficient of 0.69 or less, a normal emissivity of 0.22 or less.

## Description

### Technical Field

The present invention relates to a transparent heat-shielding/heat-insulating member having a transparent screen function that can be used as a solar control transparent window film for year-round energy saving having excellent heat-shielding properties for summer and excellent heat-insulating properties for winter, and as a transparent screen for digital signage enabling an image projected onto the screen by a projector to be seen as a reflected image from the projector side and as a transmitted image from the opposite side of the projector across the screen, or in other words, enables the image to be clearly viewed from both sides by viewers, as well as favorable background transparency to be achieved, and that further has excellent scratch resistance and corrosion resistance as well as an excellent appearance obtained by suppressing an iridescent phenomenon and a reflected color variation depending on a viewing angle.

### Background Art

From the viewpoint of preventing global warming and saving energy, heat rays (infrared rays) from sunlight entering through the windows of buildings, display windows, the windows of vehicles, and the like are blocked, and the internal temperature is reduced (Patent Documents 1 and 2). In addition, recently, from the viewpoint of saving energy, heat-shielding/heat-insulating members for year-round energy saving having not only heat shielding properties that allow heat rays causing an increase in temperature in summer to be blocked, but also heat-insulating properties that allow the escape of heat produced by heating from the inside of the room in winter to be suppressed so as to reduce the heating load have been proposed, and are increasingly introduced into the market (Patent Documents 3 and 4).

On the other hand, attention has been focused on so-called "digital signage" used as a medium for providing advertisements, guidance and information, instead of conventional signboards, posters and large display screens, in particular, in glass-walled commercial establishments, and display windows of convenience stores, department stores, and shops such as clothes and automobile shops by attaching a transparent screen onto a window or a display window so as to allow the window itself to function as a large screen, and projecting and displaying various content images such as advertisements, merchandise information and other information by using a projector from the inside while the transparent viewability is maintained at a level at which the interior state and goods can be viewed from the outside, because the digital signage has a very high eye-catching effect for people who are outside, is easily adapted to changes in the content, and is convenient.

Likewise, regarding automobiles, attention has been focused on a head-up display (HUD) apparatus that projects and displays navigation information from a small-sized projector by using a transparent screen or the like attached to a portion of the surface of the windshield, a transparent screen layer processed and arranged on the surface of or inside glass, a transparent or semi-transparent beam splitter, called a combiner, provided near the rearview mirror or near the driver's sight lines, or the like, or that projects and displays navigation information as a virtual image through the windshield, so as to allow the driver to see the navigation information without significantly moving his/her viewing point (for example, Patent Documents 5 to 9).

Furthermore, recently, it is taken for granted that a transparent screen for window display is required to have a high viewability that enables a content image projected by a projector to be viewed from a wide range of angles so as to maximize the digital signage function. In addition thereto, opportunities are gradually increasing not only for a content image to be viewed from outside of the window to which the transparent screen has been attached (from the opposite side of the projector across the screen) as a transmitted image, but also for the content image projected onto the transparent screen to be viewed from inside of the window (from the projector side with respect to the screen) as a reflected image, and therefore there is an increasing need for a transmissive screen having excellent viewability from the inside and outside of the window, or in other words, excellent viewability from both sides of the screen.

However, commercially available transmissive transparent screens have high forward light scattering properties and thus can provide a clear transmitted image when viewed from the opposite side of the projector across the screen, but the backward light scattering properties are not that high, and thus although it is possible to view the reflected image from the projector side, the image has low brightness (luminance) and is slightly blurred. Accordingly, it cannot be said that the image clarity is sufficient.

As described above, despite the fact that a large number of windows present in the surrounding spaces used in every-day life are required to have a heat-insulating function for winter as well as have a heat-shielding function for summer as mentioned above from the viewpoint of year-round energy saving and to have a transparent screen function that achieves excellent viewability from both sides of the screen, or in other words, allows a transmitted image and a reflected image to be clearly viewed, surprisingly, members to which all of these functions are imparted have not been found as far as the inventors of the present invention know.

Although a heat-shielding/heat-insulating function can be imparted to a window by attaching the heat-shielding/heat-insulating members disclosed in Patent Documents 3 and 4 to the window itself, this does not mean that the appearance or scratch resistance will be satisfactory. In addition, a transparent screen function that allows content projected by a projector to be displayed is not imparted, and designs that give consideration thereto are not disclosed. Accordingly, the heat-shielding /heat-insulating members disclosed in Patent Documents 3 and 4 hardly function as a transparent screen for digital signage.

Specifically, Patent Document 3 discloses a transparent heat-shielding /heat-insulating member having a configuration obtained by laminating: an infrared reflective layer constituted by a conductive stacked film including a metal oxide layer, a metal layer, and a metal oxide layer in this order; a primer layer; and a protective layer, in the stated order from a transparent base material side. The stacked film disclosed in Patent Document 3 is an infrared reflective stacked film, and has a heat-insulating function that allows infrared rays to be reflected toward the inside of a room, and excellent scratch resistance. However, normally, a heat ray reflective layer has a relatively high reflectance in a visible light wavelength range (380 to 780 nm), and therefore, when a hard coating layer is formed on the heat ray reflective layer through coating, a glare phenomenon called "iridescent phenomenon", which occurs due to multiple-reflection interference caused by interfacial reflection at the hard coating layer and interfacial reflection at the heat ray reflective layer, is likely to be noticeable even in a case where the hard coating layer has a slight variation in the thickness, which may pose an appearance problem when the transparent heat-shielding/heat-insulating member disclosed in Patent Document 3 is attached to a window and used thereon.

Furthermore, when the thickness of the hard coating layer is reduced to several hundred nanometers, which corresponds to the visible light wavelength range (380 to 780 nm), in order to suppress the absorption of infrared rays to further enhance the heat-insulating function, a variation in the overall reflected color due to a change in the optical path length when viewed from a different angle increases, which poses an appearance problem when the transparent heat-shielding/heat-insulating member disclosed in Patent Document 3 is attached to a window and used thereon. In addition, at least an element for sufficiently scattering light is not included in the constituent members, and other designs that give consideration to transparent screens are not disclosed. Accordingly, the transparent heat-shielding/heat-insulating member disclosed in Patent Document 3 hardly functions as a transparent screen for digital signage.

Patent Document 4 discloses an infrared reflective film having a configuration including: an infrared reflective layer including a first metal oxide layer, a metal layer, and a second metal oxide layer in this order; and a transparent protective layer with a thickness of 30 to 150 nm constituted by an organic layer, in the stated order on a transparent film base material. The infrared reflective film disclosed in Patent Document 4 is of an infrared reflective type, and has a heat-insulating function that allows infrared rays to be reflected toward the inside of a room, and an excellent appearance. However, when the thickness of the transparent protective layer is excessively reduced to 30 to 150 nm, which is smaller than the visible light wavelength range, in order to suppress the above-described iridescent phenomenon observed in the appearance, the scratch resistance tends to decrease when a piece of cloth is strongly rubbed against the infrared reflective film. Therefore, the surface of the film may be damaged during maintenance such as cleaning of the installed film, and problems caused by the damage such as poor appearance, corrosion of the metal layer, and the like may arise. In addition, at least an element for sufficiently scattering light is not included in the constituent members, and other designs that give consideration to transparent screens are not disclosed. Accordingly, the infrared reflective film disclosed in Patent Document 4 hardly functions as a transparent screen for digital signage.

Regarding an infrared reflective heat-shielding film including an infrared reflective layer constituted by a laminate of a metal layer and a metal oxide layer as disclosed in Patent Documents 3 and 4, the metal layer is normally made of a low refractive index material such as silver that has an infrared reflective function and absorbs a relatively small amount of visible light, and the metal oxide layer is normally made of a high refractive index material with a refractive index of 1.7 or more that controls the reflectance at each wavelength in the visible light region to increase the visible light transmittance while maintaining the infrared reflective function of the metal layer, and has a protective function of suppressing the migration of metal in the metal layer.

In an infrared reflective layer constituted by the above-mentioned laminate of a metal layer and a metal oxide layer, silver, which has an excellent infrared reflective function and absorbs a relatively small amount of visible light, is often used in the metal layer, but it is known that silver is likely to corrode due to the influence of moisture in the air and the like. Accordingly, as mentioned above, the metal oxide layer is stacked on the metal layer for the purpose of controlling the reflectance at each wavelength in the visible light region to increase the transmittance in the visible light region while maintaining the infrared reflective function of the metal layer, and suppressing the migration of metal in the metal layer. Materials with a high refractive index are normally suitable for the metal oxide layer from the viewpoint of transparency in the visible light region and reflective performance in the infrared region, and materials such as indium tin oxide (ITO) are used. As described above, laminating the metal oxide layer on the metal layer makes it possible to suppress corrosion of the metal layer to a certain degree. However, for example, it cannot be said that ITO has sufficiently high chemical stability, and therefore, corrosion of the silver layer and the like due to the influence of moisture in the air cannot be sufficiently suppressed depending on the long-term usage environment, which may result in corrosion of the silver layer. Accordingly, there is a concern that the transparency will decrease and the infrared reflective function will be impaired due to a change of color.

Furthermore, as described in Patent Document 3, it is known that a metal corrosion suppressing effect can be obtained by forming a thin barrier layer called "partial metal oxide layer" or "metal suboxide layer" made of partially oxidized metal between a thin metal film and a thin metal oxide film that serve as the heat ray reflective layer in order to suppress corrosion of the thin metal film.

When an ultraviolet (UV) curable hard coating layer made of an acrylic resin with a refractive index of around 1.5, which is usually used as a protective layer for an infrared reflective layer, is formed on the infrared reflective layer constituted by a stack of a metal layer and a metal oxide layer, for example, multiple-reflective interference occurs at each interface due to the difference in refractive index between each layer of the infrared reflective layer and the hard coating layer and the thickness of each layer. As a result, the reflectance at each wavelength of visible light incident on the infrared reflective film varies significantly. That is, when a visible light reflection spectrum of the infrared reflective film is obtained, a reflectance curve having a so-called "ripple", which is a shape with significant fluctuations of multiple peaks (maximum reflectance values) and multiple valleys (minimum reflectance values), depending on the thickness of the protective layer is observed.

Normally, a protective layer, such as an ultraviolet (UV) curable hard coating layer made of an acrylic resin, is formed through application using a wet coating method, and it is practically difficult to uniformly coat the entire surface of a base material with the protective layer without any variation in the thickness of the layer (thickness variation). It is therefore not possible to completely eliminate thickness variation caused by the influence of non-uniform drying, non-uniform application, the surface condition of the base material, or the like. The thickness variation of the protective layer appears as deviations of the wavelengths having a shape including peaks and valleys in the visible light reflection spectrum of the infrared reflective film, and causes the generation of an iridescent pattern especially in the case where the thickness of the protective layer is reduced to several hundred nanometers.

On the other hand, when the thickness of the protective layer is increased to a significantly large thickness of several micrometers, for example, the interval between peaks and valleys decreases in the visible light reflection spectrum of the infrared reflective film, and even if there is some variation in the thickness of the protective layer, it is difficult to distinctively recognize the reflected color at a specific wavelength with the human eye. Therefore, it is almost impossible to perceive an iridescent pattern. Accordingly, the appearance problem is unlikely to arise. However, the ultraviolet (UV) hard coating agent constituted by an acrylic resin used for the protective layer contains, in its molecular backbone, a large number of C=O groups, C-O groups, and aromatic groups. For this reason, when the thickness of the protective layer is increased, the UV hard coating agent is likely to absorb far-infrared rays at wavelengths of 5.5 to 25.2 µm, and the heat-insulating properties of the infrared reflective film tend to be impaired.

Accordingly, in order to make the infrared reflective film to have sufficient heat-insulating properties (normal emissivity value is 0.22 or less, and a heat transmission coefficient value is 4.2 W/m²·K or less), it is preferable to reduce the thickness of the protective layer to about 1.0 µm or less so as to suppress the absorption of far-infrared rays at wavelengths of 5.5 to 25.2 µm as much as possible. However, as explained in connection with Patent Document 3 above, when the thickness of the protective layer is reduced to several hundred nanometers, which corresponds to the visible light wavelength range, the interval between peaks and valleys increases in the visible light reflection spectrum of the infrared reflective film, and the reflected color at a specific wavelength can be recognized with the human eye. Accordingly, even if there is a slight variation in the thickness of the protective layer, it is recognized as the iridescent phenomenon. In addition, the reflected color variation due to a change in the optical path length when viewed from a different angle is also readily perceived, which may pose an appearance problem when it is attached to a window and used thereon.

Normally, regarding the color of a film to be attached to a window and used thereon, there is a tendency to avoid using red-based colors and yellow-based colors, which invoke heat, and green-based colors, which impair a design, and there is a tendency to favorably use blue-based colors, which invoke coolness and do not significantly impair a design. However, when the protective layer has a thickness of several hundred nanometers, which corresponds to the visible light wavelength range, red-based or green-based reflected color may be particularly noticeable in the iridescent pattern or all of the reflected colors when viewed from a different angle, and the appearance may deteriorate.

Furthermore, as explained in connection with Patent Document 4 above, when the thickness of the protective layer is excessively reduced to 30 to 150 nm, which is smaller than the visible light wavelength range, the interval between peaks and valleys further increases and substantially one valley is observed in the visible light reflection spectrum of the infrared reflective film, and a uniform color is observed as an interference reflected color. Thus, the appearance problem is unlikely to arise. However, the scratch resistance tends to decrease when a piece of cloth is strongly rubbed against the infrared reflective film. Therefore, the surface of the film may be damaged during maintenance such as cleaning of the installed film, and there is still a concern that problems caused by the damage such as poor appearance and corrosion of the metal layer, and the like may arise.

On the other hand, a transparent screen function that allows content projected by a projector to be displayed on a window itself is imparted to the window by attaching the transparent screen members disclosed in Patent Documents 5 to 8. However, the infrared reflective function is not imparted, and designs that give consideration thereto are not disclosed. Accordingly, the transparent screen members disclosed in Patent Documents 5 to 8 hardly function as a transparent heat-shielding /heat-insulating member.

Specifically, Patent Document 5 discloses a transmissive screen having a configuration in which a glass sheet or PET (polyethylene terephthalate) film is coated with a resin such as polyvinyl butyral resin, polystyrene resin, polyester resin, polyurethane adhesive or ultraviolet curable acrylate resin in which light diffusing particles such as acrylic resin particles, silicone resin particles or polystyrene resin particles are dispersed. However, none of the materials reflect infrared rays, and designs that give consideration thereto are not disclosed. Accordingly, the transmissive screen disclosed in Patent Document 5 hardly functions as a transparent heat-shielding/heat-insulating member.

Patent Document 6 discloses a transmissive screen having a configuration in which a PET film is coated with a hydrophilic resin such as a completely or partially saponified polyvinyl alcohol or a cationically modified polyvinyl alcohol in which light diffusing particles made of amorphous synthetic silica, alumina or alumina hydrate are dispersed, for example. However, none of the materials reflect infrared rays, and designs that give consideration thereto are not disclosed. Accordingly, the transmissive screen disclosed in Patent Document 6 hardly functions as a transparent heat-shielding/heat-insulating member.

Patent Document 7 discloses a projection screen having a configuration in which a PET film coated with a polarization-selective reflective layer made of a cholesteric liquid crystal resin having a selective reflection center wavelength in the visible light region and a PET film in which a transmissive volume hologram has been recorded and fixed through the application of a hologram photosensitive material made of a photo polymer or the like and exposure to light are attached to both surfaces of a glass sheet by using a pressure-sensitive adhesive. However, as long as the scope of the disclosure of Patent Document 7 is considered, none of the materials reflect infrared rays, and designs that give consideration thereto are not disclosed. Accordingly, the projection screen disclosed in Patent Document 7 hardly functions as a transparent heat-shielding/heat-insulating member.

Patent Document 8 discloses a transmissive screen having a configuration in which a glass sheet is coated with a polyvinyl acetal resin in which nanodiamond particles having a very high refractive index are dispersed as light diffusing particles, or glass sheets and a polyvinyl acetal resin in which nanodiamond particles having a very high refractive index are dispersed as light diffusing particles are formed into a laminated glass. However, none of the materials reflect infrared rays, and designs that give consideration thereto are not disclosed. Accordingly, the transmissive screen disclosed in Patent Document 8 hardly functions as a transparent heat-shielding/heat-insulating member.

Patent Document 9 discloses a transmissive screen having a configuration in which a light diffusing layer portion is provided on a see-through heat ray reflective layer portion obtained by forming a thin metal film layer on a thermoplastic resin film. However, although the transmissive screen disclosed in Patent Document 9 has a heat-shielding function for summer and has a transmissive projection screen function, the problem of imparting a heat-insulating function for winter, the problem of the iridescent phenomenon caused by the impartment of the heat-insulating function, an appearance problem such as the reflected color variation depending on a viewing angle, a durability problem, a corrosion resistance problem, and problems with image clarity and the like of a reflected image viewed from the projector side are not recognized.

As described above, there is no conventional technology capable of providing a transparent heat-shielding/heat-insulating member having a transparent screen function that can be used as a solar control transparent window film for year-round energy saving having excellent heat-shielding properties for summer and excellent heat-insulating properties for winter, and as a transparent screen for digital signage enabling a projected image viewed from both sides of the screen, particularly a reflected image viewed from the projector side, to have excellent brightness (luminance) and image clarity (less blurred), as well as favorable background transparency to be achieved, and that further has excellent scratch resistance and corrosion resistance as well as an excellent appearance obtained by suppressing an iridescent phenomenon and a reflected color variation depending on a viewing angle.

### Prior Art Documents

### Patent Documents

Patent Document 1: Japanese Patent No. 4190657
Patent Document 2: JP 2014-170171A
Patent Document 3: JP 2014-141015A
Patent Document 4: JP 2014-167617A
Patent Document 5: Japanese Patent No. 3993980
Patent Document 6: JP 2013-210454A
Patent Document 7: Japanese Patent No. 4822104
Patent Document 8: Japanese Patent No. 5214577
Patent Document 9: JP 2016-9149A

### Disclosure of Invention

### Problem to be Solved by the Invention

The present invention provides a transparent heat-shielding/heat-insulating member having a transparent screen function that can be used as a solar control transparent window film for year-round energy saving having excellent heat-shielding properties for summer and excellent heat-insulating properties for winter, and as a transparent screen for digital signage enabling a projected image viewed from both sides of the screen, particularly a reflected image viewed from the projector side, to have excellent brightness (luminance) and image clarity (less blurred), as well as favorable background transparency to be achieved, and that further has excellent scratch resistance and corrosion resistance as well as an excellent appearance obtained by suppressing an iridescent phenomenon and a reflected color variation depending on a viewing angle.

### Means for Solving Problem

As a result of intensive studies to solve the aforementioned problems, first, the inventors of the present invention found that (1) in order to form a transparent heat-shielding/heat-insulating member that can be used as a solar control transparent window film having excellent heat-shielding properties, excellent scratch resistance, excellent corrosion resistance, and an excellent appearance obtained by suppressing a reflected color variation depending on a viewing angle, it is preferable that a transparent heat-shielding/heat-insulating member is configured such that an infrared reflective layer with excellent corrosion resistance including at least a metal layer and a metal suboxide layer made of partially oxidized metal is formed on a transparent base material, and a protective layer with a total thickness of 200 nm to 980 nm including at least a high refractive index layer and a low refractive index layer is provided, on the infrared reflective layer, in the stated order from the infrared reflective layer side.

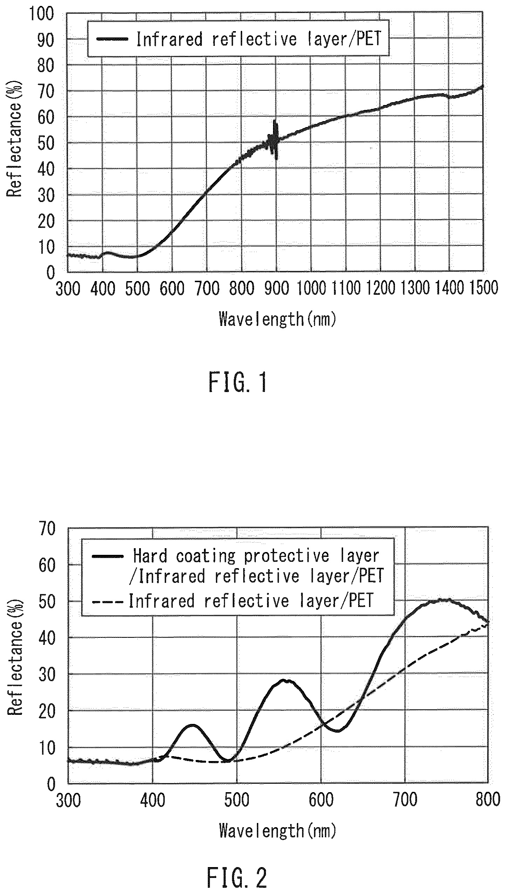

That is, normally, the reflectance of the infrared reflective layer in the near-infrared region needs to be increased to cause the infrared reflective layer to exhibit a heat-shielding function (shading coefficient value is 0.69 or less, for example), and it is inevitable that the visible light reflectance tends to increase monotonously in a wavelength range between 500 nm to 780 nm. FIG. 1 shows an example of a reflection spectrum from the visible light region to the near-infrared region obtained when an infrared reflective film in which only an infrared reflective layer is formed on one surface of a polyethylene terephthalate (PET) film is attached to a glass sheet using an ultraviolet-blocking transparent pressure-sensitive adhesive with the PET surface being in contact with the glass sheet, and light incident from the glass sheet side is measured.

FIG. 2 shows, with a solid line, an example of a reflection spectrum in a visible light region obtained when a protective layer with a thickness of 680 nm made of an acrylic ultraviolet (UV) curable hard coating resin is formed on the infrared reflective layer in FIG. 1, the infrared reflective film is attached to a glass sheet using an ultraviolet-blocking transparent pressure-sensitive adhesive with the PET surface being in contact with the glass sheet, and light incident from the glass sheet side is measured. In the diagram, the reflection spectrum in the visible light region shown in FIG. 1 is shown by a dotted line.

As is clear from FIG. 2, in the visible light reflection spectrum shown by a dotted line obtained in the case where the above-mentioned protective layer is not formed and only the infrared reflective layer is formed, the visible light reflectance increases monotonously at wavelengths between 500 nm to 780 nm as the wavelength increases, but in the visible light reflection spectrum shown by a solid line obtained in the case where the protective layer made of a normal acrylic ultraviolet (UV) curable hard coating resin is provided on the infrared reflective layer, the vertical fluctuation of the visible light reflectance tends to increase as the wavelength increases. In this case, depending on the variation in the thickness of the protective layer, the iridescent pattern is generated, or the reflected color variation depending on the viewing angle increases.

As described above, the reason for the phenomenon in which the reflected color variation depending on a viewing angle increases is that in a case where the viewing angle is oblique to the film, the wavelength of the reflected light shifts to a short wavelength side due to the influence of the difference in the optical path length of light reflected at each interface compared with a case where the viewing angle is orthogonal to the film. Therefore, the inventors of the present invention thought that if the steep variations between the peaks and the valleys in the reflection spectrum in the wavelength range (500 nm to 570 nm) of green-based colors, which have high relative visibility and impair a design, and in the wavelength range (620 nm to 780 nm) of red-based colors, which invoke heat, are minimized, and the reflectance change particularly in the wavelength range of 500 nm to 780 nm, which corresponds to the green-based colors to the red-based colors, is thus made smoother, the iridescent phenomenon or the reflected color variation depending on a viewing angle can be suppressed even when the thickness of the protective layer somewhat varies, and arrived at the above-mentioned conclusion (1) that it is preferable to provide, on the infrared reflective layer formed on the transparent base material, the protective layer including at least the high refractive index layer and the low refractive index layer in this order from the infrared reflective layer side and to set the total thickness of the protective layer to be in a range of 200 nm to 980 nm from the viewpoint of achieving both scratch resistance and heat-insulating properties.

In addition, the inventors of the present invention confirmed that when a layer having a laminate configuration in which at least a metal suboxide layer made of partially oxidized metal is formed on a metal layer that reflects infrared rays is applied to the infrared reflective layer, the corrosion resistance of the transparent heat-shielding/heat-insulating member of the present invention is improved.

Furthermore, the inventors of the present invention found that (2) in order to use the transparent heat-shielding/heat-insulating member as a transparent screen for digital signage enabling an image projected by a projector to have excellent brightness (luminance) and image clarity (less blurred) when viewed from both sides of the screen, particularly a reflected image to have excellent brightness (luminance) and image clarity (less blurred) when viewed from the projector side, as well as favorable background transparency to be achieved, it is preferable that the transparent heat-shielding/heat-insulating member has the above-described configuration as well as a configuration in which a light diffusing layer obtained by dispersing light diffusing particles in a transparent resin is provided on the transparent base material on a side opposite to the side on which the infrared reflective layer is formed, or between the transparent base material and the infrared reflective layer, and is made to have a visible light reflectance of 12% or more and 30% or less and a haze value of 5% or more and 35% or less.

That is, normally, a transmissive transparent screen is often designed to have high forward light scattering properties and its backward scattering properties are not that high, and although it is possible to view the reflected image from the projector side, the image has low brightness (luminance) and is slightly blurred. Accordingly, it cannot be said that the image clarity is sufficient. Therefore, first, the inventors of the present invention thought that when visible light is properly reflected using the infrared reflective layer of the above-mentioned transparent heat-shielding /heat-insulating member, it is possible to properly reflect the projected light from a projector and make up for the low backward light scattering properties of the light diffusing layer, as a result of which the brightness (luminance) and the image clarity (less blurred) of the reflected image can be made better without significantly reducing the visible light transmittance while maintaining the background viewability.

Next, the inventors of the present invention thought that when a light diffusing layer obtained by dispersing light diffusing particles in a transparent resin is provided on the transparent base material on a side opposite to the side on which the infrared reflective layer is formed, or between the transparent base material and the infrared reflective layer, the infrared reflective layer is not prevented from reflecting far-infrared rays toward the inside of a room, thus making it possible to maintain the heat-insulating properties without increasing the normal emissivity of the transparent heat-shielding/heat-insulating member.

The inventors of the present invention arrived at the above-mentioned conclusion (2) based on the thought as described above.

As described above, the inventors of the present invention found that a transparent member configured based on the combination of the conclusions (1) and (2) can be used as a solar control transparent window film having excellent heat-shielding properties for summer (shading coefficient value is 0.69 or less), and excellent heat-insulating properties for winter (normal emissivity value of 0.22 or less), and as a transparent screen for digital signage enabling a projected image viewed from both sides of the screen, particularly a reflected image viewed from the projector side, to have excellent brightness (luminance) and image clarity (less blurred), as well as favorable background transparency to be achieved, and that further has excellent scratch resistance and corrosion resistance as well as an excellent appearance obtained by suppressing the iridescent phenomenon and the reflected color variation depending on a viewing angle, and the present invention was thus achieved.

The present invention is a transparent heat-shielding/heat-insulating member including:
a transparent base material;
an infrared reflective layer;
a protective layer; and
a light diffusing layer,
wherein the transparent heat-shielding/heat-insulating member includes the infrared reflective layer and the protective layer in this order from the transparent base material side,
the light diffusing layer is formed on a surface opposite to a surface of the transparent base material on which the infrared reflective layer is formed, or between the transparent base material and the infrared reflective layer,
the infrared reflective layer includes at least a metal layer and a metal suboxide layer made of partially oxidized metal,
the protective layer has a total thickness of 200 nm to 980 nm and includes at least a high refractive index layer and a low refractive index layer in this order from the infrared reflective layer side,
the light diffusing layer includes light diffusing particles and a transparent resin for holding the light diffusing particles, and
the transparent heat-shielding/heat-insulating member has:
   a visible light reflectance of 12% or more and 30% or less, the visible light reflectance being measured in accordance with JIS R3106-1998;
   a haze value of 5% or more and 35% or less, the haze value being measured in accordance with JIS K7136-2000;
   a shading coefficient of 0.69 or less, the shading coefficient being measured in accordance with JIS A5759-2008; and
   a normal emissivity of 0.22 or less, the normal emissivity being measured in accordance with JIS R3106-2008.

With the transparent heat-shielding/heat-insulating member, an image projected onto a screen by a projector can be viewed from both sides as a reflected image from the projector side and as a transmitted image from a side opposite to the projector side across the screen.

It is also preferable that the metal suboxide layer made of partially oxidized metal has a thickness of 1 to 8 nm.

It is also preferable that the protective layer includes a medium refractive index layer, a high refractive index layer, and a low refractive index layer in this order from the infrared reflective layer side.

It is also preferable that the protective layer includes an optical adjustment layer, a medium refractive index layer, a high refractive index layer, and a low refractive index layer in this order from the infrared reflective layer side, the optical adjustment layer has a refractive index of 1.60 to 2.00 at a wavelength of 550 nm and has a thickness selected from a range of 30 to 80 nm, the medium refractive index layer has a refractive index of 1.45 to 1.55 at a wavelength of 550 nm and has a thickness selected from a range of 40 to 200 nm, the high refractive index layer has a refractive index of 1.65 to 1.95 at a wavelength of 550 nm and has a thickness selected from a range of 60 to 550 nm, and the low refractive index layer has a refractive index of 1.30 to 1.45 at a wavelength of 550 nm and has a thickness selected from a range of 70 to 150 nm.

It is also preferable that the metal suboxide layer made of partially oxidized metal contains a titanium component.

It is also preferable that a layer of the protective layer that is in contact with the infrared reflective layer contains titanium oxide fine particles.

With the transparent heat-shielding/heat-insulating member, it is also preferable that, in a reflection spectrum measured in accordance with JIS R3106-1998,
a point corresponding to a wavelength of 535 nm on a virtual line a that indicates an average value of a maximum reflectance and a minimum reflectance in a wavelength range of 500 to 570 nm in the reflection spectrum is taken as a point A,
a point corresponding to a wavelength of 700 nm on a virtual line b that indicates an average value of a maximum reflectance and a minimum reflectance in a wavelength range of 620 to 780 nm in the reflection spectrum is taken as a point B,
a reference straight line AB is obtained by extending a straight line passing through the point A and the point B in a wavelength range of 500 to 780 nm,
when reflectance values of the reflection spectrum and the reflectance values of the reference straight line AB in a wavelength range of 500 to 570 nm are compared, and an absolute value of a difference between reflectance values at a wavelength at which a difference between reflectance values is largest is defined as a maximum variation ΔA, a value of the maximum variation ΔA indicated in unit of reflectance percentage is 7% or less, and
when reflectance values of the reflection spectrum and the reflectance values of the reference straight line AB in a wavelength range of 620 to 780 nm are compared, and an absolute value of a difference between reflectance values at a wavelength at which a difference between reflectance values is largest is defined as a maximum variation ΔB, a value of the maximum variation ΔB indicated in unit of reflectance percentage is 9% or less.

It is also preferable that the transparent heat-shielding/heat-insulating member further includes a pressure-sensitive adhesive layer arranged, as an outermost layer, on a side opposite to the surface of the transparent base material on which the infrared reflective layer is formed.

It is also preferable that the light diffusing layer is arranged, as an outermost layer, on a side opposite to the surface of the transparent base material on which the infrared reflective layer is formed, and a pressure-sensitive adhesive is used as the transparent resin contained in the light diffusing layer.

With the transparent heat-shielding/heat-insulating member having such a configuration, the infrared reflective layer including at least the metal layer and the metal suboxide layer made of partially oxidized metal can favorably reflect infrared rays in a range of near-infrared rays to far-infrared rays in sunlight, and favorable heat-shielding/heat-insulating properties are thus obtained. Furthermore, due to the protective layer laminated on the infrared reflective layer, the reflectance variations particularly at the wavelengths in a range of 500 nm to 780 nm, which correspond to green-based colors to red-based colors, in the visible light reflectance spectrum can be significantly reduced to make the reflectance change smoother, and therefore, even when the total thickness of the protective layer is set to be in a range corresponding to the visible light wavelength range (380 nm to 780 nm) in order to achieve both scratch resistance and heat-insulating properties in the protective layer, the iridescent phenomenon and the reflected color variation depending on a viewing angle can be suppressed to an extent that is hardly recognized by the human eye, and an excellent appearance can be thus obtained.

Moreover, due to the infrared reflective layer including at least the metal layer and the metal suboxide layer made of partially oxidized metal, and the protective layer with a total thickness of 200 to 980 nm laminated thereon, favorable scratch resistance and corrosion resistance can be obtained.

Furthermore, a portion of visible light can be properly reflected with a visible light reflectance in a range of 12 to 30% and most of the rest can be transmitted, and therefore, due to the synergy with the light diffusing layer having a predetermined haze value obtained by dispersing light diffusing particles in a transparent resin, favorable visible light diffusion and reflective properties can be obtained, a transmitted image projected by a projector and a reflected image can be viewed clearly, and high heat-insulating properties can be maintained since the infrared reflective layer is hardly prevented from reflecting far-infrared rays toward the inside of a room.

Therefore, when the transparent heat-shielding/heat-insulating member having such a configuration is attached to a transparent substrate such as a windowpane using a transparent pressure-sensitive adhesive or the like and used, it enables favorable background transparency to be achieved, and can be used as a transparent heat-shielding/heat-insulating member, namely solar control transparent film for year-round energy saving, as well as a transparent screen for digital signage that enables a content image projected by a projector to be clearly viewed from both sides. Accordingly, the transparent heat-shielding/heat-insulating member is very useful in a wide variety of situations.

### Effects of the Invention

With the present invention, it is possible to provide a transparent heat-shielding/heat-insulating member having a transparent screen function that can be used as a solar control transparent window film for year-round energy saving having excellent heat-shielding properties for summer and excellent heat-insulating properties for winter, and as a transparent screen for digital signage enabling a projected image viewed from both sides of the screen, particularly a reflected image viewed from the projector side, to have excellent brightness (luminance) and image clarity (less blurred), as well as favorable background transparency to be achieved, and that further has excellent scratch resistance and corrosion resistance as well as an excellent appearance obtained by suppressing an iridescent phenomenon and a reflected color variation depending on a viewing angle.

### Brief Description of Drawings

FIG. 1 shows an example of a reflection spectrum from the visible light region to the near-infrared region obtained when an infrared reflective film in which an infrared reflective layer is formed on a PET film is attached to a glass sheet using an ultraviolet-blocking transparent pressure-sensitive adhesive with the PET surface being in contact with the glass sheet, and light incident from the glass sheet side is measured.
FIG. 2 shows a reflection spectrum in a visible light region obtained when a protective layer with a thickness of 680 nm made of an acrylic ultraviolet (UV) curable hard coating resin is formed on the infrared reflective layer in FIG. 1, and the infrared reflective film is attached to a glass sheet and the measurement is performed in the same manner as in FIG. 1 (a dotted line indicates the reflection spectrum in the visible light region shown in FIG. 1).
FIG. 3 is a schematic cross-sectional view showing an example of an infrared reflective layer portion in a transparent heat-shielding/heat-insulating member having a transparent screen function according to the present invention.
FIG. 4 is a schematic cross-sectional view showing an example of the transparent heat-shielding/heat-insulating member having a transparent screen function according to the present invention.
FIG. 5 is a schematic cross-sectional view showing another example of the transparent heat-shielding/heat-insulating member having a transparent screen function according to the present invention.
FIG. 6 is a schematic cross-sectional view showing yet another example of the transparent heat-shielding/heat-insulating member having a transparent screen function according to the present invention.
FIG. 7 is a schematic cross-sectional view showing yet another example of the transparent heat-shielding/heat-insulating member having a transparent screen function according to the present invention.
FIG. 8 is a schematic cross-sectional view showing yet another example of the transparent heat-shielding/heat-insulating member having a transparent screen function according to the present invention.
FIG. 9 is a schematic cross-sectional view showing an example in which the transparent heat-shielding/heat-insulating member having a transparent screen function according to the present invention is attached to a glass plate.
FIG. 10 is a schematic cross-sectional view showing an example of a conventional transparent heat-shielding/heat-insulating member.
FIG. 11 is a schematic cross-sectional view showing an example of a conventional transparent screen.
FIG. 12 is a diagram describing how to determine a "reference straight line AB", a "maximum variation ΔA" and a "maximum variation ΔB" of the reflectance in a visible light reflection spectrum of the transparent heat-shielding /heat-insulating member having a transparent screen function according to the present invention.
FIG. 13 is a reflection spectrum in a visible light region in Example 1 of the present invention when light incident from the glass surface side is measured.
FIG. 14 is a reflection spectrum in a visible light region in Example 2 of the present invention when light incident from the glass surface side is measured.
FIG. 15 is a reflection spectrum in a visible light region in Example 4 of the present invention when light incident from the glass surface side is measured.
FIG. 16 is a reflection spectrum in a visible light region in Example 6 of the present invention when light incident from the glass surface side is measured.
FIG. 17 is a reflection spectrum in a visible light region in Example 9 of the present invention when light incident from the glass surface side is measured.
FIG. 18 is a reflection spectrum in a visible light region in Comparative Example 4 of the present invention when light incident from the glass surface side is measured.

### Description of the Invention

The present invention is a transparent heat-shielding/heat-insulating member including:
a transparent base material;
an infrared reflective layer;
a protective layer; and
a light diffusing layer,
wherein the transparent heat-shielding/heat-insulating member includes the infrared reflective layer and the protective layer in this order from the transparent base material side,
the light diffusing layer is formed on a surface opposite to a surface of the transparent base material on which the infrared reflective layer is formed, or between the transparent base material and the infrared reflective layer,
the infrared reflective layer includes at least a metal layer and a metal suboxide layer made of partially oxidized metal,
the protective layer has a total thickness of 200 nm to 980 nm and includes at least a high refractive index layer and a low refractive index layer in this order from the infrared reflective layer side,
the light diffusing layer includes light diffusing particles and a transparent resin for holding the light diffusing particles, and
the transparent heat-shielding/heat-insulating member has:
   a visible light reflectance of 12% or more and 30% or less, the visible light reflectance being measured in accordance with JIS R3106-1998;
   a haze value of 5% or more and 35% or less, the haze value being measured in accordance with JIS K7136-2000;
   a shading coefficient of 0.69 or less, the shading coefficient being measured in accordance with JIS A5759-2008; and
   a normal emissivity of 0.22 or less, the normal emissivity being measured in accordance with JIS R3106-2008.

Hereinafter, an example of the configuration of a transparent heat-shielding /heat-insulating member having a transparent screen function according to the present invention will be described with reference to the drawings.

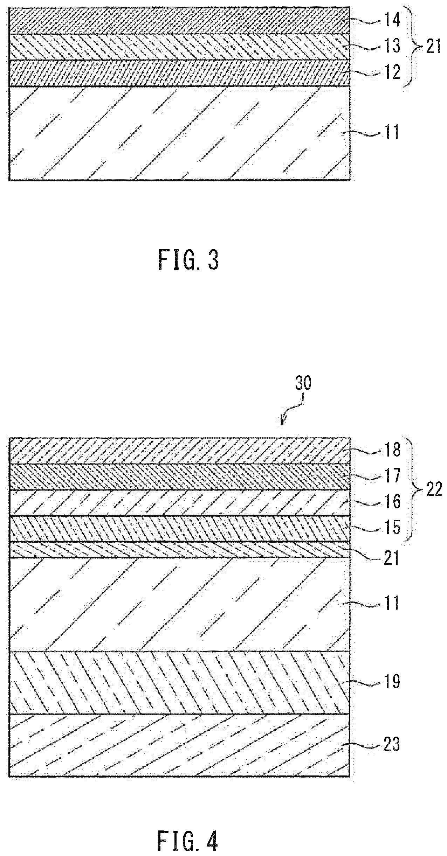

FIG. 3 is a schematic cross-sectional view showing an example of an infrared reflective layer portion in the transparent heat-shielding/heat-insulating member having a transparent screen function according to the present invention. In FIG. 3, an infrared reflective layer 21 is provided on one surface of a transparent base material 11, and the infrared reflective layer 21 is constituted by a laminate having a three-layer structure including a metal suboxide layer 12, a metal layer 13, and a metal suboxide layer 14.

FIG. 4 is a schematic cross-sectional view showing an example of the transparent heat-shielding/heat-insulating member having a transparent screen function according to the present invention. In FIG. 4, a transparent heat-shielding /heat-insulating member 30 has a configuration in which the infrared reflective layer 21 and a protective layer 22 are provided on one surface of the transparent base material 11, and a light diffusing layer 19 and a pressure-sensitive adhesive layer 23 are provided on the other surface of the transparent base material 11. Furthermore, the protective layer 22 is constituted by a laminate having a four-layer structure including an optical adjustment layer 15, a medium refractive index layer 16, a high refractive index layer 17, and a low refractive index layer 18.

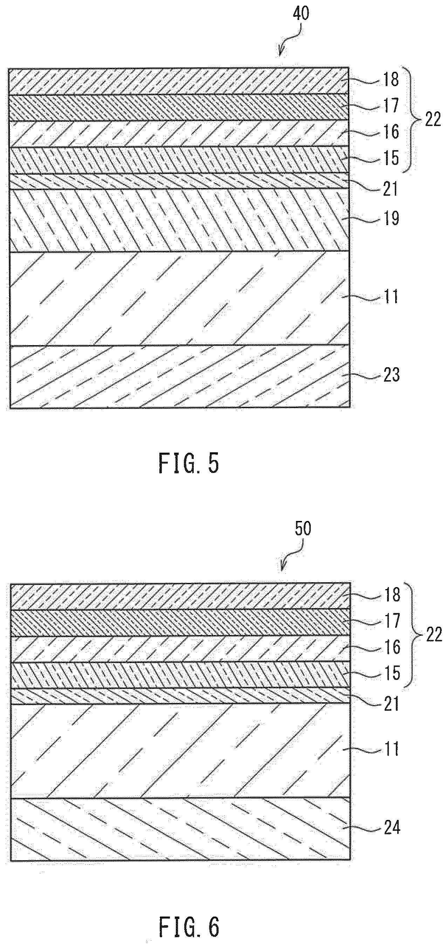

FIG. 5 is a schematic cross-sectional view showing another example of the transparent heat-shielding/heat-insulating member having a transparent screen function according to the present invention. In FIG. 5, a transparent heat-shielding /heat-insulating member 40 having a transparent screen function has the same configuration as that of the transparent heat-shielding/heat-insulating member 30 having a transparent screen function shown in FIG. 4, except that the light diffusing layer 19 shown in FIG. 4 is provided between the transparent base material 11 and the infrared reflective layer 21.

Furthermore, FIG. 6 is a schematic cross-sectional view showing yet another example of the transparent heat-shielding/heat-insulating member having a transparent screen function according to the present invention. In FIG. 6, a transparent heat-shielding/heat-insulating member 50 having a transparent screen function has a configuration in which the light diffusing layer 19 and the pressure-sensitive adhesive layer 23 in FIG. 4 are substituted by a light diffusing pressure-sensitive adhesive layer 24.

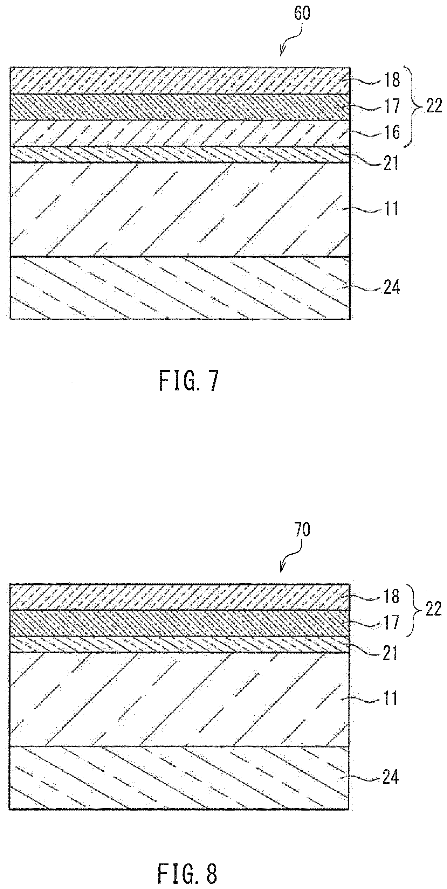

Furthermore, FIG. 7 is a schematic cross-sectional view showing yet another example of the transparent heat-shielding/heat-insulating member having a transparent screen function according to the present invention. In FIG. 7, a transparent heat-shielding/heat-insulating member 60 having a transparent screen function has the same configuration as that of the transparent heat-shielding /heat-insulating member 50 having a transparent screen function shown in FIG. 6, except that the protective layer 22 shown in FIG. 6 has a three-layer structure including the medium refractive index layer 16, the high refractive index layer 17, and the low refractive index layer 18.

Furthermore, FIG. 8 is a schematic cross-sectional view showing yet another example of the transparent heat-shielding/heat-insulating member having a transparent screen function according to the present invention. In FIG. 8, a transparent heat-shielding/heat-insulating member 70 having a transparent screen function has the same configuration as that of the transparent heat-shielding /heat-insulating member 50 having a transparent screen function shown in FIG. 6, except that the protective layer 22 shown in FIG. 6 has a two-layer structure including the high refractive index layer 17 and the low refractive index layer 18.

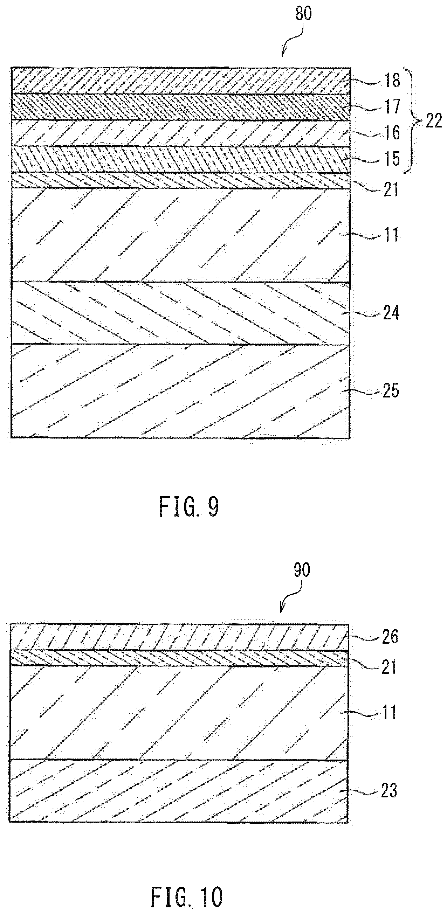

FIG. 9 is a schematic cross-sectional view showing an example in which the transparent heat-shielding/heat-insulating member having a transparent screen function according to the present invention is attached to a glass plate. In FIG. 9, a transparent heat-shielding/heat-insulating member 80 having a transparent screen function has a configuration in which the infrared reflective layer 21 and the protective layer 22 are provided on one surface of the transparent base material 11, and the light diffusing pressure-sensitive adhesive layer 24 and a glass plate 25 are provided on the other surface of the transparent base material 11. Furthermore, the protective layer 22 is constituted by a laminate having a four-layer structure including the optical adjustment layer 15, the medium refractive index layer 16, the high refractive index layer 17, and the low refractive index layer 18.

FIG. 10 is a schematic cross-sectional view showing an example of a conventional transparent heat-shielding/heat-insulating member. In FIG. 10, a transparent heat-shielding/heat-insulating member 90 has a configuration in which the infrared reflective layer 21 and a protective layer 26 are provided on one surface of the transparent base material 11, and the pressure-sensitive adhesive layer 23 is provided on the other surface of the transparent base material 11.

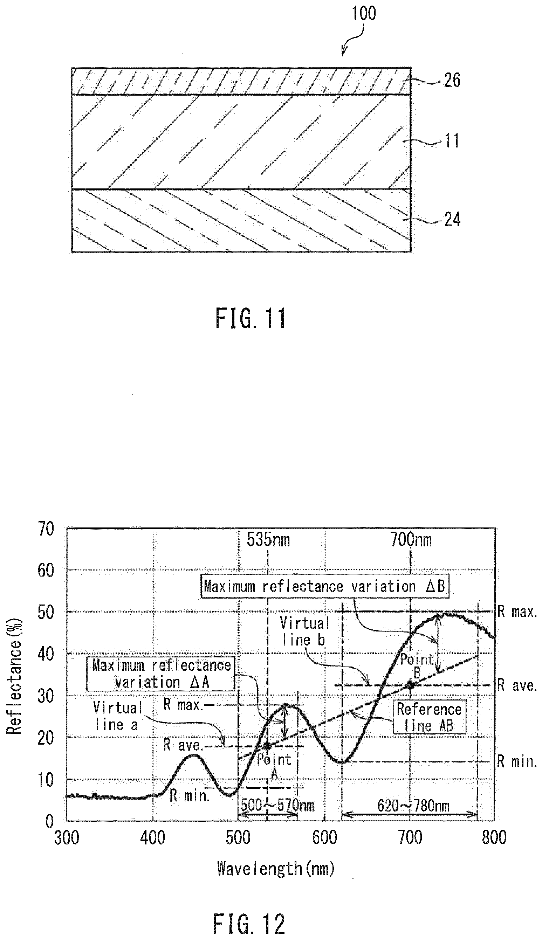

FIG. 11 is a schematic cross-sectional view showing an example of a conventional transmissive transparent screen. In FIG. 11, a transparent screen 100 has a configuration in which the protective layer 26 is provided on one surface of the transparent base material 11, and the light diffusing pressure-sensitive adhesive layer 24 is provided on the other surface of the transparent base material 11.

FIG. 12 is a diagram describing how to determine a "reference straight line AB", a "maximum variation ΔA" and a "maximum variation ΔB" of the reflectance in a visible light reflection spectrum of the transparent heat-shielding/heat-insulating member having a transparent screen function according to the present invention.

First, the reason for focusing on the difference in reflectance in the above-mentioned wavelength region will be described. Regarding human relative visibility, a green-centered wavelength region near 500 to 570 nm is more strongly recognized. Therefore, when a so-called "ripple", which is a fluctuation due to the multiple-reflection interference of light, is large (i.e., the vertical fluctuation of reflectance is large) in a wavelength range of 500 to 570 nm in the visible light reflection spectrum of the above-mentioned transparent heat-shielding/heat-insulating member, the phase of the reflection spectrum varies depending on a slight variation in the film thickness, which significantly affects a reflected color.

In addition, as described above, it is inevitable that the reflection spectrum of an infrared reflective film in which a thin metal film reflects near-infrared rays has a shape in which the reflectance gradually increases from a wavelength in the visible light region to a wavelength in the near-infrared region. Therefore, when an infrared reflective film including a thin metal film is used, a red-based reflected color is emphasized. For this reason, in the same manner as in the case of the green-based color region, when the phase of the reflection spectrum varies depending on a slight variation in the film thickness in a wavelength region around wavelengths of 620 to 780 nm corresponding to red-based colors, the reflected color is also significantly affected.

Normally, regarding the color of the transparent heat-shielding /heat-insulating member to be used for a windowpane, there is a tendency to avoid using red-based colors and yellow-based colors, which invoke heat, and green-based colors, which impair a design, and there is a tendency to favorably use blue-based colors, which invoke coolness and do not significantly impair a design. However, when the protective layer has a thickness of several hundred nanometers, which corresponds to the visible light wavelength range, red-based or green-based reflected color may be particularly noticeable in the iridescent pattern or all of the reflected colors when viewed from a different angle, and the appearance may be deteriorated. Therefore, in order to reduce an influence on the reflected color even when the phase varies depending on a slight variation in the film thickness, it is important to reduce the size of the ripples in the reflection spectrum in the green light region between 500 nm and 570 nm and the red light region between 620 nm and 780 nm, which significantly affect the reflected color, among the wavelengths in the visible light region.

Next, how to determine the above-mentioned "reference straight line AB", "maximum variation ΔA", and "maximum variation ΔB" of the reflectance will be described with reference to FIG. 12. The curve shown in FIG. 12 is an example of the visible light reflection spectrum obtained when the above-mentioned transparent heat-shielding/heat-insulating member having a transparent screen function is attached to a glass plate using an ultraviolet-blocking transparent pressure-sensitive adhesive with a surface of the transparent base material on a side opposite to the surface on which the protective layer is formed being in contact with the glass plate, and light incident from the glass surface side is measured.

First, a virtual line a that extends parallel to the axis indicating the wavelength and indicates the average value (R ave.) of the maximum reflectance (R max.) and the minimum reflectance (R min.) in a wavelength range of 500 nm to 570 nm in the visible light reflection spectrum shown in FIG. 12 is determined, and a point at a wavelength of 535 nm on the virtual line a is taken as a point A. Similarly, a virtual line b that extends parallel to the axis indicating the wavelength and indicates the average value (R ave.) of the maximum reflectance (R max.) and the minimum reflectance (R min.) in a wavelength range of 620 nm to 780 nm in the visible light reflection spectrum is determined, and a point at a wavelength of 700 nm on the line a is taken as a point B.

Then, a straight line passing through the point A and the point B is defined as a "reference straight line AB" of the reflectance, and an equation of the "reference straight line AB" of the reflectance, namely an equation Y=a'X+b', is determined using its gradient and intersection points. Here, Y indicates the reflectance (%), X indicates the wavelength (nm), a' indicates the gradient of the straight line, and b' indicates the Y-intercept.

Next, the reflectance values of the above-mentioned "reference straight line AB" of the reflectance at wavelengths in the wavelength range of 500 nm to 570 nm are determined using the equation Y=a'X+b' and are compared with the reflectance values of the visible light reflection spectrum in the wavelength range of 500 nm to 570 nm, and the absolute value of the difference between the reflectance values at a wavelength at which the maximum absolute value of the difference between the reflectance values is obtained is defined as a "maximum variation ΔA".

Similarly, the reflectance values of the above-mentioned "reference straight line AB" of the reflectance at wavelengths in the wavelength range of 620 nm to 780 nm are determined using the equation Y=a'X+b' and are compared with the reflectance values of the visible light reflection spectrum in the wavelength range of 620 nm to 780 nm, and the absolute value of the difference between the reflectance values at a wavelength at which the maximum absolute value of the difference between the reflectance values is obtained is defined as a "maximum variation ΔB". The smaller the values of the "maximum variation ΔA" and "maximum variation ΔB" of the reflectance are, the smaller the reflectance variations of the visible light reflection spectrum in the wavelength range of 500 nm to 780 nm corresponding to green-based colors to red-based colors are.

In the transparent heat-shielding/heat-insulating member having a transparent screen function according to the present invention, it is preferable that the value of the "maximum variation ΔA" of the reflectance indicated in unit of reflectance percentage is 7.0% or less, and the value of the "maximum variation ΔB" of the reflectance indicated in unit of reflectance percentage is 9.0% or less, in the measured visible light reflection spectrum. When the value of the "maximum variation ΔA" of the reflectance and the value of the "maximum variation ΔB" of the reflectance are set to be within the above-mentioned ranges, the reflectance variations particularly at the wavelengths in a range of 500 nm to 780 nm, which correspond to green-based colors to red-based colors, in the visible light reflectance spectrum can be significantly reduced to make the reflectance change smoother, and therefore, even when the total thickness of the protective layer is set to be in a range corresponding to the visible light wavelength range (380 nm to 780 nm) in order to achieve both scratch resistance and heat-insulating properties of the protective layer, the iridescent phenomenon and the reflected color variation depending on a viewing angle can be suppressed to an extent that is hardly recognized by the human eye, and an excellent appearance can be thus obtained.

If one of the value of the "maximum variation ΔA" of the reflectance and the value of the "maximum variation ΔB" of the reflectance is out of the above-mentioned range, the reflectance variations at the wavelengths in a range of 500 nm to 780 nm, which correspond to green-based colors to red-based colors, in the visible light reflectance spectrum cannot be sufficiently reduced. As a result, when the total thickness of the protective layer is set to be in a range corresponding to the visible light wavelength range (380 nm to 780 nm) in order to achieve both scratch resistance and heat-insulating properties in the protective layer, the iridescent phenomenon and the reflected color variation depending on a viewing angle cannot be sufficiently suppressed.

It is more preferable that the value of the "maximum variation ΔA" of the reflectance indicated in unit of reflectance percentage is less than 6.0%, and the value of the "maximum variation ΔB" of the reflectance indicated in unit of reflectance percentage is less than 6.0%.

Hereinafter, the constituent members of the transparent heat-shielding /heat-insulating member having a transparent screen function according to the present invention and their related matters will be described.

### Transparent base material

There is no particular limitation on the transparent base material included in the transparent heat-shielding/heat-insulating member having a transparent screen function according to the present invention as long as the transparent base material has optical transparency. As the transparent base material, it is possible to use a film or sheet formed from a resin such as s polyester resin (e.g., polyethylene terephthalate or polyethylene naphthalate), a polycarbonate resin, a polyacrylic acid ester resin (e.g., polymethyl methacrylate), an alicyclic polyolefin resin, a polystyrene resin (e.g., polystyrene or acrylonitrile-styrene copolymers), a polyvinyl chloride resin, a polyvinyl acetate resin, a polyethersulfone resin, a cellulose resin (e.g., diacetyl cellulose or triacetyl cellulose), or a norbornene resin. Examples of the method for forming the resin into a film or sheet include an extrusion molding method, a calendering molding method, a compression molding method, an injection molding method, and a method in which any of the above resins is dissolved in a solvent and thereafter subjected to casting. The resin may further contain additives such as an antioxidant, a flame retardant, an anti-heat resistant agent, an ultraviolet absorbing agent, a lubricant, and an anti-static agent. An adhesion promotion layer may be provided on the transparent base material as needed. The transparent base material has a thickness of 10 µm to 500 µm, for example, and preferably has a thickness of 25 µm to 125 µm considering the processability and the cost.

### Infrared reflective layer

The infrared reflective layer included in the transparent heat-shielding /heat-insulating member having a transparent screen function according to the present invention includes at least a metal layer made of metal such as silver, copper, gold, or aluminum, and a metal suboxide layer made of partially oxidized metal in this order from the transparent base material side. Examples of such a configuration include (1) transparent base material/metal layer/metal suboxide layer, and (2) transparent base material/metal layer/metal suboxide layer/metal layer/metal suboxide layer. A metal suboxide layer made of partially oxidized metal or a metal oxide layer may be provided between the transparent base material and the metal layer. Examples of such a configuration include (1) transparent base material/metal suboxide layer/metal layer/metal suboxide layer, (2) transparent base material/metal suboxide layer/metal layer/metal suboxide layer/metal layer/metal suboxide layer, (3) transparent base material/metal oxide layer/metal layer/metal suboxide layer, and (4) transparent base material/metal oxide layer/metal layer/metal suboxide layer/metal layer/metal suboxide layer.

In particular, the infrared reflective layer preferably has a configuration in which a metal layer is sandwiched between metal suboxide layers or a configuration in which a metal layer is sandwiched between a metal oxide layer and a metal suboxide layer from the viewpoint of improving the visible light transmittance and suppressing the corrosion of the metal layer. Providing the infrared reflective layer makes it possible to impart a heat-shielding function and a heat-insulating function to the transparent heat-shielding/heat-insulating member of the present invention. A hard coating layer, an adhesion improving layer, a light diffusing layer, or the like may be provided between the infrared reflective layer and the transparent base material.

As the material for forming the metal layer, among commonly used metals, it is possible to use, as appropriate, those having a high electric conductivity and excellent far-infrared reflective performance, such as silver (refractive index n=0.12), copper (n=0.95), gold (n=0.35), and aluminum (n=0.96), and alloys thereof, but among these metals, it is preferable to use silver, which absorbs a relatively small amount of visible light and has the highest electric conductivity, or a silver alloy to form the metal layer. For the purpose of improving the corrosion resistance, it is also possible to use an alloy containing at least one or more of palladium, gold, copper, aluminum, bismuth, nickel, niobium, magnesium, zinc and the like.

Any of these materials can be used to form the metal layer directly on the transparent base material, on a metal suboxide layer that has been formed in advance on the transparent base material, or on a metal suboxide layer included in a stack in which a metal layer and a metal suboxide layer are repeatedly stacked, the stack having been formed in advance on the transparent base material, by using a sputtering method, a vapor deposition method or a dry coating method such as a plasma CVD method. The first metal layer may be formed on the transparent base material via another layer such as an adhesion promotion layer, a hard coating layer or a light diffusing layer.

The term "metal suboxide layer" means a partial (incomplete) oxide layer that contains the oxygen element in a smaller amount than complete oxides having a stoichiometric metallic composition. Providing the metal suboxide layer on the above-mentioned metal layer made of silver, a silver alloy, or the like makes it possible to improve the visible light transmittance of the infrared reflective layer and suppress the corrosion of the metal layer. As the material for forming the metal suboxide layer, it is possible to use, as appropriate, materials obtained by partially oxidizing metals such as titanium, nickel, chromium, cobalt, indium, tin, niobium, zirconium, zinc, tantalum, aluminum, cerium, magnesium, silicon, and mixtures thereof. In particular, a layer made of partially oxidized titanium metal or a layer made of partially oxidized metals whose main component is titanium is preferable as the metal suboxide layer because it is relatively transparent to visible light and is a dielectric with a high refractive index.

That is, it is preferable that the metal suboxide layer contains a titanium component. Any of these materials can be used to form the metal suboxide layer directly on the transparent base material, on a metal layer that has been formed in advance on the transparent base material, or on a metal layer included in a stack in which a metal suboxide layer and a metal layer are repeatedly stacked, the stack having been formed in advance on the transparent base material, by using a dry coating method. The first metal suboxide layer may be formed on the transparent base material via another layer such as an adhesion promotion layer, a hard coating layer or a light diffusing layer.

There is no particular limitation on a method for forming the metal suboxide layer, and the metal suboxide layer can be formed through a reactive sputtering method, for example. Specifically, when the above-described metals are used as targets to form a film through a sputtering method, using an atmospheric gas obtained by adding oxygen gas to an inert gas such as argon gas so as to give an appropriate concentration makes it possible to form a partial (incomplete) metal oxide layer, namely a metal suboxide layer, containing the oxygen element in an amount corresponding to the oxygen gas concentration. A partial (incomplete) metal oxide layer can also be formed by performing post-processing oxidization through heat treatment or the like after forming a thin metal film or a partially oxidized thin metal film through a sputtering method or the like.

As the constituent material of the metal oxide layer arranged under the metal layer, it is possible to use, as appropriate, metal oxide materials such as indium tin oxide (refractive index n=1.92), indium zinc oxide (n=2.00), indium oxide (n=2.00), titanium oxide (n=2.50), tin oxide (n=2.00), zinc oxide (n=2.03), niobium oxide (n=2.30), and aluminum oxide (n=1.77). Any of these materials can be used to form the metal oxide layer directly on the transparent base material, or under a metal layer included in a stack in which a metal layer and a metal suboxide layer are repeatedly stacked, by using a sputtering method, a vapor deposition method or a dry coating method such as an ion plating method. The metal oxide layer may be formed on the transparent base material via another layer such as an adhesion promotion layer, a hard coating layer or a light diffusing layer.

When a configuration in which the metal layer is sandwiched between the metal suboxide layers (metal suboxide layer (upper)/metal layer/metal suboxide layer (lower)) is applied to the infrared reflective layer, the metal suboxide layers may be formed of the same metal material or different metal materials. Moreover, it is preferable that at least the metal suboxide layer formed on the metal layer is constituted by a layer made of partially oxidized titanium metal or a layer made of partially oxidized metals whose main component is titanium. This makes it possible to prevent the corrosion of the metal layer and improve the adhesion to the protective layer provided on the infrared reflective layer.

Also, when a configuration in which the metal layer is sandwiched between the metal suboxide layer and the metal oxide layer (metal suboxide layer (upper)/metal layer/metal oxide layer (lower)) is applied to the infrared reflective layer, it is preferable that an aspect similar to that as described above is employed.

When the metal suboxide layer is constituted by a layer made of partially oxidized titanium (Ti) metal (TiOₓ), x in TiOₓ in this layer is preferably within a range of 0.5 or more to less than 2.0 from the viewpoint of a balance between the visible light transmittance of the infrared reflective layer and the suppression of corrosion of the metal layer. If x in TiOₓ is less than 0.5, the corrosion resistance of the metal layer is improved, but the visible light transmittance of the infrared reflective layer may decrease. If x in TiOₓ is 2.0 or more, the visible light transmittance of the infrared reflective layer will increase, but the corrosion resistance of the metal layer may be impaired. x in TiOₓ can be analyzed and calculated through energy-dispersive fluorescent X-ray analysis (EDX) or the like.

There is no particular limitation on the thickness of each of the metal layer, the metal suboxide layer, and the metal oxide layer, and the thickness may be adjusted as appropriate by taking into consideration the final near-infrared reflective performance (shading coefficient), far-infrared reflective performance (normal emissivity), visible light reflectance, and visible light transmittance as required by the above-described transparent heat-shielding/heat-insulating member having a transparent screen function.

Although not necessarily applicable to every case since an appropriate range of the thickness of the metal layer depends on the refractive index, thickness, the stack configuration and the like of the metal suboxide layer or the metal oxide layer stacked on the metal layer, the thickness of the metal layer is preferably adjusted as appropriate within a range of 5 nm to 20 nm. If the thickness is less than 5 nm, the infrared reflective performance of the transparent heat-shielding/heat-insulating member having a transparent screen function may be impaired, and thus the heat-shielding performance and the heat-insulating performance may also be impaired. In addition, the visible light reflectance may decrease, and thus an image projected by a projector may be less clearly viewed as a reflected image. If the thickness exceeds 20 nm, the visible light transmittance decreases, and the transparent viewability of the background may be thus impaired. By configuring the metal layer so as to have a thickness within the above-mentioned range and combining it with the range of the thicknesses of the metal suboxide layer and a metal oxide layer, which will be described below, as appropriate to form a stack configuration, the transparent heat-shielding/heat-insulating member having a transparent screen function can be configured to have a shading coefficient of 0.69 or less.

It is preferable that the thickness of the metal suboxide layer is adjusted as appropriate within a range of 1 to 8 nm depending on the refractive indices of the materials used for the metal layer and the metal oxide layer, and the thicknesses of the metal layer and the metal oxide layer. When the thickness is within the above-mentioned range, an effect of suppressing the corrosion of the metal layer will be sufficiently exhibited. On the other hand, if the thickness is less than 1 nm, the effect of suppressing the corrosion of the metal layer is less likely to be obtained. If the thickness exceeds 8 nm, an effect of improving the corrosion resistance of the metal layer is likely to reach a limit. Moreover, an influence on light absorption by the metal suboxide may increase, the visible light transmittance of the infrared reflective layer may decrease, and the transparent viewability of the background may thus be impaired. Furthermore, the productivity may be reduced due to the processing speed of sputtering being reduced during the formation of the layer.

It is preferable that the thickness of the metal oxide layer arranged under the metal layer is adjusted as appropriate within a range of 2 to 80 nm depending on the refractive indices of the materials used for the metal layer and the metal suboxide layer, and the thicknesses of the metal layer and the metal suboxide layer. If the thickness is less than 2 nm, a light compensating layer effect on the metal layer will be impaired, the visible light transmittance of the transparent heat-shielding /heat-insulating member having a transparent screen function will not be significantly improved, and the transparent viewability of the background may thus be impaired. In addition, the above-mentioned metal oxide serves to suppress the corrosion of the metal layer, and therefore, if the thickness is less than 2 nm, an effect of suppressing the corrosion of the metal layer may be impaired. On the other hand, the thickness exceeds 80 nm, the light compensating layer effect on the metal layer is not further obtained, and on the contrary, the visible light transmittance of the infrared reflective layer may gradually decrease. Furthermore, the productivity may be reduced due to the processing speed of sputtering being reduced during the formation of the layer.

The refractive indices of the metal suboxide layer and the metal oxide layer are preferably 1.7 or more, more preferably 1.8 or more, and even more preferably 2.0 or more.

It is preferable to set the average reflectance of the infrared reflective layer with respect to far-infrared rays at a wavelength of 5.5 µm to 25.2 µm to 80% or more. The thickness of the metal layer significantly affects the average far-infrared reflectance, and therefore, it is preferable to adjust the thickness of the metal layer to be within the above-mentioned range as appropriate. As a result, even when the total thickness of the protective layer as described below, which is formed on the infrared reflective layer, is within a range of 200 nm to 980 nm, it is easy to design the transparent heat-shielding/heat-insulating member of the present invention to have a normal emissivity of 0.22 or less, and such a thickness is favorable from the viewpoint of imparting a high heat-insulating function.

It should be noted that the normal emissivity is represented by the equation "normal emissivity (εₙ) = 1 - spectral reflectance (ρₙ)" as prescribed in JIS R3106-2008. The spectral reflectance ρₙ is measured in a wavelength range of 5.5 µm to 50 µm, which corresponds to thermal radiation at a normal temperature. The wavelength range of 5.5 µm to 50 µm is a far-infrared region, and the higher the reflectance in the far-infrared wavelength range is, the smaller the normal emissivity is, and the better the heat-insulating performance is.

The visible light reflectance of the transparent heat-shielding/heat-insulating member having a transparent screen function provided with the infrared reflective layer needs to be set to 12% or more and 30% or less in order to, when an image is projected by a projector, provide a reflected image having excellent brightness (luminance) and image clarity (less blurred) in terms of reflective viewability from the projector side without preventing the viewability of a transmitted image. If the visible light reflectance is less than 12%, the brightness (luminance) and the image clarity (less blurred) of the reflected image may be poor. If the visible light reflectance exceeds 30%, the reflected image will be strongly glittered or have a strong half-mirror appearance, and the transparent viewability of the background may be impaired, or the brightness (luminance) of the transmitted image may be reduced.

In order to set the visible light reflectance to 12% or more and 30% or less, it is preferable to adjust the thicknesses of the metal layer, the metal suboxide layer, and the metal oxide layer as appropriate to be within the above-described ranges in consideration of balance with the configuration of the protective layer, which will be described below. It is preferable to set the visible light reflectance to 15% or more and 25% or less. Setting the visible light reflectance to be within the above-mentioned range makes it possible to properly reflect the projected light from a projector and make up for the low backward scattering properties of the light diffusing layer, as a result of which the brightness (luminance) and the image clarity (less blurred) of the reflected image can be made better.

With a conventional reflective screen, a technique is used in which a metal vapor deposition layer or a transfer metal foil layer made of aluminum or the like, for example, a layer including flakes obtained by pulverizing a metal vapor deposition film or a metal foil dispersed therein or coated therewith, or the like is used as a visible light reflective layer. However, the reflective screen has an opaque configuration that basically hardly transmits visible light. In other words, in the case where these materials are used, there is a limit on control of the balance between visible light transmittance and visible light reflectance and uniforming of the thin metal film and the prevention of corrosion of the thin metal film when the visible light transmittance is improved. Even if the transmittance is forcibly improved, the visible light transmittance value can be practically increased about 40 to 50% at most.

In contrast, the present invention is different form a prior art in that the following points are found: by using the feature of the infrared reflective layer having a configuration in which at least the metal suboxide layer is stacked on the metal layer as described above, the infrared reflective performance required for heat-shielding and heat-insulation and the corrosion resistance of the infrared reflective layer are ensured, and the balance between the visible light transmittance required to ensure background viewability and the visible light reflectance required to improve the viewability of the reflected image of an image projected by a projector in a transparent screen is controlled; and by combining a stacked body of the metal layer and the metal suboxide layer with the light diffusing layer, in terms of reflective viewability of the projected image from the projector side, the brightness (luminance) and the image clarity (less blur) are unexpectedly improved without preventing the viewability of a transmitted image and the viewability of the background.

### Protective layer

The protective layer included in the transparent heat-shielding /heat-insulating member having a transparent screen function according to the present invention includes at least a high refractive index layer and a low refractive index layer in this order from the infrared reflective layer side, and its total thickness is set to 200 to 980 nm from the viewpoint of achieving both scratch resistance and heat-insulating properties. Providing the protective layer makes it possible to impart scratch resistance and corrosion resistance, namely durability, to the transparent heat-shielding/heat-insulating member having a transparent screen function according to the present invention without impairing the heat-insulating performance, and to improve the appearance. At the same time, when a content image is projected by a projector, it is possible to improve the image clarity of the transmitted image and the reflected image.

It is preferable that the protective layer includes a medium refractive index layer, a high refractive index layer, and a low refractive index layer in this order from the infrared reflective layer side. In particular, it is most preferable that the protective layer includes an optical adjustment layer, a medium refractive index layer, a high refractive index layer, and a low refractive index layer in this order from the infrared reflective layer side.

The total thickness of the protective layer is set to be within a range of 200 to 980 nm. If the total thickness is less than 200 nm, the physical properties such as scratch resistance and corrosion resistance of the metal layer may be impaired. If the total thickness exceeds 980 nm, the protective layer absorbs a large amount of far-infrared rays at wavelengths of 5.5 µm to 25.2 µm due to the influences of C=O groups, C-O groups, and aromatic groups contained in the molecular backbone of the resins used for the optical adjustment layer, medium refractive index layer, high refractive index layer, and low refractive index layer, and fine particles of inorganic oxides used to adjust the refractive indices of the layers, and the normal emissivity thus increases. As a result, the heat-insulating properties may be impaired. If the total thickness is within a range of 200 to 980 nm, the normal emissivity on the infrared reflective layer side based on JIS R3106-2008 will be 0.22 or less (the heat transmission coefficient value is 4.2 W/m²·K or less), and heat-insulating performance can be sufficiently exhibited.

It is more preferable that the above-mentioned total thickness is set to 300 nm or more from the viewpoint of further improving the scratch resistance and is also set to 700 nm or less from the viewpoint of further reducing the normal emissivity, that is, the total thickness is set to be within a range of 300 to 700 nm. If the total thickness is within a range of 300 to 700 nm, the normal emissivity on the infrared reflective layer side based on JIS R3106-2008 will be 0.17 or less (the heat transmission coefficient value is 4.0 W/m²·K or less), and higher levels of both the heat-insulating performance and the scratch resistance can be achieved.

It is necessary to determine the combinations of the refractive indices or thicknesses of the layers included in the protective layer such that the sizes of the so-called "ripples" in the visible light reflection spectrum of the heat-shielding /heat-insulating member having a transparent screen function according to the present invention decrease, and the visible light reflectance is within a range of 12% or more and 30% or less. To achieve this, it is preferable to perform adjustment and setting as appropriate such that desired optical characteristics can be obtained by combining optimum refractive indices or thicknesses of the layers under the condition that the total thickness of the protective layer is within a range of 200 to 980 nm.

Hereinafter, the layers included in the protective layer will be described.

### Optical adjustment layer

The optical adjustment layer is a layer for adjusting the optical characteristics of the infrared reflective layer in the transparent heat-shielding/heat-insulating member of the present invention. Its refractive index at a wavelength of 550 nm is preferably within a range of 1.60 to 2.00, and more preferably within a range of 1.65 to 1.90. Although not necessarily applicable to every case since an appropriate range of the thickness of the optical adjustment layer depends on the refractive indices, thicknesses, and the like of the medium refractive index layer, the high refractive index layer, and the low refractive index layer, which are stacked in this order on the optical adjustment layer, the thickness of the optical adjustment layer is preferably adjusted within a range of 30 to 80 nm, and more preferably within a range of 35 to 70 nm, in consideration of balance with the configurations of the above-mentioned other layers.

Setting the thickness of the optical adjustment layer to be within a range of 30 to 80 nm makes it possible to reduce the visible light reflectance of the infrared reflective layer in the transparent heat-shielding/heat-insulating member of the present invention to an appropriate range, and improve the transparency, namely the visible light transmittance, to an appropriate range. On the other hand, if the thickness of the optical adjustment layer is less than 30 nm, the visible light reflectance may increase, or it may be difficult to perform coating. If the thickness of the optical adjustment layer exceeds 80 nm, the visible light reflectance may increase, the near-infrared reflectance may decrease, and the heat insulating properties may be impaired due to a larger amount of light in the infrared region being absorbed in a case where the optical adjustment layer contains a large amount of inorganic fine particles.

It is preferable that the materials constituting the optical adjustment layer include the same materials as those constituting the above-described metal suboxide layer of the infrared reflective layer from the viewpoint of ensuring adhesion to the metal suboxide layer with which the optical adjustment layer is in direct contact. For example, when a layer made of partially oxidized titanium metal or a layer made of partially oxidized metals whose main component is titanium is selected as the metal suboxide layer, it is preferable to use materials containing fine particles of titanium oxide as the constituent material of the optical adjustment layer. When the constituent material of the optical adjustment layer contains fine particles of titanium oxide, it is possible to control, as appropriate, the refractive index of the optical adjustment layer such that a high refractive index within a range of 1.60 to 2.00 can be obtained, as well as to improve the adhesion to the metal suboxide layer constituted by a layer made of partially oxidized titanium metal or a layer made of partially oxidized metals whose main component is titanium.

There is no particular limitation on the constituent material of the optical adjustment layer containing inorganic fine particles typified by the above-mentioned fine particles of titanium oxide as long as the refractive index of the optical adjustment layer can be set to be within the above-mentioned range. For example, a material containing a resin such as a thermoplastic resin, a thermosetting resin, or an ionizing radiation curable resin, and inorganic fine particles dispersed in the resin is preferably used. In particular, as the constituent material of the optical adjustment layer, a material containing an ionizing radiation curable resin and inorganic fine particles dispersed in the ionizing radiation curable resin is preferable from the viewpoint of optical characteristics such as transparency, physical characteristics such as scratch resistance, and productivity. Normally, the material obtained by adding inorganic fine particles to an ionizing radiation curable resin is applied to the metal suboxide layer and then cured through irradiation with ionizing radiation such as ultraviolet rays to form the optical adjustment layer. Since the material contains the inorganic fine particles, the shrinkage of the layer is suppressed while the material is being cured, thus making it possible to improve the adhesion between the optical adjustment layer and the metal suboxide layer.

Examples of the above-mentioned thermoplastic resin include modified polyolefin resins, vinyl chloride resins, acrylonitrile resins, polyamide resins, polyimide resins, polyacetal resins, polycarbonate resin, polyvinyl butyral resins, acrylic resins, polyvinyl acetate resins, polyvinyl alcohol resins, and cellulose resins, and examples of the above-mentioned thermosetting resin include phenol resins, melamine resins, urea resins ,unsaturated polyester resins, epoxy resins, polyurethane resins, silicone resins, and alkyd resins. These resins can be used alone or as a mixture. The optical adjustment layer can be formed by adding a cross-linking agent to the resin as needed and curing the resin by heating.

Examples of the above-mentioned ionizing radiation curable resin include polyfunctional (meth)acrylate monomers and polyfunctional (meth)acrylate oligomers (prepolymers) that have two or more unsaturated groups. These resins can be used alone or as a mixture. Specific examples thereof include acrylates such as ethylene glycol di(meth)acrylate, diethylene glycol di(meth)acrylate, triethylene glycol di(meth)acrylate, 1,4-cyclohexane diacrylate, pentaerythritol tetra(meth)acrylate, pentaerythritol tri(meth)acrylate, trimethylolpropane tri(meth)acrylate, trimethylolethane tri(meth)acrylate, dipentaerythritol tetra(meth)acrylate, dipentaerythritol penta(meth)acrylate, dipentaerythritol hexa(meth)acrylate, and 1,2,3-cyclohexane trimethacrylate; vinylbenzene such as 1,4-divinylbenzene, 4-vinylbenzoate-2-acryloyl ethyl ester, and 1,4-divinylcyclohexanone, and derivatives thereof; urethane-based polyfunctional acrylate oligomers such as a pentaerythritol triacrylate hexamethylene diisocyanate urethane prepolymer; ester-based polyfunctional acrylate oligomers formed using a polyhydric alcohol and (meth)acrylic acid; and epoxy-based polyfunctional acrylate oligomers. The optical adjustment layer can be formed by adding a photopolymerization initiator to the resin as needed and curing the resin through irradiation with ionizing radiation.

In order to further improve the adhesion between the optical adjustment layer containing the ionizing radiation curable resin and the metal suboxide layer of the infrared reflective layer, the ionizing radiation curable resins to which a derivative of (meth)acrylic acid having a polar group such as a phosphate group, a sulfonic group, or an amide group, a silane coupling agent having an unsaturated group such as a vinyl group, or the like is added may be used.

The above-mentioned inorganic fine particles are dispersed in or added to the above-mentioned resin in order to adjust the refractive index of the optical adjustment layer. Examples of the inorganic fine particles include fine particles made of titanium oxide (TiO₂), zirconium oxide (ZrO₂), zinc oxide (ZnO), indium tin oxide (ITO), niobium oxide (Nb₂O₅), yttrium oxide (Y₂O₃), indium oxide (In₂O₃), tin oxide (SnO₂), antimony oxide (Sb₂O₃), tantalum oxide (Ta₂O₅), and tungsten oxide (WO₃). The inorganic particles may be subjected to surface treatment using a dispersing agent as needed. Among the inorganic fine particles listed above, those made of titanium oxide and zirconium oxide are preferable because a high refractive index can be realized with a smaller addition amount compared with the other materials. Those made of titanium oxide are more preferable from the viewpoint of absorbing a relatively small amount of light in the infrared region and ensuring the adhesion to a TiOₓ layer that is suitable for the metal suboxide layer.

Regarding the particle diameter of the inorganic fine particles, the average particle diameter is preferably within a range of 5 to 100 nm, and more preferably within a range of 10 to 80 nm, from the viewpoint of transparency of the optical adjustment layer. If the average particle diameter exceeds 100 nm, the transparency may be significantly impaired due to an increase in haze value or the like in a case where the optical adjustment layer contains a large amount of inorganic fine particles when the optical adjustment layer is formed. If the average diameter is less than 5 nm, it may be difficult to maintain the dispersion stability of the inorganic fine particles when the inorganic fine particles are contained in a coating material.

### Medium refractive index layer

The refractive index of the above-mentioned medium refractive index layer with respect to light at a wavelength of 550 nm is preferably within a range of 1.45 to 1.55, and more preferably within a range of 1.47 to 1.53. Although not necessarily applicable to every case since an appropriate range of the thickness of the medium refractive index layer depends on the refractive indices, thicknesses, and the like of the optical adjustment layer, which is arranged under the medium refractive index layer, and the high refractive index layer and the low refractive index layer, which are arranged in this order on the medium refractive index layer, the thickness of the medium refractive index layer is preferably set to be within a range of 40 to 200 nm, and more preferably within a range of 50 to 150 nm, in consideration of balance with the configurations of the above-mentioned other layers.

If the thickness of the medium refractive index layer is less than 40 nm, the adhesion to the metal suboxide layer of the infrared reflective layer or the optical adjustment layer may be impaired. In addition, regarding products, for example, the reflected color may become reddish, the transmitted color may become greenish, or the total light transmittance may decrease. It is not preferable that the thickness of the medium refractive index layer exceeds 200 nm because the heat insulating properties may be impaired due to a larger amount of light in the infrared region being absorbed. Also, such a case is not preferable because the iridescent pattern may be noticeable due to an inability to sufficiently reduce the sizes of the ripples in the visible light reflection spectrum of the transparent heat-shielding/heat-insulating member, namely the variations of the reflectance at wavelengths in the visible light region, and in addition, an appearance problem may arise due to the reflected color significantly varying depending on a viewing angle. For example, regarding products, the reflected color may become reddish, or the total light transmittance may decrease. Furthermore, the heat insulating properties may be impaired due to a larger amount of light in the infrared region being absorbed.

There is no particular limitation on the constituent material of the medium refractive index layer as long as the refractive index of the medium refractive index layer can be set to be within the above-mentioned range. For example, a thermoplastic resin, a thermosetting resin, an ionizing radiation curable resin, or the like is preferably used. As the above-mentioned thermoplastic resin, thermosetting resin, or ionizing radiation curable resin, any of the resins listed above as the resins that can be used for the optical adjustment layer can be used, and the medium refractive index layer can be formed in accordance with the same prescription. Inorganic fine particles may be added to the resin as needed in order to adjust the refractive index. As the constituent material of the medium refractive index layer, a material containing the ionizing radiation curable resin is preferable from the viewpoint of optical characteristics such as transparency, physical characteristics such as scratch resistance, and productivity.

As the ionizing radiation curable resin, a resin containing a polyfunctional (meth)acrylate oligomer (prepolymer) of a urethane-based type, ester-based type, or epoxy-based type that has relatively small cure shrinkage when irradiated with ionizing radiation such as ultraviolet rays is more preferable. This makes it possible to improve the adhesion between the medium refractive index layer and the metal suboxide layer of the infrared reflective layer or the optical adjustment layer.

In order to further improve the adhesion between the medium refractive index layer containing the ionizing radiation curable resin and the metal suboxide layer of the infrared reflective layer or the optical adjustment layer, the ionizing radiation curable resins to which a derivative of (meth)acrylic acid having a polar group such as a phosphate group, a sulfonic group, or an amide group, a silane coupling agent having an unsaturated group such as a vinyl group, or the like is added may be used.

### High refractive index layer

The refractive index of the above-mentioned high refractive index layer with respect to light at a wavelength of 550 nm is preferably within a range of 1.65 to 1.95, and more preferably within a range of 1.70 to 1.90. Although not necessarily applicable to every case since an appropriate range of the thickness of the high refractive index layer depends on the refractive indices, thicknesses, and the like of the medium refractive index layer and the optical adjustment layer, which are arranged in this order under the high refractive index layer, and the low refractive index layer, which is arranged on the high refractive index layer, the thickness of the high refractive index layer is preferably set to be within a range of 60 to 550 nm, and more preferably within a range of 65 to 400 nm, in consideration of balance with the configurations of the above-mentioned other layers.

If the thickness of the high refractive index layer is less than 60 nm, physical characteristics such as scratch resistance of the film surface may be impaired, or, for example, the transmitted color of a product may become greenish. If the thickness of the high refractive index layer exceeds 550 nm, the heat insulating properties may be impaired due to an increase in normal emissivity caused by the absorption of a larger amount of light in the infrared region in a case where the high refractive index layer contains a large amount of inorganic fine particles.

There is no particular limitation on the constituent material of the high refractive index layer as long as the refractive index of the high refractive index layer can be set to be within the above-mentioned range. For example, a material containing a resin such as a thermoplastic resin, a thermosetting resin, or an ionizing radiation curable resin, and inorganic fine particles dispersed in the resin is preferably used. As the above-mentioned thermoplastic resin, thermosetting resin, or ionizing radiation curable resin and the above-mentioned inorganic fine particles, any of the resins and inorganic fine particles listed above as the resins and inorganic fine particles that can be used for the optical adjustment layer can be used, and the high refractive index layer can be formed in accordance with the same prescription.

As the constituent material of the high refractive index layer, a material containing the ionizing radiation curable resin and the inorganic fine particles dispersed in the ionizing radiation curable resin is preferable from the viewpoint of optical characteristics such as transparency, physical characteristics such as scratch resistance, and productivity. Normally, the material obtained by adding inorganic fine particles to an ionizing radiation curable resin is applied to the metal suboxide layer or the medium refractive index layer, and then cured through irradiation with ionizing radiation such as ultraviolet rays to form the high refractive index layer. Since the material contains the inorganic fine particles, shrinkage of the layer is suppressed while the material is being cured, thus making it possible to improve the adhesion between the high refractive index layer and the metal suboxide layer or medium refractive index layer.

The above-mentioned inorganic fine particles are added in order to adjust the refractive index of the high refractive index layer. Among the inorganic fine particles listed above, those made of titanium oxide and zirconium oxide are preferable because a high refractive index can be realized with a smaller addition amount compared with the other materials. Those made of titanium oxide are more preferable from the viewpoint of absorbing a relatively small amount of light in the infrared region.

In order to further improve the adhesion between the high refractive index layer containing the ionizing radiation curable resin and the metal suboxide layer of the infrared reflective layer or the medium refractive index layer, the ionizing radiation curable resins to which a derivative of (meth)acrylic acid having a polar group such as a phosphate group, a sulfonic group, or an amide group, a silane coupling agent having an unsaturated group such as a vinyl group, or the like is added may be used.

### Low refractive index layer

The refractive index of the above-mentioned low refractive index layer with respect to light at a wavelength of 550 nm is preferably within a range of 1.30 to 1.45, and more preferably within a range of 1.35 to 1.43. Although not necessarily applicable to every case since an appropriate range of the thickness of the low refractive index layer depends on the refractive indices, thicknesses, and the like of the high refractive index layer, the medium refractive index layer, and the optical adjustment layer, which are arranged in this order under the low refractive index layer, the thickness of the low refractive index layer is preferably set to be within a range of 70 to 150 nm, and more preferably within a range of 80 to 130 nm, in consideration of balance with the configurations of the above-mentioned other layers.

If the thickness of the low refractive index layer is out of a range of 70 to 150 nm, the iridescent pattern may be noticeable due to an inability to sufficiently reduce the sizes of the ripples in the visible light region of the reflection spectrum of the transparent heat-shielding/heat-insulating member of the present invention, namely the variations of the reflectance at wavelengths in the visible light region, and in addition, an appearance problem may arise due to the reflected color significantly varying depending on a viewing angle. Moreover, the visible light transmittance may decrease.

There is no particular limitation on the constituent material of the low refractive index layer as long as the refractive index of the low refractive index layer can be set to be within the above-mentioned range. For example, a material containing a resin such as a thermosetting resin or an ionizing radiation curable resin, or the resin and inorganic fine particles with a low refractive index dispersed in the resin, or an organic-inorganic hybrid material in which an organic component and an inorganic component are chemically bound to each other is preferably used. As the constituent material of the low refractive index layer, a material containing the ionizing radiation curable resin and inorganic fine particles with a low refractive index dispersed in the ionizing radiation curable resin, or a material containing an organic-inorganic hybrid material in which an ionizing radiation curable resin and inorganic fine particles with a low refractive index are chemically bound to each other is preferable from the viewpoint of optical characteristics such as transparency, physical characteristics such as scratch resistance, and productivity.

As the above-mentioned ionizing radiation curable resin, in addition to any of the resins listed above as the resins that can be used for the optical adjustment layer, fluorine-based ionizing radiation curable resins can be used, and the low refractive index layer can be formed in accordance with the same prescription.

The above-mentioned inorganic fine particles are dispersed in or added to the resin in order to adjust the refractive index of the low refractive index layer. As the inorganic fine particles with a low refractive index, those made of silicon oxide, magnesium fluoride, or aluminum fluoride can be used, for example. A silicon oxide-based material is preferable from the viewpoint of the physical characteristics such as scratch resistance of the low refractive index layer, which is the outermost layer in the protective layer, and in particular, a hollow silicon oxide- (hollow silica-) based material provided with an interior space is particularly preferable in order to realize the low refractive index.

Normally, the material obtained by adding inorganic fine particles to an ionizing radiation curable resin is applied to the high refractive index layer and then cured through irradiation with ionizing radiation such as ultraviolet rays to form the low refractive index layer. Since the material contains the inorganic fine particles, the shrinkage of the layer is suppressed while the material is being cured, thus making it possible to improve the adhesion to the high refractive index layer.

In order to further improve the adhesion between the low refractive index layer containing the ionizing radiation curable resin and the high refractive index layer, the ionizing radiation curable resins to which a derivative of (meth)acrylic acid having a polar group such as a phosphate group, a sulfonic group, or an amide group, a silane coupling agent having an unsaturated group such as a vinyl group, or the like is added may be used.

In addition to the above-mentioned constituent material, the low refractive index layer may contain, as the constituent material, an additive such as a leveling agent, an anti-fingerprint agent, a lubricant, an anti-static agent, a haze imparting agent, or an anti-blocking agent. The content of the additive is adjusted as appropriate without impairing the object of the present invention.

As described above, even when the protective layer has any of (1) a laminate configuration in which the high refractive index layer and the low refractive index layer are arranged in this order from the infrared reflective layer side, (2) a laminate configuration in which the medium refractive index layer, the high refractive index layer, and the low refractive index layer are arranged in this order from the infrared reflective layer side, and (3) a laminate configuration in which the optical adjustment layer, the medium refractive index layer, the high refractive index layer, and the low refractive index layer are arranged in this order from the infrared reflective layer side, it is preferable to select, as appropriate, the thickness of the optical adjustment layer with a refractive index of 1.60 to 2.00 at a wavelength of 550 nm from a range of 30 to 80 nm, the thickness of the medium refractive index layer with a refractive index of 1.45 to 1.55 at a wavelength of 550 nm from a range of 40 to 200 nm, the thickness of the high refractive index layer with a refractive index of 1.65 to 1.95 at a wavelength of 550 nm from a range of 60 to 550 nm, and the thickness of the low refractive index layer with a refractive index of 1.30 to 1.45 at a wavelength of 550 nm from a range of 70 to 150 nm such that the total thickness of the protective layer is within a range of 200 to 980 nm. This makes it possible to provide a heat-shielding/heat-insulating member that retains heat insulating properties (the normal emissivity value is 0.22 or less, and the heat transmission coefficient value is 4.2 W/m²· K or less) and also has excellent physical characteristics such as scratch resistance and corrosion resistance as well as an excellent appearance obtained by suppressing an iridescent phenomenon and a reflected color variation depending on a viewing angle.

When the total thickness is set to be within a range of 300 to 700 nm, which is more preferable, the normal emissivity on the infrared reflective layer side based on JIS R3106-2008 is 0.17 or less (the heat transmission coefficient value is 4.0 W/m²·K or less), and the mechanical properties required for a protective layer are sufficiently ensured. Therefore, higher levels of both the heat-insulating performance and the scratch resistance can be achieved.

It should be noted that there is no particular limitation on a method for forming the layers of the protective layer. Each of the layers can be formed using a method in which a solution obtained by dissolving and dispersing a composition containing the above-described constituent material in an organic solvent selected as appropriate is applied on the infrared reflective layer directly or via another thin layer such as a primer layer using a coater such as a micro-gravure coater, a gravure coater, a die coater, a reverse coater, or a roll coater, and then is dried. The protective layer can be cross-linked and cured through irradiation with ionizing radiation or application of thermal energy after the organic solvent is dried.

### Light diffusing layer

The light diffusing layer included in the transparent heat-shielding /heat-insulating member having a transparent screen function according to the present invention is constituted by a layer in which light diffusing particles are dispersed in a transparent resin. Normally, the transparent resin has a refractive index different from that of the light diffusing particles dispersed therein. The refractive index of the transparent resin is preferably selected from a range of 1.45 to 1.60 as appropriate. There is no particular limitation on the refractive index of the light diffusing particles as long as the refractive index is different from (lower or higher than) that of the transparent resin, but the refractive index of the light diffusing particles is preferably selected from a range of 1.30 to 2.40 as appropriate, and more preferably from a range of 1.40 to 1.65 as appropriate. It is preferable that the absolute value of the difference in refractive index between the transparent resin and the light diffusing particles is set to be within a range of 0.01 to 0.20. Setting the absolute value of the difference in refractive index to be within this range makes it possible to obtain a light diffusing layer having a desired haze value.

There is no particular limitation on the transparent resin used for the light diffusing layer as long as it has optical transparency, and it is possible to use as appropriate known resins, adhesives and pressure-sensitive adhesives including thermoplastic resins, thermosetting resins and ionizing radiation curable resins such as a (meth)acrylic resin, an acrylic urethane resin, a polyester resin, a polyester acrylate resin, a polyurethane (meth)acrylate resin, an epoxy (meth)acrylate resin, a polyurethane resin, an epoxy resin, a polycarbonate resin, a cellulose resin, an acetal resin, a vinyl resin, a polyethylene resin, a polystyrene resin, a polypropylene resin, an ethylene-vinyl acetate resin, a polyamide resin, a polyimide resin, a melamine resin, a phenol resin, a silicone resin and a fluororesin; and rubber resins such as a natural rubber resin, a recycled rubber resin, a chloroprene rubber resin, a nitrile rubber resin and a styrene-butadiene rubber resin. The transparent resin may further contain one or more additives such as a cross-linking agent, an ultraviolet absorbing agent, an antioxidant, an anti-static agent, a flame retardant agent, a plasticizing agent and a coloring agent according to the purpose.

Among the transparent resins listed above, it is particularly preferable to use a pressure-sensitive adhesive that has pressure sensitive adhesiveness at room temperature. It is preferable to use a pressure-sensitive adhesive as the transparent resin in which light diffusing particles are to be dispersed, in terms of processing cost because the functions of the light diffusing layer and the pressure-sensitive adhesive layer can be implemented by a single layer. Examples of the pressure-sensitive adhesive include an acrylic resin, a silicone resin, a polyester resin, an epoxy resin, and a polyurethane resin. In particular, it is more preferable to use an acrylic resin because it has high optical transparency, is highly reliable, has proven useful in many applications, and is relatively inexpensive.

Examples of the acrylic pressure-sensitive adhesive include a homopolymer or a copolymer of acrylic monomers such as acrylic acid and an ester thereof, methacrylic acid and an ester thereof, acrylamide, and acrylonitrile. Other examples include a copolymer containing at least one of the acrylic monomers listed above and a vinyl monomer such as vinyl acetate, maleic anhydride, or styrene. In particular, examples of a preferable acrylic pressure-sensitive adhesive include a copolymer obtained by copolymerizing, as appropriate, a main alkyl acrylate monomer serving as a component for exhibiting pressure sensitive adhesiveness such as methyl acrylate, ethyl acrylate, butyl acrylate and 2-ethylhexyl acrylate; a monomer serving as a component for improving a cohesive force such as a vinyl acetate, acrylamide, acrylonitrile, styrene and methacrylate; and a functional group-containing monomer serving as a component for further improving the pressure sensitive adhesiveness and providing a cross-linking point such as acrylic acid, methacrylic acid, itaconic acid, crotonic acid, maleic anhydride, hydroxylethyl methacrylate, hydroxylpropyl methacrylate, dimethylaminoethyl methacrylate, methylol acrylamide, and a glycidyl methacrylate. The acrylic pressure-sensitive adhesive preferably has a Tg (glass transition temperature) of -60°C to -10°C and a weight-average molecular weight of 100,000 to 2,000,000, and more preferably a weight-average molecular weight of 500,000 to 1,000,000. The acrylic pressure-sensitive adhesive may be mixed with one or more cross-linking agents such as an isocyanate-based cross-linking agent, an epoxy-based cross-linking agent, and a metal chelate-based cross-linking agent as needed.

Also, as the acrylic pressure-sensitive adhesive, it is possible to use an ionizing radiation curable coating material obtained by blending a photopolymerization initiator and the like with an oligomer having a (meth)acryl group at the terminal or side chain and a (meth)acrylic monomer. When such an ionizing radiation curable coating material is applied to a transparent base material and then irradiated with ionizing radiation such as ultraviolet rays, the coated layer is formed into a pressure-sensitive adhesive, which can be used as the acrylic pressure-sensitive adhesive.

As the light diffusing particles used for the light diffusing layer, it is possible to use inorganic fine particles and organic fine particles. The refractive index of the light diffusing particles is preferably selected as appropriate from a range of 1.30 to 2.40, and more preferably from a range of 1.40 to 1.65. If the refractive index of the light diffusing particles is within this range, the absolute value of the difference in refractive index with respect to the transparent resin can be set to be within a desired range, and thus a light diffusing layer having a desired haze value can be obtained.

As the inorganic fine particles, it is possible to use, as appropriate, conventionally known inorganic fine particles made of silica, alumina, rutile titanium dioxide, anatase titanium dioxide, zinc oxide, zinc sulfide, white lead, antimony oxide, zinc antimonate, lead titanate, potassium titanate, barium titanate, zirconium oxide, cerium oxide, hafnium oxide, tantalum pentoxide, niobium pentoxide, yttrium oxide, chromium oxide, tin oxide, molybdenum oxide, indium tin oxide, antimony-doped tin oxide, calcium carbonate, talc, oxide glass such as silicate glass, phosphate glass, or borate glass, diamond or the like.

As the organic fine particles, it is possible to use, as appropriate, conventionally known organic fine particles made of an acrylic polymer, an acrylonitrile polymer, a styrene-acrylic copolymer, a vinyl acetate-acrylic copolymer, a vinyl acetate polymer, an ethylene-vinyl acetate copolymer, a chlorinated polyolefin polymer, a multi-component copolymer such as an ethylene-vinyl acetate-acrylic copolymer, SBR, NBR, MBR, carboxylated SBR, carboxylated NBR, carboxylated MBR, a polyvinylchloride resin, a polyvinylidene chloride resin, a polyester resin, a polyolefin resin, a polyurethane resin, a polymethacrylate resin, a polytetrafluoroethylene resin, a polymethyl methacrylate resin, a polycarbonate resin, a polyvinyl acetal resin, a rosin ester resin, an episulfide resin, an epoxy resin, a silicone resin, a silicone-acrylic resin, a melamine resin or the like, for example.

The shape of the light diffusing particles may be any shape such as a spherical shape, a flat shape, an amorphous shape, a star-like shape, or a spherical star shape. Also, the light diffusing particles may be hollow particles or core-shell particles. The light diffusing particles may be used alone or in combination of two or more.

Among the shapes of the light diffusing particles listed above, an amorphous shape, a star-like shape, and a spherical star shape are more preferable from the viewpoint of improving an internal diffusion effect, scattering light toward the surroundings as uniformly as possible in both cases of forward scattering and backward scattering, and further increasing the angle of transmissive diffusion.

The light diffusing particles preferably has an average particle diameter of 0.2 µm to 10.0 µm and more preferably 0.5 µm to 5.0 µm. If the average particle diameter is less than 0.2 µm, the light diffusing performance will be low, which may result in poor viewability of projected images, as well as a cost increase and a reduction in the physical properties of the light diffusing layer as a result of addition of an excessively large amount of the light diffusing particles. On the other hand, if the average particle diameter exceeds 10.0 µm, the visible light transmittance may decrease or the contrast may decrease due to glittering. In order to enable adaptation to a projector with a short projection distance with which light from the light source is obliquely incident on a screen, it is preferable that the light diffusing particles having a large average particle diameter and the light diffusing particles having a small average particle diameter (average particle diameter within a range of the visible light wavelength region) are used mixed together. For example, it is preferable that the light diffusing particles having an average particle diameter of 4.0 µm and the light diffusing particles having an average particle diameter of 0.5 µm are used mixed together. This makes it easy to ensure brightness of a portion of a projected image that is not on the optical axis.

Although not necessarily applicable to every case since an appropriate range of the content of light diffusing particles in the light diffusing layer depends on the refractive indices of the transparent resin and the light diffusing particles used, the size of the light diffusing particles, the thickness of the light diffusing layer, the dispersed state of the light diffusing particles, and the like, the amount of light diffusing particles in the light diffusing layer is preferably 0.3 parts by mass to 20 parts by mass, and more preferably 1 part by mass to 10 parts by mass with respect to 100 parts by mass of the transparent resin. If the content is less than 0.3 parts by mass, the haze value of the transparent heat-shielding/heat-insulating member having a transparent screen function may be less than 5%, and as a result, the light diffusing performance may be insufficient and the viewability of a projected image from a projector may be poor. If the content exceeds 20 parts by mass, the haze value may exceed 35%, and as a result, the background viewability or the visible light transmittance may decrease. Blending the light diffusing particles in an amount within the above-mentioned range makes it possible to obtain a light diffusing layer having excellent light diffusing performance.

The thickness of the light diffusing layer is determined as appropriate according to the size and content of the light diffusing particles used, the refractive indices of the transparent resin and the light diffusing particles, and the like. By adjusting the thickness, the transparent heat-shielding/heat-insulating member having a transparent screen function can have a haze value within a desired range. The thickness of the light diffusing layer is preferably 5 µm to 200 µm, and more preferably 10 µm to 100 µm. If the thickness is less than 5 µm, the haze value may be less than 5%, and as a result, the light diffusing performance may be insufficient and the viewability of a projected image from a projector may be poor. If the thickness exceeds 200 µm, a handling problem or workability problem may occur, and the haze value may exceed 35%, and as a result, the background viewability or the visible light transmittance may decrease.

When the above-described pressure-sensitive adhesive is used as the transparent resin, the thickness of the light diffusing layer is preferably 10 µm to 150 µm. If the thickness is less than 10 µm, the pressure-sensitive adhesive force with respect to a transparent substrate serving as an adherend may decrease. If the thickness is greater than 150 µm, when a web of the transparent heat-shielding /heat-insulating member having a transparent screen function is finally wound and its ends are slit, the slit end faces may be sticky and dust or the like may adhere thereto, or a handling problem or workability problem may occur.

The light diffusing layer may be formed directly on a transparent base material or via an adhesion promotion layer, an adhesive layer or the like.

There is no particular limitation on the method for forming the light diffusing layer, but it is preferable to form the light diffusing layer by using a method in which a coating material obtained by dispersing the above-mentioned light diffusing particles in a solution in which the above-mentioned transparent resin is dissolved in an organic solvent such as ethyl acetate, butyl acetate, acetone, methyl ethyl ketone, methyl isobutyl ketone, cyclohexanone, toluene or xylene is applied onto a surface of the transparent base material on which the infrared reflective layer has not been formed, and then is dried.

Also, when a pressure-sensitive adhesive is used as the transparent resin, the light diffusing layer can be formed by a method in which a pressure-sensitive adhesive solution in which the light diffusing particles are dispersed is applied onto a surface opposite to the surface of the transparent base material on which the infrared reflective layer has been formed, and then is dried, and thereafter a release film is laminated onto the pressure-sensitive adhesive layer, or a method in which a pressure-sensitive adhesive solution in which the light diffusing particles are dispersed is applied onto a release film, and then is dried, and thereafter a surface opposite to the surface of the transparent base material on which the infrared reflective layer has been formed is bonded to the light diffusing pressure-sensitive adhesive layer.

Furthermore, the light diffusing layer can also be formed by a method in which a film formed of a transparent resin such as polyolefin or polyethylene terephthalate into which the light diffusing particles have been kneaded through hot melt kneading using an extrusion molding method, a calendering molding method, a compression molding method, an injection molding method, a casting method, or the like is bonded to a surface opposite to the surface of the transparent base material on which the infrared reflective layer has been formed by using a transparent adhesive. The film formed of a transparent resin such as polyolefin or polyethylene terephthalate into which the light diffusing particles have been kneaded through hot melt kneading using an extrusion molding method, a calendering molding method, a compression molding method, an injection molding method, a casting method, or the like can be used, as is, as a transparent base material that also serves as a light diffusing layer.

When the light diffusing layer is formed between the transparent base material and the infrared reflective layer, it is sufficient that the light diffusing layer is formed on the transparent base material in the same manner as the above-described methods, and thereafter the infrared reflective layer is formed on the light diffusing layer using a dry coating method.

The dispersion of the light diffusing particles in the transparent resin can be performed by using various mixing-agitating apparatuses and dispersion apparatuses such as a Disper, an Ajiter, a ball mill, an Attritor and a sand mill. A dispersing agent for dispersing the light diffusing particles may be added as needed to disperse the light diffusing particles. It is preferable that the coating material in which the light diffusing particles are dispersed is defoamed before application so as to reduce, as much as possible, air bubbles that remain in the light diffusing layer formed by application of the coating material and drying.

The application of the coating material in which the light diffusing particles are dispersed can be performed by using a coater such as a die coater, a comma coater, a reverse coater, a dam coater, a doctor bar coater, a gravure coater, a micro-gravure coater or a roll coater.

The light diffusing layer may be cured, as needed, through cross-linking suitable for a functional group contained in the transparent resin used such as cross-linking due to heat by addition of a crosslinking agent having multiple functional groups, cross-linking by irradiation with ionizing radiation, or the like.

### Transparent substrate

There is no particular limitation on the transparent substrate to which the transparent heat-shielding/heat-insulating member having a transparent screen function according to the present invention is attached via a transparent pressure-sensitive adhesive, a transparent adhesive, or the like, or by electrostatic attraction as long as it has optical transparency, and a plate-like material made of glass or plastic can be preferably used. There is no particular limitation on the type of glass, but it is preferable to use silicic acid salt glass such as silicate glass, alkali silicate glass, soda lime glass, potash lime glass, lead glass, barium glass, borosilicate glass, or the like, for example. There is no particular limitation on the type of plastic, but it is preferable to use a polyacrylic acid ester resin, a polycarbonate resin, a polyvinylchloride resin, a polyarylate resin, a polyethylene resin, a polypropylene resin, a polyester resin, or the like, for example.

### Pressure-sensitive adhesive layer

The transparent heat-shielding/heat-insulating member having a transparent screen function according to the present invention is easily attached to a transparent substrate such as a windowpane by forming a pressure-sensitive adhesive layer or the like on a surface opposite to the surface of the transparent base material on which the protective layer is formed. As the material of the pressure-sensitive adhesive layer, a material having a high visible light transmittance and a small difference in refractive index with respect to the transparent base material is preferably used. Examples thereof include an acrylic resin, a silicone resin, a polyester resin, an epoxy resin, and a polyurethane resin. In particular, an acrylic resin is preferably used because it has high optical transparency, has good balance between wettability and pressure-sensitive adhesive force, is reliable, has proven useful in many applications, and is relatively inexpensive. As the acrylic pressure-sensitive adhesive, any of the pressure-sensitive adhesives listed as the material for the light diffusing layer above can be used in accordance with the same prescription.

The pressure-sensitive adhesive layer preferably contains an ultraviolet absorbing agent in order to suppress the deterioration of the transparent heat-shielding/heat-insulating member having a transparent screen function caused by ultraviolet rays of sunlight and the like. Also, the pressure-sensitive adhesive layer preferably includes a release film on the pressure-sensitive adhesive layer until the transparent heat-shielding/heat-insulating member having a transparent screen function is attached to a transparent substrate and used thereon.

The thickness of the pressure-sensitive adhesive is preferably 10 µm to 150 µm. If the thickness is less than 10 µm, the pressure-sensitive adhesive force with respect to a transparent substrate serving as an adherend may decrease. If the thickness exceeds 150 µm, when a web of the transparent heat-shielding /heat-insulating member having a transparent screen function is finally wound and its ends are slit, the slit end faces may be sticky and dust or the like may adhere thereto, or a handling problem or a workability problem may occur.

There is no particular limitation on the method for forming the pressure-sensitive adhesive layer on the transparent heat-shielding/heat-insulating member having a transparent screen function, but it is preferable to form the pressure-sensitive adhesive layer by a method in which a solution prepared by dissolving any of the above-listed resins for forming the pressure-sensitive adhesive layer in an appropriately selected organic solvent is first applied onto a release film by using a coater such as a die coater, a comma coater, a reverse coater, a dam coater, a doctor bar coater, a gravure coater, a micro-gravure coater or a roll coater and is dried, and thereafter an exposed surface of the pressure-sensitive adhesive layer is attached to a surface opposite to the surface of the transparent heat-shielding/heat-insulating member having a transparent screen function on which the protective layer is formed.

### Transparent heat- shielding/heat-insulating member

In the transparent heat-shielding/heat-insulating member having a transparent screen function according to the present invention, it is preferable that the value of the "maximum variation ΔA" of the reflectance indicated in unit of reflectance percentage is 7.0% or less, and the value of the "maximum variation ΔB" of the reflectance indicated in unit of reflectance percentage is 9.0% or less, in the measured visible light reflection spectrum. When the value of the "maximum variation ΔA" of the reflectance and the value of the "maximum variation ΔB" of the reflectance are set to be within the above-mentioned ranges, the reflectance variations particularly at the wavelengths in a range of 500 nm to 780 nm, which correspond to green-based colors to red-based colors, in the visible light reflectance spectrum can be significantly reduced to make the reflectance change smoother, and therefore, even when the total thickness of the protective layer is set to be in a range corresponding to the visible light wavelength range (380 nm to 780 nm) in order to achieve both scratch resistance and heat-insulating properties in the protective layer, the iridescent phenomenon and the reflected color variation depending on a viewing angle can be suppressed to an extent that is hardly recognized by the human eye, and an excellent appearance can be thus obtained.

If one of the value of the "maximum variation ΔA" of the reflectance and the value of the "maximum variation ΔB" of the reflectance is out of the above-mentioned range, the reflectance variations at the wavelengths in a range of 500 nm to 780 nm, which correspond to green-based colors to red-based colors, in the visible light reflectance spectrum cannot be sufficiently reduced. As a result, when the total thickness of the protective layer is set to be in a range corresponding to the visible light wavelength range (380 nm to 780 nm) in order to achieve both scratch resistance and heat-insulating properties in the protective layer, the iridescent phenomenon and the reflected color variation depending on a viewing angle cannot be sufficiently suppressed.

It is more preferable that the value of the "maximum variation ΔA" of the reflectance indicated in unit of reflectance percentage is less than 6.0%, and the value of the "maximum variation ΔB" of the reflectance indicated in unit of reflectance percentage is less than 6.0%. This also makes it possible to further suppress the iridescent phenomenon and the reflected color variation depending on a viewing angle at nighttime.

### Examples

Hereinafter, the present invention will be described in detail by way of examples. However, the present invention is not limited to the examples given below. In the following description, unless otherwise stated, the term "part(s)" means "part(s) by mass".

### Measurement of refractive indices and thicknesses of layers in protective layer

### Measurement of refractive index

The refractive indices of the optical adjustment layer, the medium refractive index layer, the high refractive index layer, and the low refractive index layer obtained in each of the following examples and comparative examples were measured using the following method.

Each of coating materials for forming the respective layers was applied onto a surface of a polyethylene terephthalate (PET) film "A4100", which is manufactured by TOYOBO Co., Ltd., the surface having not been subjected to adhesion promotion treatment, such that the thickness of the coating material was 500 nm, and was dried. Thereafter, this layer was cured through irradiation with ultraviolet rays in an amount of 300 mJ/cm² using a high-pressure mercury lamp, and a film sample for refractive index measurement was thus produced.

Black tape was attached to a surface opposite to the surface of the produced sample for a refractive index measurement onto which the coating materials had been applied, and a reflection spectrum was measured using a reflectance spectroscopic thickness meter "FE-3000" (trade name; manufactured by Otsuka Electronics Co, Ltd.), and fitting was performed using an n-Cauchy equation based on the obtained reflective spectrum, and the light refractive index at a wavelength of 550 nm of each layer was determined.

### Measurement of thickness

The thicknesses of the optical adjustment layer, the medium refractive index layer, the high refractive index layer, and the low refractive index layer obtained in each of the following examples and comparative examples were measured by attaching black tape on a surface of the transparent base material on which the infrared reflective layer and the protective layer had not been formed, obtaining a reflective spectrum for each layer using an instantaneous multi-purpose photometric system "MCPD-3000" (trade name), which is manufactured by Otsuka Electronics Co., Ltd., and performing optimization fitting by using the refractive index obtained by the above-mentioned method from the obtained reflective spectrum.

### Example 1

### Formation of infrared reflective layer

First, a polyethylene terephthalate (PET) film "A4300" (trade name; thickness: 50 µm), which is manufactured by TOYOBO Co., Ltd., in which both surfaces were subjected to adhesion promotion treatment was prepared as a transparent base material. Next, a metal suboxide (TiOₓ) layer having a thickness of 2 nm was formed of a titanium target on one surface of the PET film through a reactive sputtering method. In the reactive sputtering method, an Ar/O₂ mixed gas was used as the sputtering gas, and the volume ratio of gas flow rates was set to Ar 97% / O₂ 3%. Subsequently, a metal (Ag) layer having a thickness of 12 nm was formed of a silver target on the metal suboxide layer through a sputtering method. In the sputtering method, 100% Ar gas was used as the sputtering gas.

Furthermore, a metal suboxide (TiOₓ) layer having a thickness of 2 nm was formed of a titanium target on the metal layer through a reactive sputtering method. In the reactive sputtering method, an Ar/O₂ mixed gas was used as the sputtering gas, and the volume ratio of gas flow rates was set to Ar 97% / O₂ 3%. As a result, an infrared reflective layer having a three-layer structure including the metal suboxide (TiOₓ) layer, the metal (Ag) layer, and the metal suboxide (TiOₓ) layer in this order from the transparent base material side was formed on one surface of the PET film base material. x in the TiOₓ layer was 1.5.

### Formation of protective layer

### Formation of optical adjustment layer

An optical adjustment coating material A was produced by blending 10 parts of a titanium oxide-based hard coating agent "Lioduras TYT80-01" (trade name; solid content: 25 mass%), which is manufactured by TOYO INK Co., Ltd., and 90 parts of methyl isobutyl ketone serving as a dilution solvent using a Disper. Next, the optical adjustment coating material A was applied onto the infrared reflective layer using a micro-gravure coater (manufactured by Yasui Seiki Inc.) such that the dry thickness was 40 nm. After drying, the coating material was cured through irradiation with ultraviolet rays in an amount of 300 mJ/cm² using a high-pressure mercury lamp, and an optical adjustment layer having a thickness of 40 nm was thus formed. The refractive index of the produced optical adjustment layer measured using the above-described method was 1.80.

### Formation of medium refractive index layer

A medium refractive index coating material A was produced by blending 10 parts of a hard coating agent "Z-773" (trade name; solid content: 34 mass%), which is manufactured by Aica Kogyo Co., Ltd., and 100 parts of butyl acetate serving as a dilution solvent using a Disper. Next, the medium refractive index coating material A was applied onto the optical adjustment layer using the above-mentioned micro-gravure coater such that the dry thickness was 80 nm. After drying, the coating material was cured through irradiation with ultraviolet rays in an amount of 300 mJ/cm² using a high-pressure mercury lamp, and a medium refractive index layer having a thickness of 80 nm was thus formed. The refractive index of the produced medium refractive index layer measured using the above-described method was 1.52.

### Formation of high refractive index layer

A high refractive index coating material A was produced by blending 40 parts of a titanium oxide-based hard coating agent "Lioduras TYT80-01" (trade name; solid content: 25 mass%), which is manufactured by TOYO INK Co., Ltd., and 60 parts of methyl isobutyl ketone serving as a dilution solvent using a Disper. Next, the high refractive index coating material A was applied onto the medium refractive index layer using the above-mentioned micro-gravure coater such that the dry thickness was 270 nm. After drying, the coating material was cured through irradiation with ultraviolet rays in an amount of 300 mJ/cm² using a high-pressure mercury lamp, and a high refractive index layer having a thickness of 270 nm was thus formed. The refractive index of the produced high refractive index layer measured using the above-described method was 1.80.

### Formation of low refractive index layer

A hollow silica-containing low refractive index coating material "ELCOM P-5062" (trade name; solid content: 3 mass%), which is manufactured by JGC Catalysts and Chemicals Ltd. was used as a low refractive index coating material A. The low refractive index coating material A was applied onto the high refractive index layer using the above-mentioned micro-gravure coater such that the dry thickness was 100 nm. After drying, the coating material was cured through irradiation with ultraviolet rays in an amount of 300 mJ/cm² using a high-pressure mercury lamp, and a low refractive index layer having a thickness of 100 nm was thus formed. The refractive index of the produced low refractive index layer measured using the above-described method was 1.38.

In this manner, an infrared reflective film (transparent heat-shielding /heat-insulating member) obtained by forming the infrared reflective layer and the protective layer including four layers, namely the optical adjustment layer, the medium refractive index layer, the high refractive index layer, and the low refractive index layer, on one surface of the PET film base material was produced.

### Formation of light diffusing pressure-sensitive adhesive layer

First, a PET film "NS-38+A" (trade name; thickness: 38 µm), which is manufactured by Nakamoto Packs Co., Ltd., in which one surface was subjected to silicone treatment was prepared as a release film. Also, a light diffusing pressure-sensitive adhesive layer-forming coating solution was prepared by adding 0.88 parts (3.5 parts with respect to 100 parts of a pressure-sensitive adhesive resin) of amorphous silicone resin fine particles "TOSPEARL 240" (trade name; average particle diameter: 4.0 µm, refractive index: 1.42), which is manufactured by Momentive Performance Materials Japan Inc., 1.25 parts of ultraviolet absorbing agent (benzophenone-based ultraviolet absorbing agent), which is manufactured by Wako Pure Chemical Industries, Ltd., and 0.27 parts of cross-linking agent "E-AX" (trade name; solid content: 5 mass%), which is manufactured by Soken Chemical & Engineering Co., Ltd., to 100 parts of an acrylic pressure-sensitive adhesive solution "SK-Dyne 2094" (trade name; solid content: 25 mass%, refractive index: 1.49), which is manufactured by Soken Chemical & Engineering Co., Ltd., dispersing and blending them using a Disper, and then defoaming the resulting mixture.

Next, the light diffusing pressure-sensitive adhesive layer-forming coating solution was applied onto the silicone-treated surface of the PET film of the release film using a die coater such that the dry thickness was 25 µm, and was dried. A light diffusing pressure-sensitive adhesive layer was thus formed. Furthermore, an exposed surface of the light diffusing pressure-sensitive adhesive layer was attached to the surface of the infrared reflective film including the protective layer on which the protective layer was not formed, and a transparent heat-shielding/heat-insulating member having a transparent screen function was thus produced in which the light diffusing pressure-sensitive adhesive layer was formed on one surface of the PET film base material, and the infrared reflective layer and the protective layer including four layers, namely the optical adjustment layer, the medium refractive index layer, the high refractive index layer, and the low refractive index layer, were formed on the other surface.

### Attachment to glass substrate

First, a 3 mm-thick float glass sheet (manufactured by Nippon Sheet Glass Co. Ltd.) was prepared as a glass substrate. Next, the release film on the light diffusing pressure-sensitive adhesive layer side of the transparent heat-shielding /heat-insulating member having a transparent screen function in which the light diffusing pressure-sensitive adhesive layer was formed on one surface of the PET film base material, and the infrared reflective layer and the protective layer including four layers, namely the optical adjustment layer, the medium refractive index layer, the high refractive index layer, and the low refractive index layer, were formed on the other surface was removed, and the light diffusing pressure-sensitive adhesive layer was attached to the float glass sheet.

### Example 2

A transparent heat-shielding/heat-insulating member having a transparent screen function in which the light diffusing pressure-sensitive adhesive layer was formed on one surface of the PET film base material, and the infrared reflective layer and the protective layer including four layers, namely the optical adjustment layer, the medium refractive index layer, the high refractive index layer, and the low refractive index layer, were formed on the other surface was produced and attached to the glass substrate (float glass sheet) in the same manner as in Example 1, except that the dry thickness of the optical adjustment layer was changed to 60 nm, the dry thickness of the medium refractive index layer was changed to 60 nm, the dry thickness of the high refractive index layer was changed to 90 nm, and the dry thickness of the low refractive index layer was changed to 110 nm.

### Example 3

A transparent heat-shielding/heat-insulating member having a transparent screen function in which the light diffusing pressure-sensitive adhesive layer was formed on one surface of the PET film base material, and the infrared reflective layer and the protective layer including four layers, namely the optical adjustment layer, the medium refractive index layer, the high refractive index layer, and the low refractive index layer, were formed on the other surface was produced and attached to the glass substrate (float glass sheet) in the same manner as in Example 1, except that the dry thickness of the optical adjustment layer was changed to 60 nm, the dry thickness of the medium refractive index layer was changed to 100 nm, the dry thickness of the high refractive index layer was changed to 400 nm, and the dry thickness of the low refractive index layer was changed to 110 nm.

### Example 4

A transparent heat-shielding/heat-insulating member having a transparent screen function in which the light diffusing pressure-sensitive adhesive layer was formed on one surface of the PET film base material, and the infrared reflective layer and the protective layer including two layers, namely the high refractive index layer and the low refractive index layer, were formed on the other surface was produced and attached to the glass substrate (float glass sheet) in the same manner as in Example 1, except that the optical adjustment layer and the medium refractive index layer were not formed, the dry thickness of the high refractive index layer was changed to 285 nm, and the dry thickness of the low refractive index layer was changed to 105 nm.

### Example 5

First, a polyethylene terephthalate (PET) film "A4300" (trade name; thickness: 50 µm), which is manufactured by TOYOBO Co., Ltd., in which both surfaces were subjected to adhesion promotion treatment was prepared as a transparent base material. Next, a metal oxide (TiO₂) layer having a thickness of 2 nm was formed of a titanium oxide target on one surface of the PET film through a sputtering method. In the sputtering method, 100% Ar gas was used as the sputtering gas. Subsequently, a metal (Ag) layer having a thickness of 12 nm was formed of a silver target on the metal oxide layer through a sputtering method. In the sputtering method, 100% Ar gas was used as the sputtering gas.

Furthermore, a metal suboxide (TiOₓ) layer having a thickness of 2 nm was formed of a titanium target on the metal layer through a reactive sputtering method. In the reactive sputtering method, an Ar/O₂ mixed gas was used as the sputtering gas, and the volume ratio of gas flow rates was set to Ar 97% / O₂ 3%. As a result, an infrared reflective layer having a three-layer structure including the metal oxide (TiO₂) layer, the metal (Ag) layer, and the metal suboxide (TiOₓ) layer in this order from the transparent base material side was formed on one surface of the PET film base material. x in the TiOₓ layer was 1.5.

Next, a transparent heat-shielding/heat-insulating member having a transparent screen function in which the light diffusing pressure-sensitive adhesive layer was formed on one surface of the PET film base material, and the infrared reflective layer and the protective layer including four layers, namely the optical adjustment layer, the medium refractive index layer, the high refractive index layer, and the low refractive index layer, were formed on the other surface was produced and attached to the glass substrate (float glass sheet) in the same manner as in Example 1, except that the PET film base material was used on which the infrared reflective layer having a three-layer structure in which the metal oxide (TiO₂) layer, the metal (Ag) layer, and the metal suboxide (TiOₓ) layer were arranged in this order from the transparent base material side was formed.

### Example 6

A medium refractive index coating material B was produced by mixing 9.5 parts of pentaerythritol triacrylate "PE-3A" (trade name), which is manufactured by Kyoeisha Chemical Co., Ltd., 0.5 parts of a phosphate group-containing metacrylate "KAYAMER PM-21" (trade name), which is manufactured by Nippon Kayaku Co., Ltd., 0.3 parts of a photopolymerization initiator "Irgacure 184" (trade name), which is manufactured by BASF, and 490 parts of methyl isobutyl ketone using a Disper.

Next, the medium refractive index coating material B was applied onto the infrared reflective layer formed on one side of the PET film base material in the same manner as in Example 1 using the above-mentioned micro-gravure coater such that the dry thickness was 150 nm. After drying, the coating material was cured through irradiation with ultraviolet rays in an amount of 300 mJ/cm² using a high-pressure mercury lamp, and a medium refractive index layer having a thickness of 150 nm was thus formed. The refractive index of the produced medium refractive index layer measured using the above-described method was 1.50. A transparent heat-shielding /heat-insulating member having a transparent screen function in which the light diffusing pressure-sensitive adhesive layer was formed on one surface of the PET film base material, and the infrared reflective layer and the protective layer including three layers, namely the medium refractive index layer, the high refractive index layer, and the low refractive index layer, were formed on the other surface was produced and attached to the glass substrate (float glass sheet) in the same manner as in Example 1, except that the medium refractive index layer was formed without providing the optical adjustment layer as mentioned above, and the dry thickness of the high refractive index layer was changed to 290 nm.

### Example 7

A transparent heat-shielding/heat-insulating member having a transparent screen function in which the light diffusing pressure-sensitive adhesive layer was formed on one surface of the PET film base material, and the infrared reflective layer and the protective layer including four layers, namely the optical adjustment layer, the medium refractive index layer, the high refractive index layer, and the low refractive index layer, were formed on the other surface was produced and attached to the glass substrate (float glass sheet) in the same manner as in Example 1, except that the dry thickness of the optical adjustment layer was changed to 50 nm, the dry thickness of the medium refractive index layer was changed to 130 nm, and the dry thickness of the high refractive index layer was changed to 500 nm.

### Example 8

A transparent heat-shielding/heat-insulating member having a transparent screen function in which the light diffusing pressure-sensitive adhesive layer was formed on one surface of the PET film base material, and the infrared reflective layer and the protective layer including four layers, namely the optical adjustment layer, the medium refractive index layer, the high refractive index layer, and the low refractive index layer, were formed on the other surface was produced and attached to the glass substrate (float glass sheet) in the same manner as in Example 1, except that the thickness of the metal (Ag) layer of the infrared reflective layer was changed to 7 nm, the dry thickness of the optical adjustment layer was changed to 50 nm, the dry thickness of the medium refractive index layer was changed to 60 nm, the dry thickness of the high refractive index layer was changed to 65 nm, and the dry thickness of the low refractive index layer was changed to 95 nm.

### Example 9

A transparent heat-shielding/heat-insulating member having a transparent screen function in which the light diffusing pressure-sensitive adhesive layer was formed on one surface of the PET film base material, and the infrared reflective layer and the protective layer including two layers, namely the high refractive index layer and the low refractive index layer, were formed on the other surface was produced and attached to the glass substrate (float glass sheet) in the same manner as in Example 1, except that the optical adjustment layer and the medium refractive index layer were not formed, the dry thickness of the high refractive index layer was changed to 145 nm, and the dry thickness of the low refractive index layer was changed to 95 nm.

### Example 10

A transparent heat-shielding/heat-insulating member having a transparent screen function in which the light diffusing pressure-sensitive adhesive layer was formed on one surface of the PET film base material, and the infrared reflective layer and the protective layer including four layers, namely the optical adjustment layer, the medium refractive index layer, the high refractive index layer, and the low refractive index layer, were formed on the other surface was produced and attached to the glass substrate (float glass sheet) in the same manner as in Example 1, except that the optical adjustment layer and the high refractive index layer were changed as described below, and the dry thickness of the medium refractive index layer was changed to 50 nm.

### Optical adjustment layer

An optical adjustment coating material B was produced by blending 10 parts of a titanium oxide-based hard coating agent "Lioduras TYT90" (trade name; solid content: 25 mass%), which is manufactured by TOYO INK Co., Ltd., and 90 parts of methyl isobutyl ketone serving as a dilution solvent using a Disper. Next, the optical adjustment coating material B was applied onto the infrared reflective layer using the above-described micro-gravure coater (manufactured by Yasui Seiki Inc.) such that the dry thickness was 70 nm. After drying, the coating material was cured through irradiation with ultraviolet rays in an amount of 500 mJ/cm² using a high-pressure mercury lamp, and an optical adjustment layer having a thickness of 70 nm was thus formed. The refractive index of the produced optical adjustment layer measured using the above-described method was 1.89.

### High refractive index layer

A high refractive index coating material B was produced by blending 40 parts of a titanium oxide-based hard coating agent "Lioduras TYT90" (trade name; solid content: 25 mass%), which is manufactured by TOYO INK Co., Ltd., and 60 parts of methyl isobutyl ketone serving as a dilution solvent using a Disper. Next, the high refractive index coating material B was applied onto the medium refractive index layer using the above-mentioned micro-gravure coater such that the dry thickness was 220 nm. After drying, the coating material was cured through irradiation with ultraviolet rays in an amount of 500 mJ/cm² using a high-pressure mercury lamp, and a high refractive index layer having a thickness of 220 nm was thus formed. The refractive index of the produced high refractive index layer measured using the above-described method was 1.89.

### Example 11

A transparent heat-shielding/heat-insulating member having a transparent screen function in which the light diffusing pressure-sensitive adhesive layer was formed on one surface of the PET film base material, and the infrared reflective layer and the protective layer including four layers, namely the optical adjustment layer, the medium refractive index layer, the high refractive index layer, and the low refractive index layer, were formed on the other surface was produced and attached to the glass substrate (float glass sheet) in the same manner as in Example 2, except that the high refractive index layer was changed as described below.

### High refractive index layer

A high refractive index coating material C was produced by blending 25 parts of a zirconium oxide-based hard coating agent "Lioduras TYZ74" (trade name; solid content: 40 mass%), which is manufactured by TOYO INK Co., Ltd., and 75 parts of methyl isobutyl ketone serving as a dilution solvent using a Disper. Next, the high refractive index coating material C was applied onto the medium refractive index layer using the above-mentioned micro-gravure coater (manufactured by Yasui Seiki Inc.) such that the dry thickness was 90 nm. After drying, the coating material was cured through irradiation with ultraviolet rays in an amount of 300 mJ/cm² using a high-pressure mercury lamp, and a high refractive index layer having a thickness of 90 nm was thus formed. The refractive index of the produced high refractive index layer measured using the above-described method was 1.76.

### Example 12

A transparent heat-shielding/heat-insulating member having a transparent screen function in which the light diffusing pressure-sensitive adhesive layer was formed on one surface of the PET film base material, and the infrared reflective layer and the protective layer including four layers, namely the optical adjustment layer, the medium refractive index layer, the high refractive index layer, and the low refractive index layer, were formed on the other surface was produced and attached to the glass substrate (float glass sheet) in the same manner as in Example 2, except that the optical adjustment layer and the high refractive index layer were changed as described below, and the dry thickness of the low refractive index layer was changed to 115 nm.

### Optical adjustment layer

An optical adjustment coating material B was produced by blending 10 parts of a titanium oxide-based hard coating agent "Lioduras TYT90" (trade name; solid content: 25 mass%), which is manufactured by TOYO INK Co., Ltd., and 90 parts of methyl isobutyl ketone serving as a dilution solvent using a Disper. Next, the optical adjustment coating material B was applied onto the infrared reflective layer using the above-described micro-gravure coater such that the dry thickness was 55 nm. After drying, the coating material was cured through irradiation with ultraviolet rays in an amount of 500 mJ/cm² using a high-pressure mercury lamp, and an optical adjustment layer having a thickness of 55 nm was thus formed. The refractive index of the produced optical adjustment layer measured using the above-described method was 1.89.

### High refractive index layer

A high refractive index coating material D was produced by blending 25 parts of a zinc oxide-based hard coating agent "Lioduras TYN700UV" (trade name; solid content: 40 mass%), which is manufactured by TOYO INK Co., Ltd., and 75 parts of methyl isobutyl ketone serving as a dilution solvent using a Disper. Next, the high refractive index coating material D was applied onto the medium refractive index layer using the above-mentioned micro-gravure coater such that the dry thickness was 85 nm. After drying, the coating material was cured through irradiation with ultraviolet rays in an amount of 500 mJ/cm² using a high-pressure mercury lamp, and a high refractive index layer having a thickness of 85 nm was thus formed. The refractive index of the produced high refractive index layer measured using the above-described method was 1.65.

### Example 13

A transparent heat-shielding/heat-insulating member having a transparent screen function in which the light diffusing pressure-sensitive adhesive layer was formed on one surface of the PET film base material, and the infrared reflective layer and the protective layer including four layers, namely the optical adjustment layer, the medium refractive index layer, the high refractive index layer, and the low refractive index layer, were formed on the other surface was produced and attached to the glass substrate (float glass sheet) in the same manner as in Example 1, except that the optical adjustment layer was changed as described below, the thickness of the metal (Ag) layer of the infrared reflective layer was changed to 7 nm, the dry thickness of the medium refractive index layer was changed to 100 nm, the dry thickness of the high refractive index layer was changed to 320 nm, and the dry thickness of the low refractive index layer was changed to 110 nm.

### Optical adjustment layer

An optical adjustment coating material C was produced by blending 10 parts of a titanium oxide-based hard coating agent "Lioduras TYT80-01" (trade name; solid content: 25 mass%), which is manufactured by TOYO INK Co., Ltd., 2.2 parts of an ionizing radiation curable urethane acrylate resin solution "BPZA-66" (trade name; solid content: 80 mass%, weight-average molecular weight: 20,000), which is manufactured by Kyoeisha Chemical Co., Ltd., 0.1 parts of a phosphate group-containing metacrylate "KAYAMER PM-21" (trade name), which is manufactured by Nippon Kayaku Co., Ltd., and 162 parts of methyl isobutyl ketone serving as a dilution solvent using a Disper. Next, the optical adjustment coating material C was applied onto the infrared reflective layer using the above-described micro-gravure coater such that the dry thickness was 55 nm. After drying, the coating material was cured through irradiation with ultraviolet rays in an amount of 300 mJ/cm² using a high-pressure mercury lamp, and an optical adjustment layer having a thickness of 55 nm was thus formed. The refractive index of the produced optical adjustment layer measured using the above-described method was 1.60.

### Example 14

A transparent heat-shielding/heat-insulating member having a transparent screen function in which the light diffusing pressure-sensitive adhesive layer was formed on one surface of the PET film base material, and the infrared reflective layer and the protective layer including four layers, namely the optical adjustment layer, the medium refractive index layer, the high refractive index layer, and the low refractive index layer, were formed on the other surface was produced and attached to the glass substrate (float glass sheet) in the same manner as in Example 2, except that the low refractive index layer was changed as described below.

### Low refractive index layer

A low refractive index coating material B was produced by blending 100 parts of a hollow silica-containing low refractive index coating material "ELCOM P-5062" (trade name; solid content: 3 mass%), which is manufactured by JGC Catalysts and Chemicals Ltd., 3.5 parts of a pentaerythritol triacrylate "Light Acrylate PE-3A" (trade name), which is manufactured by Kyoeisha Chemical Co., Ltd., 1.8 parts of dipentaerythritol hexaacrylate "KAYALAD DPHA" (trade name), which is manufactured by a Nippon Kayaku Co., Ltd., 117 parts of isopropyl alcohol, 26 parts of methyl isobutyl ketone, and 26 parts of isopropyl glycol using a Disper. The low refractive index coating material B was applied onto the high refractive index layer using the above-mentioned micro-gravure coater such that the dry thickness was 110 nm. After drying, the coating material was cured through irradiation with ultraviolet rays in an amount of 300 mJ/cm² using a high-pressure mercury lamp, and a low refractive index layer having a thickness of 110 nm was thus formed. The refractive index of the produced low refractive index layer measured using the above-described method was 1.45.

### Example 15

A transparent heat-shielding/heat-insulating member having a transparent screen function in which the light diffusing pressure-sensitive adhesive layer was formed on one surface of the PET film base material, and the infrared reflective layer and the protective layer including four layers, namely the optical adjustment layer, the medium refractive index layer, the high refractive index layer, and the low refractive index layer, were formed on the other surface was produced and attached to the glass substrate (float glass sheet) in the same manner as in Example 1, except that the thickness of the metal (Ag) layer of the infrared reflective layer was changed to 7 nm, the dry thickness of the optical adjustment layer was changed to 60 nm, the dry thickness of the medium refractive index layer was changed to 200 nm, the dry thickness of the high refractive index layer was changed to 550 nm, and the dry thickness of the low refractive index layer was changed to 120 nm.

### Example 16

A transparent heat-shielding/heat-insulating member having a transparent screen function in which the light diffusing pressure-sensitive adhesive layer was formed on one surface of the PET film base material, and the infrared reflective layer and the protective layer including four layers, namely the optical adjustment layer, the medium refractive index layer, the high refractive index layer, and the low refractive index layer, were formed on the other surface was produced and attached to the glass substrate (float glass sheet) in the same manner as in Example 1, except that the thickness of the metal suboxide (TiOₓ) layer of the infrared reflective layer was changed to 6 nm, the thickness of the metal (Ag) layer of the infrared reflective layer was changed to 7 nm, the dry thickness of the optical adjustment layer was changed to 80 nm, the dry thickness of the medium refractive index layer was changed to 100 nm, the dry thickness of the high refractive index layer was changed to 505 nm, and the dry thickness of the low refractive index layer was changed to 115 nm.

### Example 17

A transparent heat-shielding/heat-insulating member having a transparent screen function in which the light diffusing pressure-sensitive adhesive layer was formed on one surface of the PET film base material, and the infrared reflective layer and the protective layer including four layers, namely the optical adjustment layer, the medium refractive index layer, the high refractive index layer, and the low refractive index layer, were formed on the other surface was produced and attached to the glass substrate (float glass sheet) in the same manner as in Example 1, except that the thickness of the metal (Ag) layer of the infrared reflective layer was changed to 15 nm, the dry thickness of the optical adjustment layer was changed to 45 nm, the dry thickness of the medium refractive index layer was changed to 90 nm, and the dry thickness of the high refractive index layer was changed to 95 nm.

### Example 18

A transparent heat-shielding/heat-insulating member having a transparent screen function in which the light diffusing pressure-sensitive adhesive layer was formed on one surface of the PET film base material, and the infrared reflective layer and the protective layer including four layers, namely the optical adjustment layer, the medium refractive index layer, the high refractive index layer, and the low refractive index layer, were formed on the other surface was produced and attached to the glass substrate (float glass sheet) in the same manner as in Example 1, except that the addition amount of the amorphous silicone resin fine particles "TOSPEARL 240" (trade name; average particle diameter: 4.0 µm) in the light diffusing pressure-sensitive adhesive layer was changed to 0.25 parts (1.0 part with respect to 100 parts of the pressure-sensitive adhesive resin).

### Example 19

A transparent heat-shielding/heat-insulating member having a transparent screen function in which the light diffusing pressure-sensitive adhesive layer was formed on one surface of the PET film base material, and the infrared reflective layer and the protective layer including four layers, namely the optical adjustment layer, the medium refractive index layer, the high refractive index layer, and the low refractive index layer, were formed on the other surface was produced and attached to the glass substrate (float glass sheet) in the same manner as in Example 1, except that the addition amount of the amorphous silicone resin fine particles "TOSPEARL 240" (trade name; average particle diameter: 4.0 µm) in the light diffusing pressure-sensitive adhesive layer was changed to 1.13 parts (4.5 parts with respect to 100 parts of the pressure-sensitive adhesive resin).

### Example 20

First, an infrared reflective film in which the infrared reflective layer and the protective layer including four layers, namely the optical adjustment layer, the medium refractive index layer, the high refractive index layer, and the low refractive index layer were formed on one surface of the PET film base material was produced in the same manner as in Example 1.

### Formation of light diffusing layer

A light diffusing layer-forming coating solution A was prepared by adding 3.5 parts of amorphous silicone resin fine particles TOSPEARL 240 (trade name; average particle size: 4.0 µm), which is manufactured by Momentive Performance Materials Japan Inc., 75 parts of methyl ethyl ketone, and 75 parts of toluene to 100 parts of acrylic resin "Dianal BR-90" (trade name; refractive index: 1.49), which is manufactured by Mitsubishi Rayon Co., Ltd., dispersing and blending them using a Disper, and then defoaming the resulting mixture.

Next, the light diffusing layer-forming coating solution A was applied onto a surface of the infrared reflective film including the protective film on which the protective film was not formed, using the above-mentioned die coater such that the dry thickness was 25 µm, and was dried. A light diffusing layer was thus formed.

### Formation of pressure-sensitive adhesive layer

First, a PET film "NS-38+A" (trade name; thickness: 38 µm), which is manufactured by Nakamoto Packs Co., Ltd., in which one surface was subjected to silicone treatment was prepared as a release film. Also, a pressure-sensitive adhesive layer-forming coating solution was prepared by adding 1.25 parts of ultraviolet absorbing agent (benzophenone-based ultraviolet absorbing agent), which is manufactured by Wako Pure Chemical Industries, Ltd., and 0.27 parts of cross-linking agent "E-AX" (trade name; solid content: 5 mass%), which is manufactured by Soken Chemical & Engineering Co., Ltd., to 100 parts of an acrylic pressure-sensitive adhesive solution "SK-Dyne 2094" (trade name; solid content: 25 mass%, refractive index: 1.49), which is manufactured by Soken Chemical & Engineering Co., Ltd., dispersing and blending them using a Disper, and then defoaming the resulting mixture.

Next, the pressure-sensitive adhesive layer-forming coating solution was applied onto a surface of the PET film of the release film that was subjected to silicone treatment using the above-mentioned die coater such that the dry thickness was 25 µm, and was dried. A pressure-sensitive adhesive layer was thus formed. Furthermore, an exposed surface of the pressure-sensitive adhesive layer was attached to the surface of the infrared reflective film including the protective layer on which the light diffusing layer was formed, and a transparent heat-shielding/heat-insulating member having a transparent screen function was thus produced in which the pressure-sensitive adhesive layer and the light diffusing layer were formed on one surface of the PET film base material, and the infrared reflective layer and the protective layer including four layers, namely the optical adjustment layer, the medium refractive index layer, the high refractive index layer, and the low refractive index layer, were formed on the other surface.

Next, a 3 mm-thick float glass sheet (manufactured by Nippon Sheet Glass Co. Ltd.) was prepared as a glass substrate. Then, the release film on the pressure-sensitive adhesive layer side of the transparent heat-shielding /heat-insulating member having a transparent screen function in which the pressure-sensitive adhesive layer and the light diffusing layer were formed on one surface of the PET film base material, and the infrared reflective layer and the protective layer including four layers, namely the optical adjustment layer, the medium refractive index layer, the high refractive index layer, and the low refractive index layer, were formed on the other surface was removed, and the pressure-sensitive adhesive layer was attached to the float glass sheet.

### Example 21

### Formation of light diffusing layer

A light diffusing layer-forming coating solution B was prepared by adding 5.6 parts (7.0 parts with respect to 100 parts of an ionizing radiation curable resin oligomer) of amorphous silicone resin fine particles "TOSPEARL 240" (trade name; average particle size: 4.0 µm), which is manufactured by Momentive Performance Materials Japan Inc., 2.4 parts of a photopolymerization initiator "Irgacure 819" (trade name), which is manufactured by BASF, and 129 parts of methyl isobutyl ketone to 100 parts of an ionizing radiation curable resin oligomer solution "BPZA-66" (trade name; solid content: 80 mass%, weight-average molecular weight: 20,000), which is manufactured by Kyoeisha Chemical Co., Ltd., dispersing and blending them using a Disper, and then defoaming the resulting mixture.

Next, the light diffusing layer-forming coating solution B was applied onto one surface of a polyethylene terephthalate (PET) film "A4300" (trade name; thickness: 50 µm), which is manufactured by TOYOBO Co., Ltd., in which both surfaces were subjected to adhesion promotion treatment using the above-mentioned die coater such that the dry thickness was 12 µm, and was dried. Then, the coating solution was cured through irradiation with ultraviolet rays in an amount of 300 mJ/cm² using a high-pressure mercury lamp, and a light diffusing layer was thus formed.

Next, an infrared reflective layer having a three-layer structure in which a metal suboxide (TiOₓ) layer having a thickness of 2 nm, a metal (Ag) layer having a thickness of 12 nm, and a metal suboxide (TiOₓ) layer having a thickness of 2 nm were arranged from the transparent base material side was formed on the light diffusing layer formed on one surface of the PET film in the same manner as in Example 1.

Next, a protective layer including four layers in which the optical adjustment layer, the medium refractive index layer, the high refractive index layer, and the low refractive index layer were laminated in this order was formed on the infrared reflective layer in the same manner as in Example 1.

Next, a PET film "NS-38+A" (trade name; thickness: 38 µm), which is manufactured by Nakamoto Packs Co., Ltd., in which one surface was subjected to silicone treatment was prepared as a release film. Also, a pressure-sensitive adhesive layer-forming coating solution was prepared by adding 1.25 parts of an ultraviolet absorbing agent (benzophenone-based ultraviolet absorbing agent), which is manufactured by Wako Pure Chemical Industries, Ltd., and 0.27 parts of cross-linking agent "E-AX" (trade name; solid content: 5 mass%), which is manufactured by Soken Chemical & Engineering Co., Ltd., to 100 parts of an acrylic pressure-sensitive adhesive solution "SK-Dyne 2094" (trade name; solid content: 25 mass%, refractive index: 1.49), which is manufactured by Soken Chemical & Engineering Co., Ltd., dispersing and blending them using a Disper, and then defoaming the resulting mixture.

Next, the pressure-sensitive adhesive layer-forming coating solution was applied onto a surface of the PET film of the release film that was subjected to silicone treatment using the above-mentioned die coater such that the dry thickness was 25 µm, and was dried. A pressure-sensitive adhesive layer was thus formed. Furthermore, an exposed surface of the pressure-sensitive adhesive layer was attached to the surface of the infrared reflective film including the protective layer on which the protective layer was not formed, and a transparent heat-shielding/heat-insulating member having a transparent screen function was thus produced in which the pressure-sensitive adhesive layer was formed on one surface of the PET film base material, and the light diffusing layer, the infrared reflective layer and the protective layer including four layers, namely the optical adjustment layer, the medium refractive index layer, the high refractive index layer, and the low refractive index layer, were formed on the other surface.

Next, a 3 mm-thick float glass sheet (manufactured by Nippon Sheet Glass Co. Ltd.) was prepared as a glass substrate. Then, the release film on the pressure-sensitive adhesive layer side of the transparent heat-shielding /heat-insulating member having a transparent screen function in which the pressure-sensitive adhesive layer was formed on one surface of the PET film base material, and the light diffusing layer, the infrared reflective layer and the protective layer including four layers, namely the optical adjustment layer, the medium refractive index layer, the high refractive index layer, and the low refractive index layer, were formed on the other surface was removed, and the pressure-sensitive adhesive layer was attached to the float glass sheet.

### Comparative Example 1

### Formation of protective layer

First, a polyethylene terephthalate (PET) film "A4300" (trade name; thickness: 50 µm), which is manufactured by TOYOBO Co., Ltd., in which both surfaces were subjected to adhesion promotion treatment was prepared as a transparent base material. Next, a medium refractive index coating material C was prepared by blending 100 parts of an ionizing radiation curable resin oligomer solution "BPZA-66" (trade name; solid content: 80 mass%, weight-average molecular weight: 20,000), which is manufactured by Kyoeisha Chemical Co., Ltd., 2.4 parts of a photopolymerization initiator "Irgacure 819" (trade name), which is manufactured by BASF, and 300 parts of methyl isobutyl ketone using a Disper. Next, the medium refractive index coating material C was applied onto one surface of the PET film using the above-mentioned micro-gravure coater such that the dry thickness was 1550 nm, and was dried. The coating material was cured through irradiation with ultraviolet rays in an amount of 300 mJ/cm² using a high-pressure mercury lamp, and a medium refractive index protective layer (hard coating layer (HC layer)) was thus formed. The refractive index of the produced medium refractive index protective layer (HC layer) was 1.50.

### Formation of light diffusing pressure-sensitive adhesive layer

First, a PET film "NS-38+A" (trade name; thickness: 38 µm), which is manufactured by Nakamoto Packs Co., Ltd., in which one surface was subjected to silicone treatment was prepared as a release film. Also, a light diffusing pressure-sensitive adhesive layer-forming coating solution was prepared by adding 0.88 parts (3.5 parts with respect to 100 parts of a pressure-sensitive adhesive resin) of amorphous silicone resin fine particles "TOSPEARL 240" (trade name; average particle diameter: 4.0 µm, refractive index: 1.42), which is manufactured by Momentive Performance Materials Inc., 1.25 parts of ultraviolet absorbing agent (benzophenone-based ultraviolet absorbing agent), which is manufactured by Wako Pure Chemical Industries, Ltd., and 0.27 parts of cross-linking agent "E-AX" (trade name; solid content: 5 mass%), which is manufactured by Soken Chemical & Engineering Co., Ltd., to 100 parts of an acrylic pressure-sensitive adhesive solution "SK-Dyne 2094" (trade name; solid content: 25 mass%, refractive index: 1.49), which is manufactured by Soken Chemical & Engineering Co., Ltd., dispersing and blending them using a Disper, and then defoaming the resulting mixture.

Next, the light diffusing pressure-sensitive adhesive layer-forming coating solution was applied onto a surface of the PET film of the release film that was subjected to silicone treatment using a die coater such that the dry thickness was 25 µm, and was dried. A light diffusing pressure-sensitive adhesive layer was thus formed. Furthermore, an exposed surface of the light diffusing pressure-sensitive adhesive layer was attached to the surface of the PET film including the medium refractive index protective layer (HC layer) on which the medium refractive index protective layer (HC layer) was not formed, and a transparent screen film was thus produced in which the light diffusing pressure-sensitive adhesive layer was formed on one surface of the PET film base material, and the medium refractive index protective layer (HC layer) was formed on the other surface.

### Attachment to glass substrate

First, a 3 mm-thick float glass sheet (manufactured by Nippon Sheet Glass Co. Ltd.) was prepared as a glass substrate. Next, the release film of the light diffusing pressure-sensitive adhesive layer of the transparent screen film in which the light diffusing pressure-sensitive adhesive layer was formed on one surface of the PET film base material, and the medium refractive index protective layer (HC layer) was formed on the other surface was removed, and the light diffusing pressure-sensitive adhesive layer was attached to the float glass sheet.

### Comparative Example 2

First, a polyethylene terephthalate (PET) film "A4300" (trade name; thickness: 50 µm), which is manufactured by TOYOBO Co., Ltd., in which both surfaces were subjected to adhesion promotion treatment was prepared as a transparent base material. Next, a metal oxide (ITO) layer having a thickness of 29 nm was formed of an indium tin oxide target on one surface of the PET film through a sputtering method. In the sputtering method, 100% Ar gas was used as the sputtering gas. Subsequently, a metal (Ag) layer having a thickness of 12 nm was formed of a silver target on the metal oxide layer through a sputtering method. In the sputtering method, 100% Ar gas was used as the sputtering gas.

Furthermore, a metal oxide (ITO) layer having a thickness of 29 nm was formed of an indium tin oxide target on the metal layer through a sputtering method. In the sputtering method, 100% Ar gas was used as the sputtering gas. As a result, an infrared reflective layer having a three-layer structure including the metal oxide (ITO) layer, the metal (Ag) layer, and the metal oxide (ITO) layer in this order from the transparent base material side was formed on one surface of the PET film base material.

Next, a medium refractive index coating material D was prepared by mixing 100 parts of an ionizing radiation curable resin oligomer solution "BPZA-66" (trade name; solid content: 80 mass%, weight-average molecular weight: 20,000), which is manufactured by Kyoeisha Chemical Co., Ltd., 2.4 parts of a phosphate group-containing methacrylic acid derivative "Light Ester P-2M", which is manufactured by Kyoeisha Chemical Co., Ltd., 4.0 parts of a photopolymerization initiator "Irgacure 819" (trade name), which is manufactured by BASF, and 300 parts of methyl isobutyl ketone using a Disper. Next, the medium refractive index coating material D was applied onto the infrared reflective layer using the above-mentioned micro-gravure coater such that the dry thickness was 1550 nm, and was dried. The coating material was cured through irradiation with ultraviolet rays in an amount of 300 mJ/cm² using a high-pressure mercury lamp, and a medium refractive index protective layer (HC layer) was thus formed on the infrared reflective layer of the infrared reflective film. The refractive index of the produced medium refractive index protective layer (HC layer) was 1.50.

Next, a PET film "NS-38+A" (trade name; thickness: 38 µm), which is manufactured by Nakamoto Packs Co., Ltd., in which one surface was subjected to silicone treatment was prepared as a release film. Also, a pressure-sensitive adhesive layer-forming coating solution was prepared by adding 1.25 parts of ultraviolet absorbing agent (benzophenone-based ultraviolet absorbing agent), which is manufactured by Wako Pure Chemical Industries, Ltd., and 0.27 parts of cross-linking agent "E-AX" (trade name; solid content: 5 mass%), which is manufactured by Soken Chemical & Engineering Co., Ltd., to 100 parts of an acrylic pressure-sensitive adhesive solution "SK-Dyne 2094" (trade name; solid content: 25 mass%, refractive index: 1.49), which is manufactured by Soken Chemical & Engineering Co., Ltd., dispersing and blending them using a Disper, and then defoaming the resulting mixture.

Next, the pressure-sensitive adhesive layer-forming coating solution was applied onto a surface of the PET film of the release film that was subjected to silicone treatment using the above-mentioned die coater such that the dry thickness was 25 µm, and was dried. A pressure-sensitive adhesive layer was thus formed. Furthermore, an exposed surface of the pressure-sensitive adhesive layer was attached to the surface of the infrared reflective film including the medium refractive index protective layer (HC layer) on which the medium refractive index protective layer (HC layer) was not formed, and a transparent heat-shielding/heat-insulating member was thus produced in which the pressure-sensitive adhesive layer was formed on one surface of the PET film base material, and the infrared reflective layer and the medium refractive index protective layer (HC layer) were formed on the other surface.

Next, a 3 mm-thick float glass sheet (manufactured by Nippon Sheet Glass Co. Ltd.) was prepared as a glass substrate. Then, the release film on the pressure-sensitive adhesive layer side of the transparent heat-shielding /heat-insulating member in which the pressure-sensitive adhesive layer was formed on one surface of the PET film base material, and the infrared reflective layer and the medium refractive index protective layer (HC layer) were formed on the other surface was removed, and the pressure-sensitive adhesive layer was attached to the float glass sheet.

### Comparative Example 3

First, an infrared reflective film (transparent heat-shielding/heat-insulating member) in which the infrared reflective layer having a three-layer structure including the metal oxide (ITO) layer having a thickness of 29 nm, the metal (Ag) layer having a thickness of 12 nm, and the metal oxide (ITO) layer having a thickness of 29 nm, and the medium refractive index protective layer (HC layer) were formed in the stated order from the transparent base material side on one surface of the PET film base material was produced in the same manner as in Comparative Example 2.

Next, a PET film "NS-38+A" (trade name; thickness: 38 µm), which is manufactured by Nakamoto Packs Co., Ltd., in which one surface was subjected to silicone treatment was prepared as a release film. Also, a light diffusing pressure-sensitive adhesive layer-forming coating solution was prepared by adding 0.88 parts (3.5 parts with respect to 100 parts of a pressure-sensitive adhesive resin) of amorphous silicone resin fine particles "TOSPEARL 240" (trade name; average particle diameter: 4.0 µm, refractive index: 1.42), which is manufactured by Momentive Performance Materials Inc., 1.25 parts of ultraviolet absorbing agent (benzophenone-based ultraviolet absorbing agent), which is manufactured by Wako Pure Chemical Industries, Ltd., and 0.27 parts of cross-linking agent "E-AX" (trade name; solid content: 5 mass%), which is manufactured by Soken Chemical & Engineering Co., Ltd., to 100 parts of an acrylic pressure-sensitive adhesive solution "SK-Dyne 2094" (trade name; solid content: 25 mass%, refractive index: 1.49), which is manufactured by Soken Chemical & Engineering Co., Ltd., dispersing and blending them using a Disper, and then defoaming the resulting mixture.

Next, the light diffusing pressure-sensitive adhesive layer-forming coating solution was applied onto a surface of the PET film of the release film that was subjected to silicone treatment using a die coater such that the dry thickness was 25 µm, and was dried. A light diffusing pressure-sensitive adhesive layer was thus formed. Furthermore, an exposed surface of the light diffusing pressure-sensitive adhesive layer was attached to the surface of the infrared reflective film including the medium refractive index protective layer on which the medium refractive index protective layer was not formed, and a transparent heat-shielding/heat-insulating member having a transparent screen function was thus produced in which the light diffusing pressure-sensitive adhesive layer was formed on one surface of the PET film base material, and the infrared reflective layer and the medium refractive index protective layer (HC layer) were formed on the other surface.

Next, a 3 mm-thick float glass sheet (manufactured by Nippon Sheet Glass Co. Ltd.) was prepared as a glass substrate. Then, the release film on the light diffusing pressure-sensitive adhesive layer side of the transparent heat-shielding /heat-insulating member having a transparent screen function in which the light diffusing pressure-sensitive adhesive layer was formed on one surface of the PET film base material, and the infrared reflective layer and the medium refractive index protective layer (HC layer) were formed on the other surface was removed, and the light diffusing pressure-sensitive adhesive layer was attached to the float glass sheet.

### Comparative Example 4

A transparent heat-shielding/heat-insulating member having a transparent screen function in which the light diffusing pressure-sensitive adhesive layer was formed on one surface of the PET film base material, and the infrared reflective layer and the medium refractive index protective layer (HC layer) were formed on the other surface was produced and attached to the glass substrate (float glass sheet) in the same manner as in Comparative Example 3, except that the dry thickness of the medium refractive index protective layer (HC layer) was changed to 680 nm.

### Comparative Example 5

First, an infrared reflective layer having a three-layer structure including the metal suboxide (TiOₓ) layer having a thickness of 2 nm, the metal (Ag) layer having a thickness of 12 nm, and the metal suboxide (TiOₓ) layer having a thickness of 2 nm in this order from the transparent base material side was formed on one surface of the PET film base material in the same manner as in Example 1.

Next, the optical adjustment coating material A was applied onto the infrared reflective layer in the same manner as in Example 1 such that the dry thickness was 40 nm. After drying, the coating material was cured through irradiation with ultraviolet rays in an amount of 300 mJ/cm² using a high-pressure mercury lamp, and an optical adjustment layer having a thickness of 40 nm was thus formed. Thereafter, the medium refractive index coating material D produced in Comparative Example 2 was applied onto the optical adjustment layer such that the dry thickness was 3000 nm. After drying, the coating material was cured through irradiation with ultraviolet rays in an amount of 300 mJ/cm² using a high-pressure mercury lamp, and a medium refractive index protective layer (HC layer) having a thickness of 3000 nm was thus formed. A transparent heat-shielding/heat-insulating member having a transparent screen function in which the light diffusing pressure-sensitive adhesive layer was formed on one surface of the PET film base material, and the infrared reflective layer, optical adjustment layer, and the medium refractive index protective layer (HC layer) were formed on the other surface was produced and attached to the glass substrate (float glass sheet) in the same manner as in Example 1, except that only the optical adjustment layer and medium refractive index protective layer were formed as mentioned above.

### Comparative Example 6

A transparent heat-shielding/heat-insulating member having a transparent screen function in which the light diffusing pressure-sensitive adhesive layer was formed on one surface of the PET film base material, and the infrared reflective layer and the protective layer including four layers, namely the optical adjustment layer, the medium refractive index layer, the high refractive index layer, and the low refractive index layer, were formed on the other surface was produced and attached to the glass substrate (float glass sheet) in the same manner as in Example 1, except that the dry thickness of the optical adjustment layer was changed to 50 nm, the dry thickness of the medium refractive index layer was changed to 150 nm, the dry thickness of the high refractive index layer was changed to 700 nm, and the dry thickness of the low refractive index layer was changed to 110 nm.

### Comparative Example 7

A transparent heat-shielding/heat-insulating member having a transparent screen function in which the light diffusing pressure-sensitive adhesive layer was formed on one surface of the PET film base material, and the infrared reflective layer and the low refractive index layer were formed on the other surface was produced and attached to the glass substrate (float glass sheet) in the same manner as in Example 1, except that the optical adjustment layer, the medium refractive index layer, and the high refractive index layer were not formed, and the dry thickness of the low refractive index layer was changed to 80 nm.

### Comparative Example 8

First, an infrared reflective layer having a three-layer structure including the metal suboxide (TiOₓ) layer having a thickness of 2 nm, the metal (Ag) layer having a thickness of 12 nm, and the metal suboxide (TiOₓ) layer having a thickness of 2 nm in this order from the transparent base material side was formed on one surface of the PET film base material in the same manner as in Example 1.

A light diffusing layer-forming coating solution C was prepared by adding 11.2 parts (14.0 parts with respect to 100 parts of a mixture of an ionizing radiation curable resin oligomer and a phosphate group-containing methacrylic acid derivative) of amorphous silicone resin fine particles "TOSPEARL 240" (trade name; average particle size: 4.0 µm), which is manufactured by Momentive Performance Materials Japan Inc., 2.4 parts of a photopolymerization initiator "Irgacure 819" (trade name), which is manufactured by BASF, and 150 parts of methyl isobutyl ketone to a mixture of 95 parts of an ionizing radiation curable resin oligomer solution "BPZA-66" (trade name; solid content: 80 mass%, weight-average molecular weight: 20,000), which is manufactured by Kyoeisha Chemical Co., Ltd., and a phosphate group-containing methacrylic acid derivative "Light Ester P-2M" (trade name), which is manufactured by Kyoeisha Chemical Co., Ltd., dispersing and blending them using a Disper, and then defoaming the resulting mixture.

Next, the light diffusing layer-forming coating solution C was applied onto the infrared reflective layer using the above-mentioned die coater such that the dry thickness was 6 µm. After drying, the coating solution was cured through irradiation with ultraviolet rays in an amount of 300 mJ/cm² using a high-pressure mercury lamp, and a light diffusing layer was thus formed.

Next, a protective layer including two layers obtained by laminating the high refractive index layer having a dry thickness of 240 nm and the low refractive index layer having a dry thickness of 110 nm in this order from the light diffusing layer side was formed on the light diffusing layer in the same manner as in Example 4.

Next, a PET film "NS-38+A" (trade name; thickness: 38 µm), which is manufactured by Nakamoto Packs Co., Ltd., in which one surface was subjected to silicone treatment was prepared as a release film. Also, a pressure-sensitive adhesive layer-forming coating solution was prepared by adding 1.25 parts of ultraviolet absorbing agent (benzophenone-based ultraviolet absorbing agent), which is manufactured by Wako Pure Chemical Industries, Ltd., and 0.27 parts of cross-linking agent "E-AX" (trade name; solid content: 5 mass%), which is manufactured by Soken Chemical & Engineering Co., Ltd., to 100 parts of an acrylic pressure-sensitive adhesive solution "SK-Dyne 2094" (trade name; solid content: 25 mass%, refractive index: 1.49), which is manufactured by Soken Chemical & Engineering Co., Ltd., dispersing and blending them using a Disper, and then defoaming the resulting mixture.

Next, the pressure-sensitive adhesive layer-forming coating solution was applied onto a surface of the PET film of the release film that was subjected to silicone treatment using the above-mentioned die coater such that the dry thickness was 25 µm, and was dried. A pressure-sensitive adhesive layer was thus formed. Furthermore, an exposed surface of the pressure-sensitive adhesive layer was attached to the surface of the infrared reflective film including the protective layer on which the protective layer was not formed, and a transparent heat-shielding member having a transparent screen function was thus produced in which the pressure-sensitive adhesive layer was formed on one surface of the PET film base material, and the infrared reflective layer, the light diffusing layer, and the protective layer including two layers, namely the high refractive index layer and the low refractive index layer, were formed on the other surface.

Next, a 3 mm-thick float glass sheet (manufactured by Nippon Sheet Glass Co. Ltd.) was prepared as a glass substrate. Then, the release film on the pressure-sensitive adhesive layer side of the transparent heat-shielding member having a transparent screen function in which the pressure-sensitive adhesive layer was formed on one surface of the PET film base material, and the infrared reflective layer, the light diffusing layer, and the protective layer including four layers, namely the optical adjustment layer, the medium refractive index layer, the high refractive index layer, and the low refractive index layer, were formed on the other surface was removed, and the pressure-sensitive adhesive layer was attached to the float glass sheet.

### Comparative Example 9

A transparent heat-shielding/heat-insulating member having a transparent screen function in which the light diffusing pressure-sensitive adhesive layer was formed on one surface of the PET film base material, and the infrared reflective layer and the protective layer including four layers, namely the optical adjustment layer, the medium refractive index layer, the high refractive index layer, and the low refractive index layer, were formed on the other surface was produced and attached to the glass substrate (float glass sheet) in the same manner as in Example 1, except that the thickness of the metal (Ag) layer was changed to 4 nm.

### Comparative Example 10

A transparent heat-shielding/heat-insulating member having a transparent screen function in which the light diffusing pressure-sensitive adhesive layer was formed on one surface of the PET film base material, and the infrared reflective layer and the protective layer including four layers, namely the optical adjustment layer, the medium refractive index layer, the high refractive index layer, and the low refractive index layer, were formed on the other surface was produced and attached to the glass substrate (float glass sheet) in the same manner as in Example 1, except that the thickness of the metal (Ag) layer was changed to 21 nm.

### Comparative Example 11

A transparent heat-shielding/heat-insulating member having a transparent screen function in which the light diffusing pressure-sensitive adhesive layer was formed on one surface of the PET film base material, and the infrared reflective layer and the protective layer including four layers, namely the optical adjustment layer, the medium refractive index layer, the high refractive index layer, and the low refractive index layer, were formed on the other surface was produced and attached to the glass substrate (float glass sheet) in the same manner as in Example 1, except that the addition amount of the amorphous silicone resin fine particles "TOSPEARL 240" (trade name; average particle diameter: 4.0 µm) in the light diffusing pressure-sensitive adhesive layer was changed to 0.12 parts (0.5 parts with respect to 100 parts of the pressure-sensitive adhesive resin).

### Comparative Example 12

A transparent heat-shielding/heat-insulating member having a transparent screen function in which the light diffusing pressure-sensitive adhesive layer was formed on one surface of the PET film base material, and the infrared reflective layer and the protective layer including four layers, namely the optical adjustment layer, the medium refractive index layer, the high refractive index layer, and the low refractive index layer, were formed on the other surface was produced and attached to the glass substrate (float glass sheet) in the same manner as in Example 1, except that the addition amount of the amorphous silicone resin fine particles "TOSPEARL 240" (trade name; average particle diameter: 4.0 µm) in the light diffusing pressure-sensitive adhesive layer was changed to 1.38 parts (5.5 parts with respect to 100 parts of the pressure-sensitive adhesive resin).

### Evaluation of transparent member

Each of the transparent members produced in Examples 1 to 21 and Comparative Examples 1 to 12 described above was cut and attached to a 5 cm square glass substrate (float glass sheet) to produce a measurement sample. The visible light transmittance, the visible light reflectance, the haze value, the normal emissivity, the shading coefficient, the scratch resistance of the protective layer, the adhesion of the protective layer, the corrosion resistance, and the background viewability were evaluated as follows using the measurement sample. Also, each transparent member was cut and attached to a 30 cm × 23 cm glass substrate to produce a measurement sample, and the appearance (iridescent pattern, angle dependence of a reflected color) and the viewability of a reflected image and a transmitted image of an image projected by a projector were evaluated as follows using the measurement sample.

### Visible light transmittance

The visible light transmittance was determined by measuring a spectral transmittance in a wavelength range of 380 to 780 nm using a UV-Vis-NIR spectrophotometer "Ubest V-570 type" (trade name), which is manufactured by JASCO Corporation, with the glass substrate side being set as the light-entering side, and performing calculation in accordance with JIS A5759-2008.

### Visible light reflectance

The visible light reflectance was determined by measuring a spectral reflectance in a wavelength range of 380 to 780 nm using a UV-Vis-NIR spectrophotometer "Ubest V-570 type" (trade name), which is manufactured by JASCO Corporation, with the transparent member side (protective layer side) being set as the light-entering side, and performing calculation in accordance with JIS R3106-1998.

### Maximum reflectance variation

The spectral reflectance was measured in a range of 300 to 800 nm using a UV-Vis-NIR spectrophotometer "Ubest V-570 type" (trade name), which is manufactured by JASCO Corporation in accordance with JIS R3106-1998, with the transparent member side (protective layer side) being set as the light-entering side. The "maximum variation ΔA" and "maximum variation ΔB" of the reflectance were determined from the measured visible light reflection spectrum using the above-described method.

### Haze value

The haze value was determined by performing measurement using a haze meter "NDH-2000" (trade name), which is manufactured by Nippon Denshoku Industries Co., Ltd., with the transparent member side (protective layer side) being set as the light-entering side, and then performing calculation in accordance with JIS K7136-2000.

### Normal emissivity

The normal emissivity was determined by measuring a regular spectral reflectance in a wavelength range of 5.5 to 25.2 µm using an infrared spectrophotometer "IR Prestige 21" (trade name), which is manufactured by Shimadzu Corporation, to which an attachment for regular reflectance measurement had been attached, with the transparent member side (protective layer side) being set as the light-entering side and performing calculation in accordance with JIS R3106-2008. In the calculation of the normal emissivity, a value at a wavelength of 25.2 µm was used as the regular spectral reflectance in a wavelength range of 25.2 µm to 50.0 µm.

### Shading coefficient

The shading coefficient was determined by measuring a spectral transmittance and a spectral reflectance in a wavelength range of 300 to 2500 nm using a UV-Vis-NIR spectrophotometer "Ubest V-570 type" (trade name), which is manufactured by JASCO Corporation, with the glass substrate side being set as the light-entering side, and performing calculation using the values of solar transmittance and solar reflectance calculated in accordance with JIS A5759-2008 and the normal emissivity value determined above.

### Scratch resistance of protective layer

The scratch resistance of the protective layer of the transparent member was evaluated as follows: a white flannel cloth was placed on the protective layer and moved back and forth 1000 times in a state in which a load of 1000 g/cm² was applied, and then the state of the surface of the protective layer was visually observed. The scratch resistance was evaluated based on the following three criteria:
Good: no scratches were found;
Fair: a few (five or less) scratches were found; and
Poor: a large number of (six or more) scratches were found.

### Initial adhesion of protective layer

The adhesion of the protective layer of the transparent member was evaluated by performing a cross cut adhesion test in accordance with JIS D0202-1988. Specifically, the adhesion was evaluated by applying a cellophane tape "CT24" (trade name), which is manufactured by Nichiban Co., Ltd., onto the protective layer, adhering it to the protective layer using the pad of the finger, and thereafter peeling off the tape therefrom. The evaluation was made by the number of grid squares remaining without being taken away among 100 grid squares, and a rating of 100/100 was given if the protective layer was not taken away at all, and a rating of 0/100 was given if the protective layer was completely taken away.

### Adhesion after weather resistance test

A weather resistance test in accordance with JIS A5759 was performed in which the transparent member was irradiated with a sunshine carbon arc lamp for 1000 hours, and thereafter, the adhesion was evaluated in the same manner as the initial adhesion described above.

### Corrosion resistance

A corrosion resistance test was performed in which the transparent member was allowed to stand in an environment in which the temperature was set to 50°C and the relative humidity was set to 90% for 240 hours, and thereafter, the state of the transparent member was visually observed. The corrosion resistance was evaluated based on the following three criteria:
Good: no corroded portion was found over the entire transparent member;
Fair: a corroded portion with a size of 1 mm or less was found in the edge portion of the transparent member; and
Poor: a corroded portion with a size of greater than 1 mm was found in the edge portion of the transparent member.

### Background viewability

The background viewability was evaluated as follows: each of the transparent members was attached to a 30 cm × 23 cm glass substrate to produce a measurement sample, and the ease of view of the background through the sample was visually observed. The background viewability was evaluated based on the following four criteria:
Excellent: the background viewability was very good;
Good: the background viewability was good;
Fair: the background viewability was slightly poor; and
Poor: the background viewability was poor.

### Viewability of image projected by projector

The viewability of an image projected by a projector was evaluated as follows: an image was actually projected, using a portable laser pico projector "SHOWWX+HDMI (registered trademark) Laser Pocket Projector" (trade name), which is manufactured by Micro Vision Co., Ltd., from the transparent member side (protective layer side) of the measurement sample obtained by attaching the transparent member to a 30 cm × 23 cm glass substrate, and with respect to the reflected image from the projector side, the luminance (brightness), the presence or absence of blur (image clarity) and the presence or absence of glittering were visually evaluated, and with respect to the transmitted image from a side opposite to the projector, the luminance (brightness) and the presence or absence of blur (image clarity) were visually evaluated.

The luminance (brightness) was evaluated based on the following four criteria:
Excellent: the image had a very high luminance, and viewability was very good;
Good: the image had a high luminance, and viewability was good;
Fair: the image had a slightly low luminance, and viewability was slightly poor; and
Poor: the image was hardly viewed.

The presence or absence of blur (image clarity) was evaluated based on the following four criteria:
Excellent: very good image clarity without blur in the image;
Good: good image clarity with a slight amount of blur in the image;
Fair: slightly poor image clarity with a small amount of blur in the image; and
Poor: poor image clarity with a large amount of blur in the image.

The presence or absence of glittering was evaluated based on the following two criteria:
Good: no glittering was observed; and
Poor: glittering was observed.

### Appearance

The surface on the transparent member side (protective layer side) was visually observed under a three band fluorescent lamp, and then the appearance (iridescent pattern) of the transparent member was evaluated based on the following three criteria:
Good: the iridescent pattern was hardly observed;
Fair: the iridescent pattern was slightly observed; and
Poor: the iridescent pattern was clearly observed.

### Angle dependence of reflected color

The surface on the transparent member side (protective layer side) was visually observed under a three band fluorescent lamp while the viewing angle was changed, and then the angle dependence of a reflected color of the transparent member was evaluated based on the following three criteria:
Good: the reflected color was found to hardly vary even when the transparent member was observed while the viewing angle was changed;
Fair: the reflected color was found to slightly vary when the transparent member was observed while the viewing angle was changed; and
Poor: the reflected color was found to clearly vary when the transparent member was observed while the viewing angle was changed.

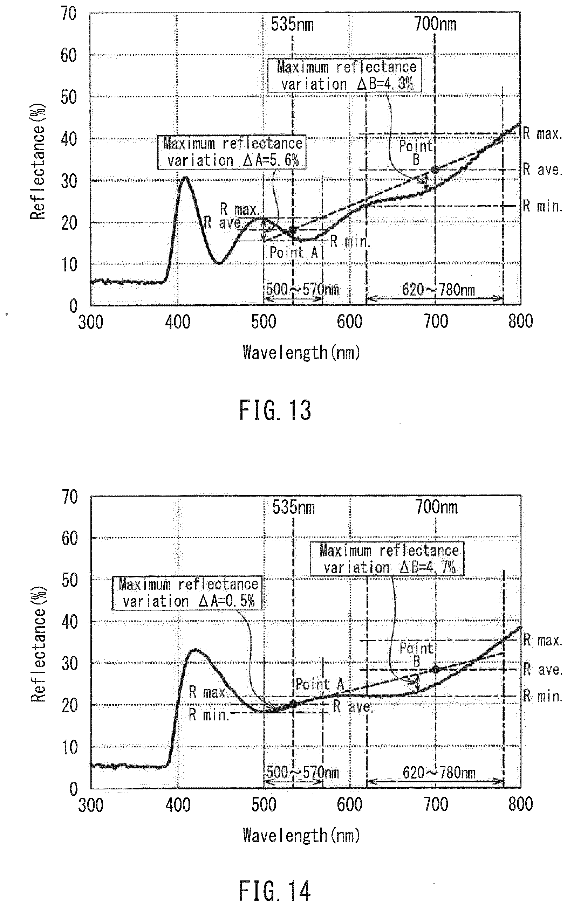

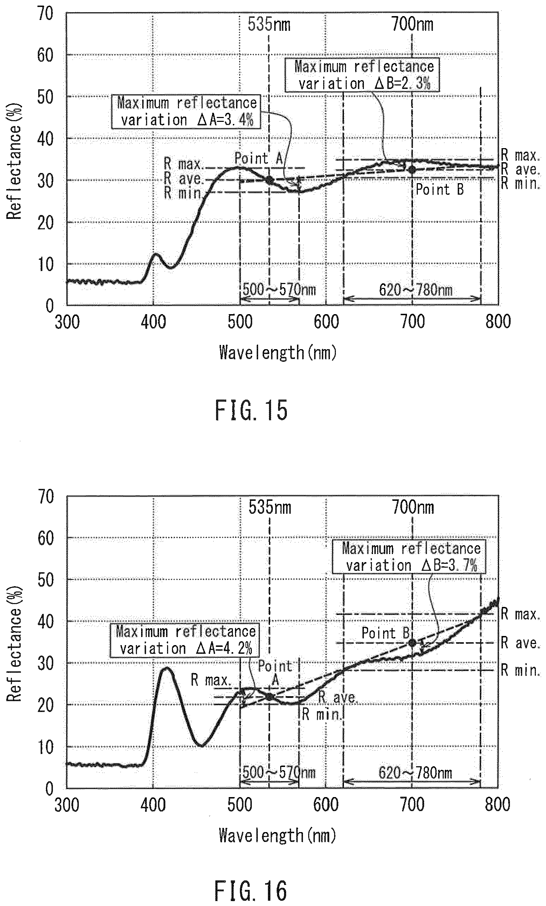

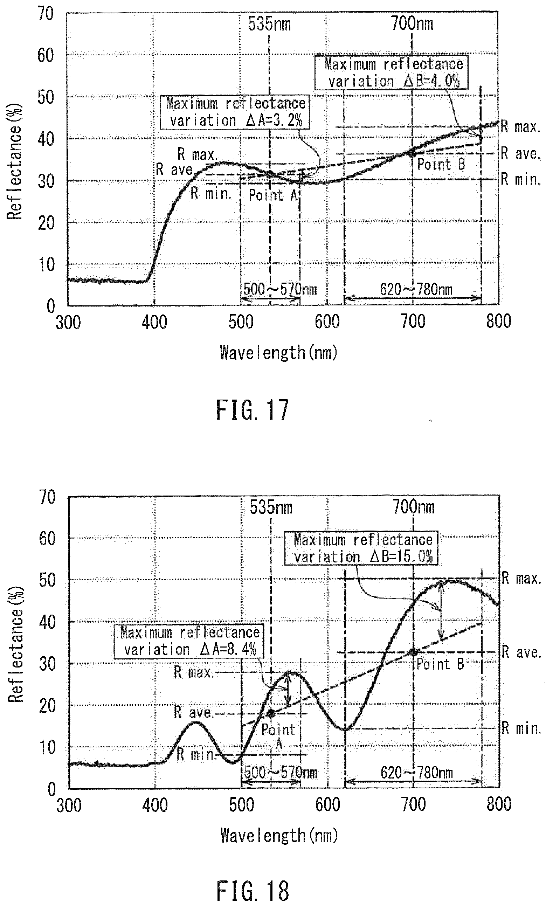

Tables 1 to 6 show the results together with the laminate configurations of the transparent heat-shielding/heat-insulating member attached to the glass substrates. FIG. 13 shows a reflection spectrum of Example 1, FIG. 14 shows a reflection spectrum of Example 2, FIG. 15 shows a reflection spectrum of Example 4, FIG. 16 shows a reflection spectrum of Example 6, FIG. 17 shows a reflection spectrum of Example 9, and FIG. 18 shows a reflection spectrum of Comparative Example 4.

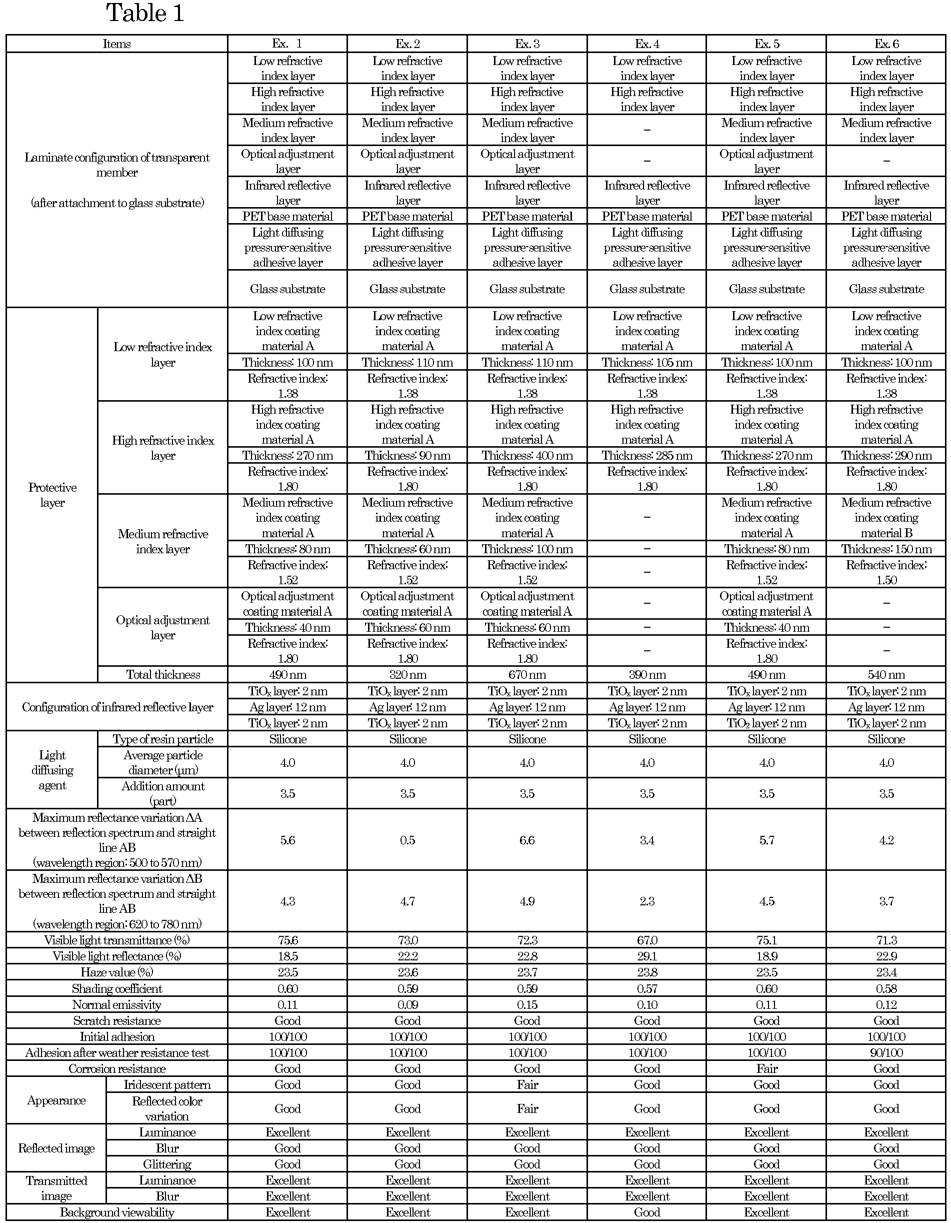

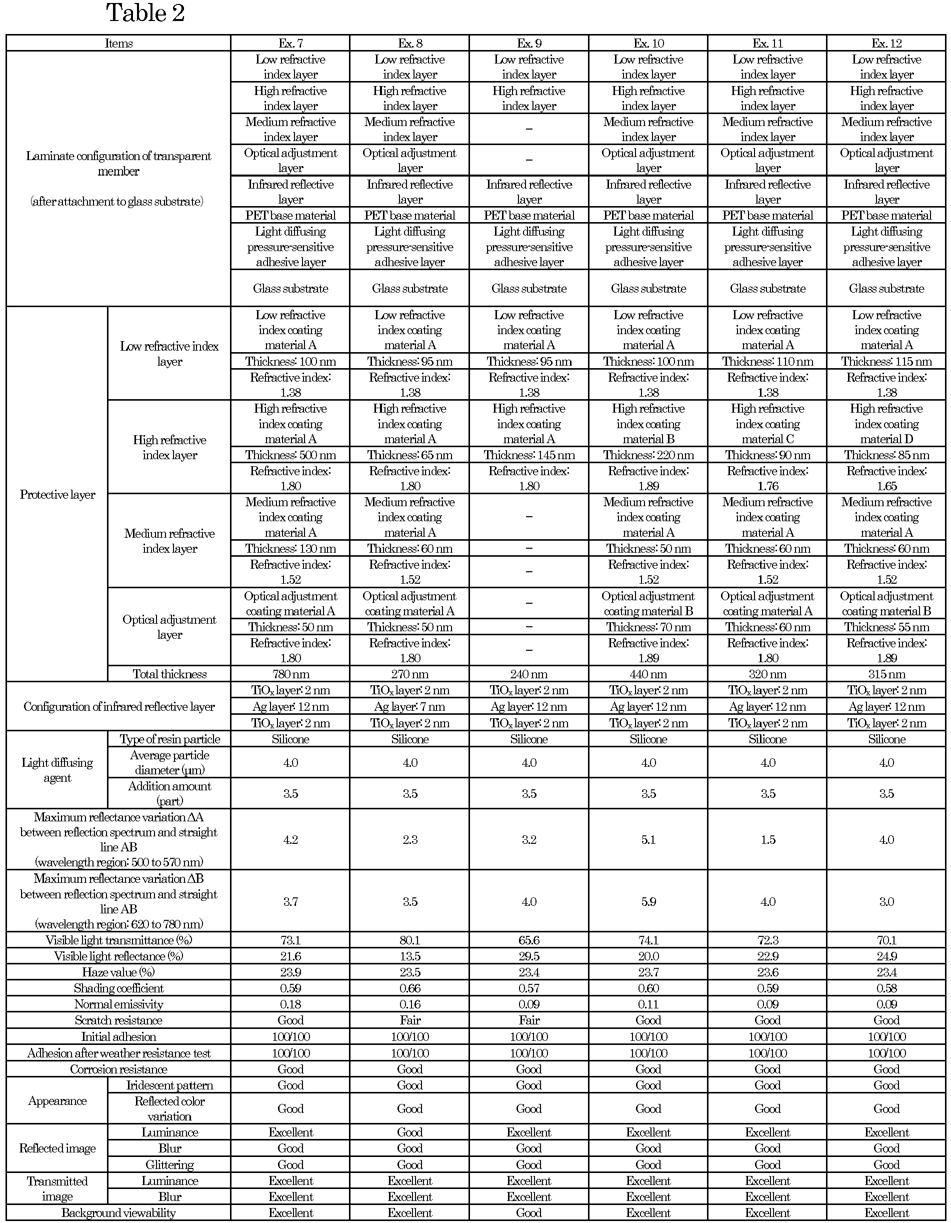

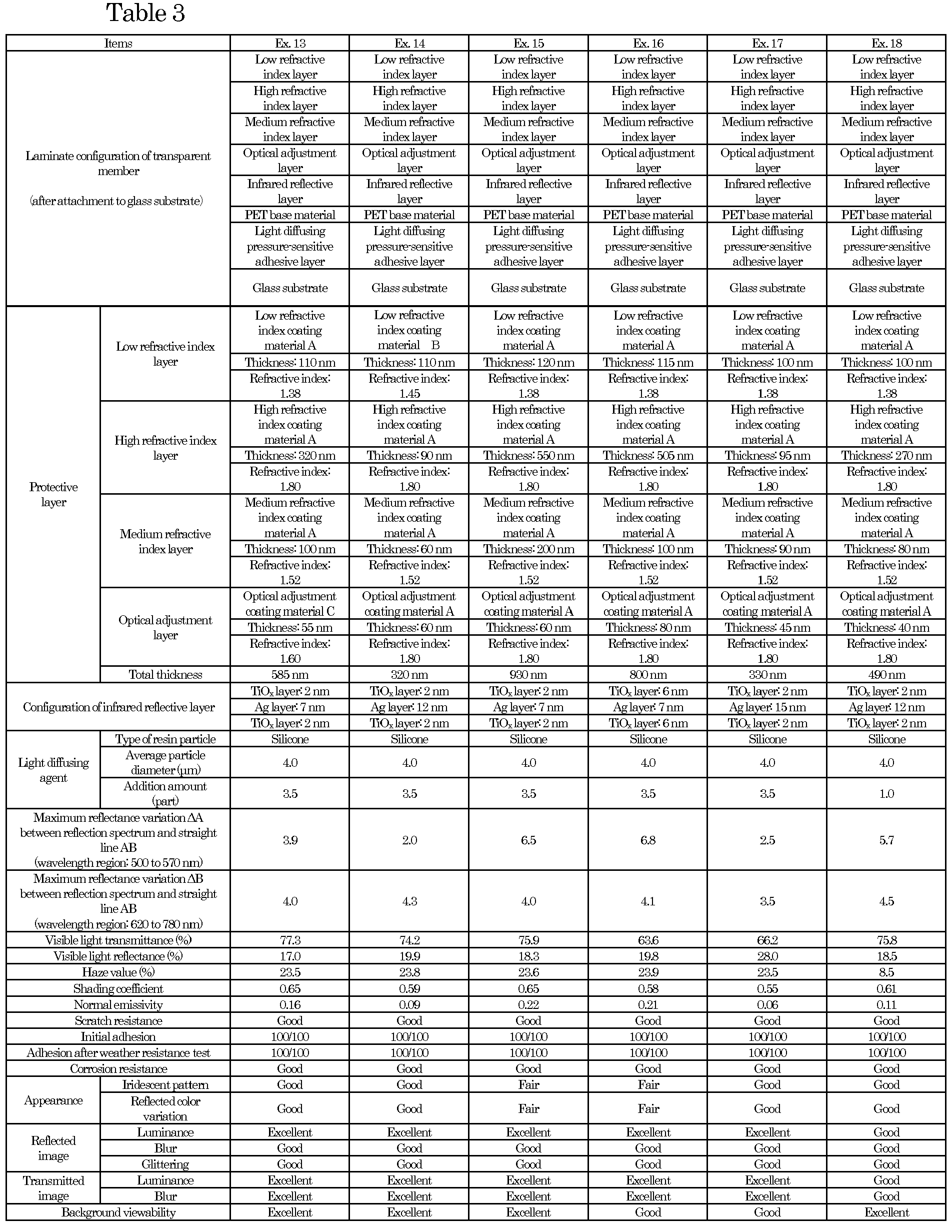

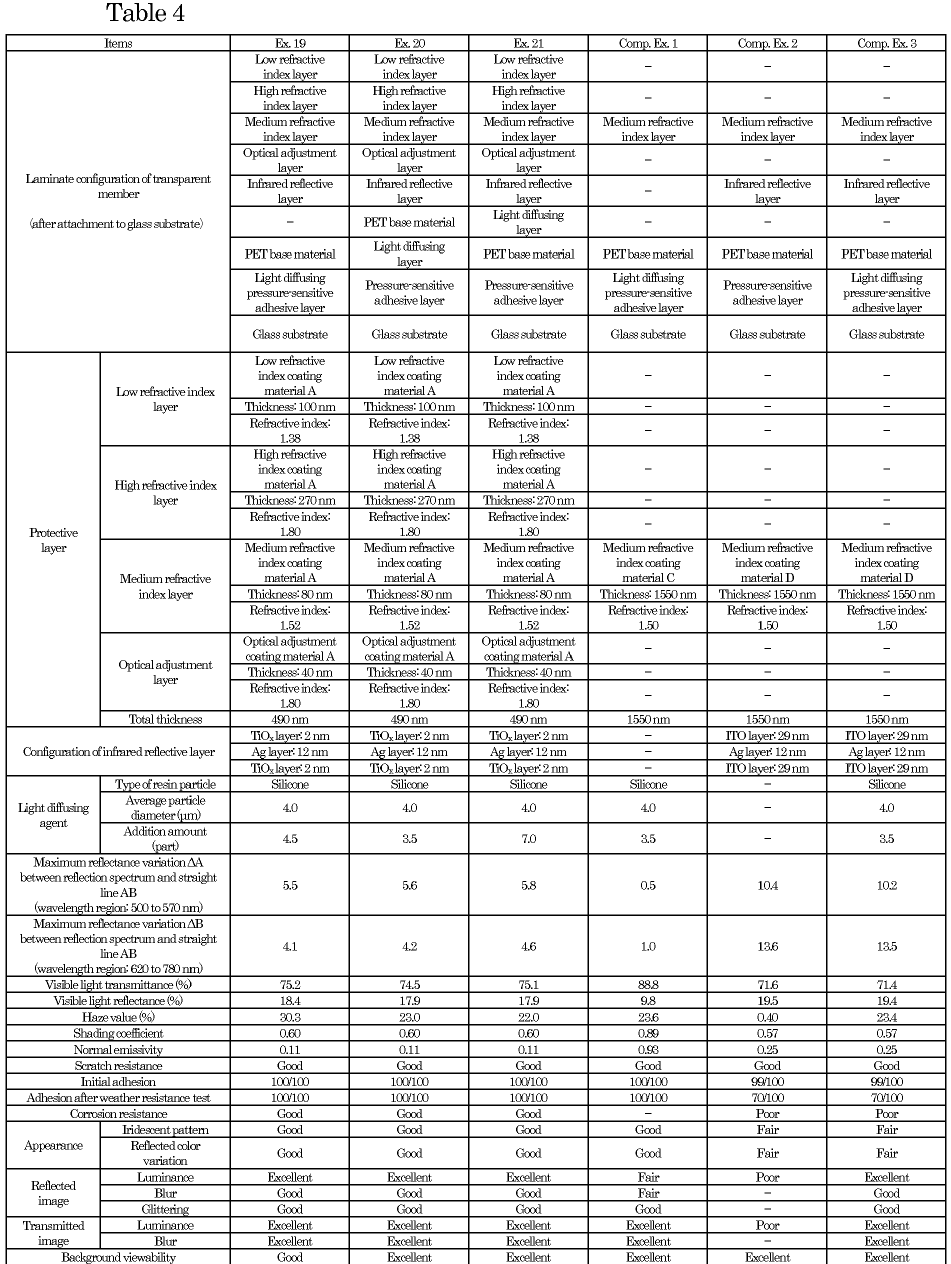

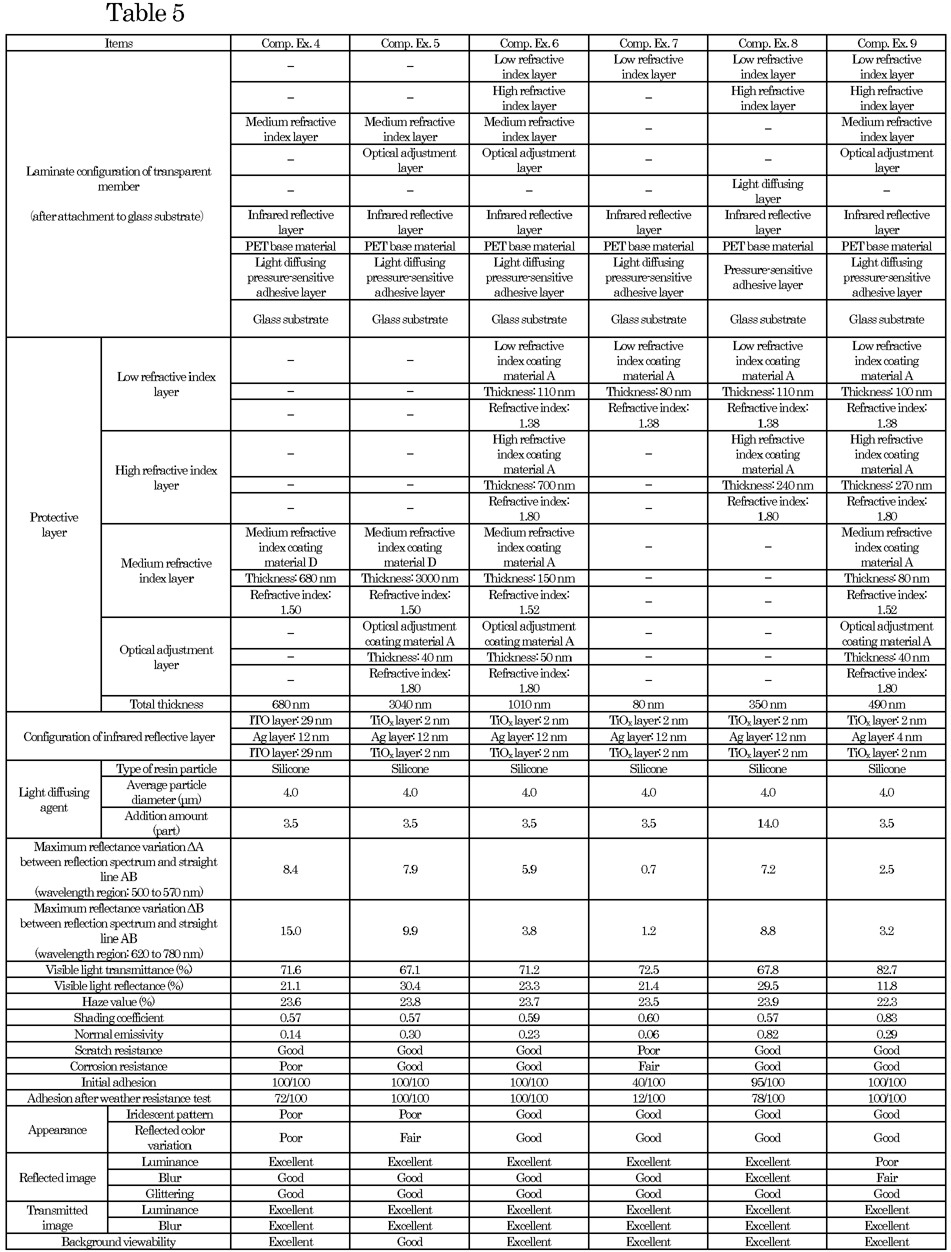

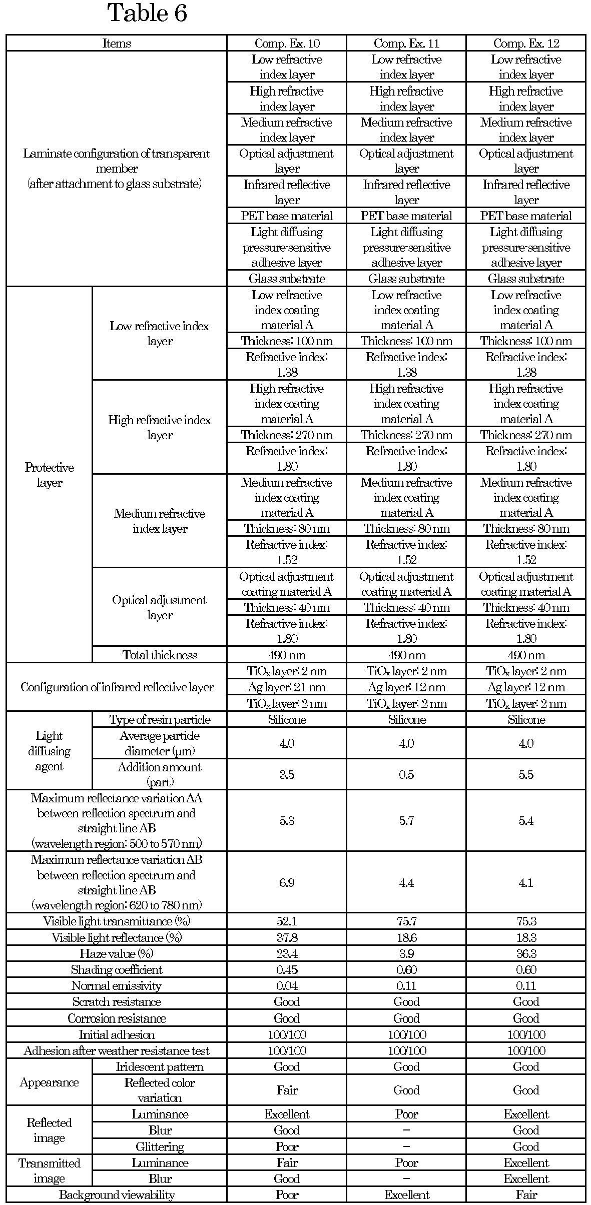

As shown in Tables 1 to 4, it is clear that the transparent heat-shielding /heat-insulating members having a transparent screen function of Examples 1 to 21 could be used as a solar control transparent window film for year-round energy saving having excellent heat-shielding properties (the shading coefficient is 0.69 or less) and heat-insulating properties (the normal emissivity is 0.22 or less), and as a transparent screen for digital signage enabling a projected image viewed from both sides of the screen, particularly a reflected image viewed from the projector side, to have excellent brightness (luminance) and image clarity (less blurred), as well as the background to be viewed clearly.

It is also clear that the transparent heat-shielding/heat-insulating members having a transparent screen function of Examples 1 to 21 had excellent scratch resistance and excellent corrosion resistance, had the maximum variations ΔA and ΔB of the reflectance that were small in value, and had an excellent appearance obtained by suppressing the iridescent phenomenon and the reflected color variation depending on a viewing angle.

In particular, Examples 1, 2, 4 to 14, and 17 to 21 had the maximum variations ΔA and ΔB of the reflectance that were very small in value, and had a particularly excellent appearance. Examples 3, 15, and 16 had the ΔA that was slightly large in value, and had slightly poor appearance compared with Examples 1, 2, 4 to 14, and 17 to 21.

When Examples 1 to 4 and 6, 7, and 9, which included the infrared reflective layers having the same configuration, were compared with each other, the visible light transmittance of Examples 4 and 9 in which the protective layer did not include the optical adjustment layer and the medium refractive index layer and had a two-layer structure including the high refractive index layer and the low refractive index layer was slightly small compared with Examples 1 to 3, and 6 and 7. In the case of Example 6 in which the protective layer did not include the optical adjustment layer and had a three-layer structure including the medium refractive index layer, the high refractive index layer, and the low refractive index layer, the visible light transmittance was slightly small, and the adhesion to the infrared reflective layer after the weather resistance test was slightly poor, compared with Examples 1 to 3 and 7 in which the protective layer included the optical adjustment layer and had a four-layer structure.

In the case of Example 5, the TiO₂ layer was used as the metal oxide layer and arranged under the metal (Ag) layer in the infrared reflective layer. Therefore, the stability of the Ag thin film was slightly poor, and a corroded portion was observed in the edge portion in the corrosion resistance test, compared with Example 1 having a configuration in which the metal (Ag) layer was sandwiched between the metal suboxide (TiOₓ) layers.

In the case of Examples 7, 15, and 16 in which the total thickness of the protective layer exceeded 700 nm, the normal emissivities were respectively 0.18, 0.22, and 0.21, which were slightly large, and the heat insulating properties were slightly poor, compared with Examples 1 to 6, 8 to 14, and 17 to 21 in which the total thickness of the protective layer was less than 700 nm. In the case of Example 8 in which the total thickness of the protective layer was 270 nm and Example 9 in which the total thickness of the protective layer was 240 nm, the scratch resistance was slightly poor in the white flannel cloth sliding test compared with Examples 1 to 7 and 10 to 21.

In the case of Example 16, the thickness of the metal suboxide layer was as large as 6 nm, and therefore, the visible light transmittance was slightly small compared with Examples 8, 13, and 15 including the metal layer having the same thickness.

In the case of Example 8, the visible light reflectance was 13.5%, which was slightly small, and therefore, when the Example 8 was used as a transparent screen, the luminance of the reflected image was slightly low compared with Examples 1 to 7 and 9 to 21.

On the other hand, Comparative Example 1 included the light diffusing layer, but did not include the infrared reflective layer. Therefore, Comparative Example 1 had good appearance, but had a large shading coefficient of 0.89 and a large normal emissivity of 0.93, and thus did not have heat-shielding properties and heat-insulating properties required for a solar control transparent film. When Comparative Example 1 was used as a transparent screen, the transmitted image was good, but the luminance of the reflected image was slightly low, and the image was slightly blurred, resulting in slightly poor viewability.

Comparative Example 2 included the infrared reflective layer having a configuration in which the metal (Ag) layer was sandwiched between the metal oxide (ITO) layers, but did not include the light diffusing layer. Therefore, Comparative Example 2 had a solar control transparent film function, but when it was used as a transparent screen, both the reflected image and the transmitted image could be hardly viewed. In addition, the corrosion resistance was poor. Furthermore, the protective layer included only the medium refractive index layer and had a large total thickness of 1550 nm, and therefore, the normal emissivity was as large as 0.25, the heat-insulating properties were slightly poor, and the adhesion was also slightly poor.

Comparative Examples 3 and 4 included the infrared reflective layer having a configuration in which the metal (Ag) layer was sandwiched between the metal oxide (ITO) layers and the light diffusing pressure-sensitive adhesive layer, and thus had a solar control transparent film function and a transparent screen function, but had poor corrosion resistance. In the case of Comparative Example 3, the protective layer included only the medium refractive index layer and had a large total thickness of 1550 nm, the normal emissivity was as large as 0.25, and the heat-insulating properties were slightly poor. In the case of Comparative Example 4, the total thickness corresponded to the wavelength region of visible light, and therefore, the maximum variations ΔA and ΔB of the reflectance were large in value, and the appearance was poor.

In the case of Comparative Example 5, the protective layer had a two-layer structure including the optical adjustment layer and the medium refractive index layer, an ionizing radiation curable urethane acrylate resin, which absorbs a large amount of light in the infrared region, was used as the material of the medium refractive index layer, and the thickness of the medium refractive index layer was set to 3000 nm. Therefore, the normal emissivity was as large as 0.30, and the heat-insulating properties were poor. In addition, the maximum variations ΔA and ΔB of the reflectance were large in value, and therefore, the iridescent pattern was observed in the appearance.

In the case of Comparative Example 6, the protective layer had a large total thickness of 1010 nm, and therefore, the normal emissivity was 0.23, and the heat-insulating properties were poor compared with Examples 1 to 21.

In the case of Comparative Example 7, the protective layer was constituted by only the low refractive index layer formed as a thin film having a thickness of 80 nm on the infrared reflective layer, and therefore, the appearance was good, but the adhesion between the infrared reflective layer and the low refractive index layer was poor, and the detachment of the protective layer was observed. In addition, the scratch resistance in the white flannel cloth sliding test was also poor.

In the case of Comparative Example 8, the light diffusing layer having a thickness of 6 µm was provided on the infrared reflective layer, and therefore, a large amount of far-infrared rays were absorbed, the normal emissivity was as large as 0.82, and the heat-insulating properties were poor.

In the case of Comparative Example 9, the Ag layer of the infrared reflective layer had a small thickness of 4 nm, and the visible light reflectance was less than 12%. Therefore, when Comparative Example 9 was used as a transparent screen, the luminance of the reflected image was low, and the image was slightly blurred, resulting in slightly poor viewability. On the other hand, in the case of Comparative Example 10, the Ag layer of the infrared reflective layer had a large thickness of 21 nm, and the visible light reflectance exceeded 30%. Therefore, a strong half-mirror appearance was obtained, and glittering was observed in the reflected image. Furthermore, the luminance of the transmitted image was slightly low, and the viewability was slightly poor. In addition, the visible light transmittance also decreased, and the background viewability was poor.

In the case of Comparative Example 11, the haze value was less than 5%, and therefore, both the reflected image and the transmitted image on the transparent screen could be barely recognized, but practically, it was substantially impossible to clearly view these images. On the other hand, in the case of Comparative Example 12, the haze value exceeded 35%, and therefore, the transparent heat-shielding /heat-insulating member became whitish, and the background viewability was slightly poor.

### Industrial Applicability

When the transparent heat-shielding/heat-insulating member of the present invention is attached to a transparent substrate such as a windowpane using a transparent pressure-sensitive adhesive or the like and used, it enables favorable background transparency to be achieved, and can be used as a transparent heat-shielding/heat-insulating member, namely solar control transparent film for year-round energy saving, having excellent scratch resistance and corrosion resistance and an excellent appearance obtained by suppressing an iridescent phenomenon and a reflected color variation depending on a viewing angle as well as a transparent screen for digital signage that enables a content image projected by a projector to be clearly viewed from both sides of the screen, particularly a reflected image viewed from the projector side, to have excellent brightness (luminance) and image clarity (less blurred). Accordingly, the transparent heat-shielding/heat-insulating member of the present invention is very useful in a wide variety of situations.

### List of Reference Numerals

30, 40, 50, 60, 70, 80 Transparent heat-shielding/heat-insulating member having transparent screen function
11 Transparent base material
12, 14 Metal suboxide layer
13 Metal layer
15 Optical adjustment layer
16 Medium refractive index layer
17 High refractive index layer
18 Low refractive index layer
19 Light diffusing layer
21 Infrared reflective layer
22, 26 Protective layer
23 Pressure-sensitive adhesive layer
24 Light diffusing pressure-sensitive adhesive layer
25 Glass plate
90 Transparent heat-shielding/heat-insulating member
100 Transparent screen

## Claims

1. A transparent heat- shielding/heat-insulating member comprising:
a transparent base material;
an infrared reflective layer;
a protective layer; and
a light diffusing layer,
wherein the transparent heat-shielding/heat-insulating member includes the infrared reflective layer and the protective layer in this order from the transparent base material side,
the light diffusing layer is formed on a surface opposite to a surface of the transparent base material on which the infrared reflective layer is formed, or between the transparent base material and the infrared reflective layer,
the infrared reflective layer includes at least a metal layer and a metal suboxide layer made of partially oxidized metal,
the protective layer has a total thickness of 200 nm to 980 nm and includes at least a high refractive index layer and a low refractive index layer in this order from the infrared reflective layer side,
the light diffusing layer includes light diffusing particles and a transparent resin for holding the light diffusing particles, and
the transparent heat-shielding/heat-insulating member has:
a visible light reflectance of 12% or more and 30% or less, the visible light reflectance being measured in accordance with JIS R3106-1998;
a haze value of 5% or more and 35% or less, the haze value being measured in accordance with JIS K7136-2000;
a shading coefficient of 0.69 or less, the shading coefficient being measured in accordance with JIS A5759-2008; and
a normal emissivity of 0.22 or less, the normal emissivity being measured in accordance with JIS R3106-2008.

2. The transparent heat-shielding/heat-insulating member according to claim 1,
wherein, when the transparent heat-shielding/heat-insulating member is used as a screen, an image projected onto the screen by a projector can be viewed from both sides as a reflected image from the projector side and as a transmitted image from a side opposite to the projector side across the screen.

3. The transparent heat-shielding/heat-insulating member according to claim 1 or 2,
wherein the metal suboxide layer made of partially oxidized metal has a thickness of 1 to 8 nm.

4. The transparent heat-shielding/heat-insulating member according to any one of claims 1 to 3,
wherein the protective layer includes a medium refractive index layer, a high refractive index layer, and a low refractive index layer in this order from the infrared reflective layer side.

5. The transparent heat-shielding/heat-insulating member according to any one of claims 1 to 3,
wherein the protective layer includes an optical adjustment layer, a medium refractive index layer, a high refractive index layer, and a low refractive index layer in this order from the infrared reflective layer side,
the optical adjustment layer has a refractive index of 1.60 to 2.00 at a wavelength of 550 nm and has a thickness selected from a range of 30 to 80 nm,
the medium refractive index layer has a refractive index of 1.45 to 1.55 at a wavelength of 550 nm and has a thickness selected from a range of 40 to 200 nm,
the high refractive index layer has a refractive index of 1.65 to 1.95 at a wavelength of 550 nm and has a thickness selected from a range of 60 to 550 nm, and
the low refractive index layer has a refractive index of 1.30 to 1.45 at a wavelength of 550 nm and has a thickness selected from a range of 70 to 150 nm.

6. The transparent heat-shielding/heat-insulating member according to any one of claims 1 to 5,
wherein the metal suboxide layer made of partially oxidized metal contains a titanium component.

7. The transparent heat-shielding/heat-insulating member according to any one of claims 1 to 6,
wherein a layer of the protective layer that is in contact with the infrared reflective layer contains titanium oxide fine particles.

8. The transparent heat-shielding/heat-insulating member according to any one of claims 1 to 7,
wherein in a reflection spectrum measured in accordance with JIS R3106-1998,
a point corresponding to a wavelength of 535 nm on a virtual line a that indicates an average value of a maximum reflectance and a minimum reflectance in a wavelength range of 500 to 570 nm in the reflection spectrum is taken as a point A,
a point corresponding to a wavelength of 700 nm on a virtual line b that indicates an average value of a maximum reflectance and a minimum reflectance in a wavelength range of 620 to 780 nm in the reflection spectrum is taken as a point B,
a reference straight line AB is obtained by extending a straight line passing through the point A and the point B in a wavelength range of 500 to 780 nm,
when reflectance values of the reflection spectrum and the reflectance values of the reference straight line AB in a wavelength range of 500 to 570 nm are compared, and an absolute value of a difference between reflectance values at a wavelength at which a difference between reflectance values is largest is defined as a maximum variation ΔA, a value of the maximum variation ΔA indicated in unit of reflectance percentage is 7% or less, and
when reflectance values of the reflection spectrum and the reflectance values of the reference straight line AB in a wavelength range of 620 to 780 nm are compared, and an absolute value of a difference between reflectance values at a wavelength at which a difference between reflectance values is largest is defined as a maximum variation ΔB, a value of the maximum variation ΔB indicated in unit of reflectance percentage is 9% or less.

9. The transparent heat-shielding/heat-insulating member according to claim 1, further comprising:
a pressure-sensitive adhesive layer arranged, as an outermost layer, on a side opposite to the surface of the transparent base material on which the infrared reflective layer is formed.

10. The transparent heat-shielding/heat-insulating member according to claim 1,
wherein the light diffusing layer is arranged, as an outermost layer, on a side opposite to the surface of the transparent base material on which the infrared reflective layer is formed, and a pressure-sensitive adhesive is used as the transparent resin contained in the light diffusing layer.
